(19)

Europäisches
Patentamt
European
Patent Office
Office européen
des brevets

(11) **EP 2 120 141 A1**

(12) **EUROPEAN PATENT APPLICATION**

(43) Date of publication:
**18.11.2009  Bulletin 2009/47**

(51) Int Cl.:
*G06F 7/00* *(2006.01)*    *G06F 1/00* *(2006.01)*

(21) Application number: **09159576.9**

(22) Date of filing: **16.01.2003**

(84) Designated Contracting States:
**AT BE BG CH CY CZ DE DK EE ES FI FR GB GR
HU IE IT LI LU MC NL PT SE SI SK TR**

(30) Priority: **22.01.2002  US 349416 P**

(62) Document number(s) of the earlier application(s) in
accordance with Art. 76 EPC:
**03705782.5 / 1 468 355**

(71) Applicant: **Recording Industry Association of
America
Washington, DC 20036 (US)**

(72) Inventors:
• **Hayes, Michael Anthony
London, SE1 7NN (GB)**
• **Hill, Keith Ryan
London, SE1 7NN (GB)**

(74) Representative: **Hofmann, Harald
24IP LAW GROUP
Herzogspitalstraße 10a
80331 München (DE)**

Remarks:
This application was filed on 06-05-2009 as a
divisional application to the application mentioned
under INID code 62.

(54)    **Method and system for identification of music industry releases and licenses**

(57)    A memory stores a data structure that comprises release identifier information relating to identification, validation, authorization, and/or use of data associated with releases and intellectual property rights associated with the releases. The data structure further includes a first data element that includes an issuer code, a second data element that includes an intellectual property bundle number, and a third data element that includes a check character. Another memory, or alternatively the same memory, stores a data structure that includes license identifier information relating to identification, validation, authorization, and/or use of data associated with licenses and intellectual property rights associated with the data. The data structure further includes a first data element that includes an issuer code, a second data element that includes a license reference, and a third data element that includes a check character.

FIG. 1
PRIOR ART

EP 2 120 141 A1

**Description**

CROSS REFERENCE TO RELATED APPLICATIONS

This application claims priority from U.S. Provisional Application Serial No. 60/349,416, filed January 22, 2002 and incorporated herein by reference.

FIELD OF THE INVENTION

The present invention relates generally to managing releases and/or licenses for data and/or copyrighted data, and in particular, to the assignment and management of unique identifiers for identifying specific releases and/or licenses and the descriptive information associated with the specific releases and/or licenses for data and/or copyrighted data, for example, in the music industry.

BACKGROUND OF THE RELATED ART

The exercise of rights associated with a musical work is the fundamental unit of transaction for music rights societies ("societies"). Consequently, the identification of musical works is at the core of the societies' business processes. Societies require their members to notify them of the musical works they own or administer. Societies also require other societies to notify them of works within different national repertoires, and societies require their licensees to provide information detailing the musical works that have been used under the various licenses operated by the societies.
The societies and their business partners have invested considerable resources in carrying out the activity of musical work identification and/or description, leading to the development of proprietary standards for the identification and descriptive information associated with musical works. However, as trade has become more global, these proprietary standards have become less effective, particularly with regard to licensees due to the complications of data transfer in multiple languages and/or using a multiplicity of different message formats.
The advent of the Internet and other global on-line environments for music exploitation adds an additional layer of complication: The speed in which information is exchanged and answers on questions expected to be returned from business partners makes correct and readily accessible information sources more important than ever. Within the music industry, for example, this leads to the requirement of precisely identifying, describing and tracking releases and licenses associated with those releases.
Exchange of such information between business partners may occur insecurely in cleartext or, where for example business reasons exist, as ciphered messages allowing for secure exchange of information related to releases and licenses.
U.S. Patent No. 6,263,341 is incorporated herein by reference. The '341 patent discloses a method for modeling data in an information repository comprising the steps of identifying and defining a plurality of data objects containing data of interest and formulating relationships between the data objects.

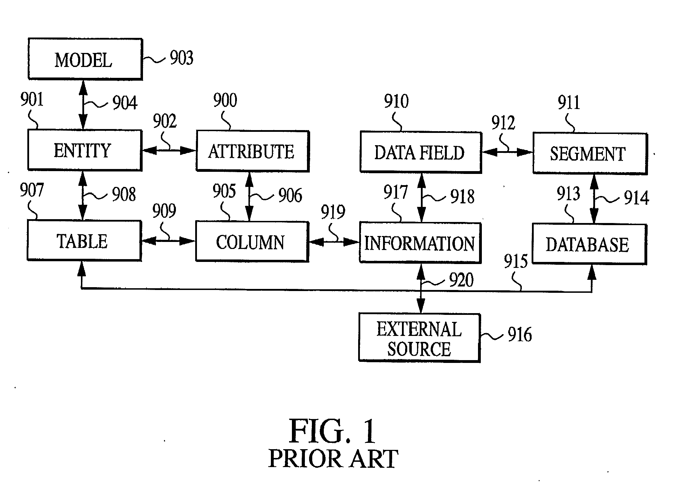

FIGURE 1 illustrates an application of an information repository to enterprise data modeling, which is the process of identifying unique enterprise data requirements and assuring that these data definitions are modeled only once by the stewarding application. The OBJECTS include ATTRIBUTES 900, which are technical definitions of data modeled in some computer application. ATTRIBUTES 900 are elementary data definitions such as product name, customer number, employee number, and other data which are of interest to the enterprise. Another OBJECT 12 is ENTITY 901, which is a logical collection of ATTRIBUTES 900. ENTITY 901 CONTAINS 902 ATTRIBUTE 900. CONTAINS relationship 902 documents the one-to-many relationship that each ENTITY 901 has with the attributes it contains. This relationship along with the ATTRIBUTE name, serves to uniquely identify each ATTRIBUTE. The organization of ATTRIBUTES 900 into a given ENTITY 901 is generally based on business rules, performance considerations, data access requirements, or a combination of these. ENTITY 901 represents collections of data that perform a specific task, such as define employee, define customer, or establish a linkage between other ENTITIES 901.
Each ENTITY 901 is defined to have at least one IDENTIFIER (not shown). Each IDENTIFIER is an ordered collection of ATTRIBUTES 900 uniquely identifying an ENTITY 901. Preferably, the IDENTIFIERS are implemented as indexes or keys on the particular ENTITY 901. VIEWS (not shown) are collections of ATTRIBUTES 900 returned when an ENTITY 901 is accessed by a particular IDENTIFIER. VIEWS may return every ATTRIBUTE 900 in the ENTITY 901, including IDENTIFIERS, or it may be artificially constricted by software acting on the database.
U.S. Patent No. 5,765,152 is incorporated herein by reference. The '152 patent discloses a system and method for the secure electronic copyright management and automatic identification of ownership of creative works distributed as digital or electronic media, particularly over computer networks. One aspect of the invention provides a system which packages electronic media into a secure document format ("DOCUMENT"), including a data container for the media and a minimum permissions data set to specify the minimum authorizations needed to view or otherwise access the media. The DOCUMENT can also include a document header, a document identifier, a source works extensions module which maintains a bibliographical history of the media, and a digital signature to authenticate the media. The DOCUMENT and the associated network-based tools enable the attachment of minimum permissions to copyrighted works and the subsequent on-line licensing of the media.

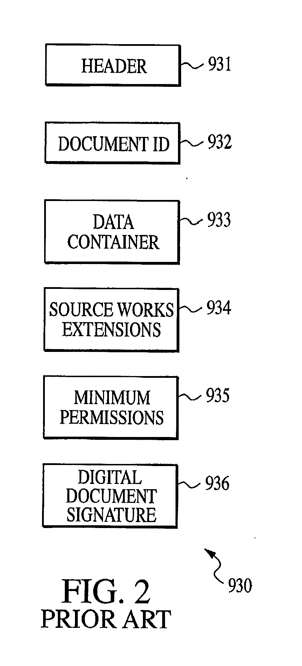

DOCUMENT 930 of FIGURE 2 provides a secure container for electronic media, including heterogeneous multimedia data types such as musical scores coupled with graphical images. More particularly, the DOCUMENT 930 provides a package that encapsulates binary data objects, shown as the data container 933, and can contain some or all of the illustrated data components 931, 932, 934, 935 and 936.

The Document Identifier 932 uniquely identifies the DOCUMENT 930 by the registration server upon which the DOCUMENT has been registered, and the DOCUMENT's registration or index number on that server. This registration code typically contains the server name and registration index. A registration server cross-reference table, working in conjunction with the Internet's Domain Name Service (DNS), is used to find the actual network address (typically a TCP/IP address) of the registration server. In one embodiment of the invention, a work in progress is a locally accessible file which has not been authenticated through the registration process.

U.S. Patent Application No. 20010044781, which is incorporated herein by reference, discloses an interactive process and apparatus to expedite the licensing and management of content for communications projects. The process allows the user to streamline negotiation, implementation, and payment of licensing contracts related to multiple pieces of content from multiple content licensors by gathering, organizing, and utilizing project information, technical specification, and/or licensing terms. The apparatus allows the user to expedite several of the administrative tasks necessary to research, obtain, track and license content.

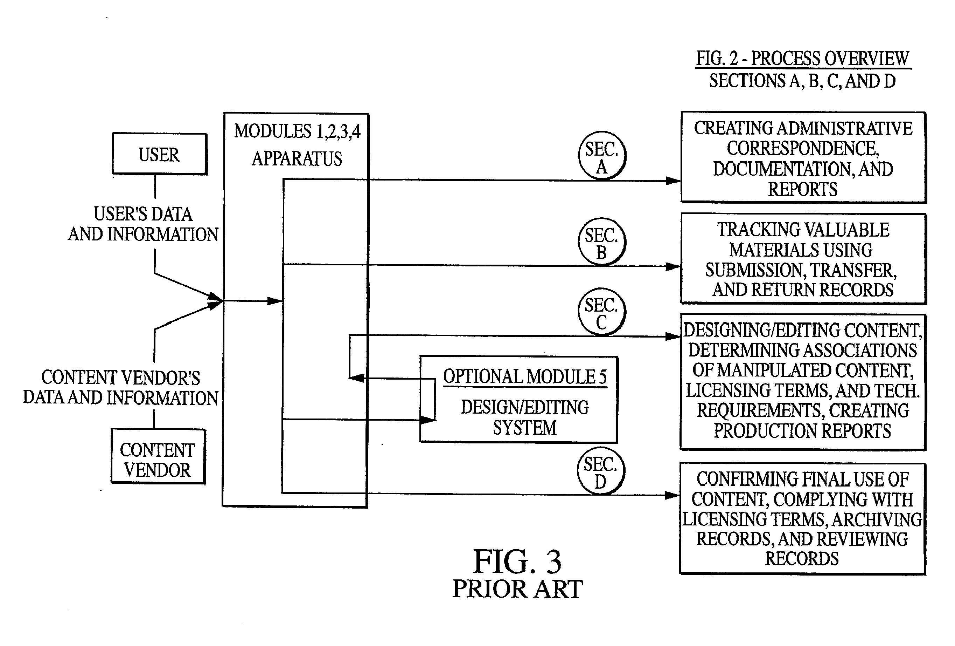

The process, as illustrated in FIGURE 3, facilitates the licensing of content, management and tracking of content and other valuable materials during production, tracking of budget expenditures, management of technical requirements for content, compliance with contractual responsibilities, and the archiving of records. It can be divided into four sections, each based upon a family of tasks within the larger process.

Section A, the first steps of the process, include gathering and storing information necessary to efficiently communicate (and document that communication) with third parties, such as Content Vendors and service providers. Should the user choose to use the Electronic Storage Files to store this information, she could further expedite her work by creating templates to extract pertinent information from the Electronic Storage Files and organize it into correspondence, documentation, and report formats. As the Apparatus can access the same piece of information for multiple purposes, the user is able to enter each piece of information just once to create almost all of the administrative communications and records she will need. The Apparatus may also allow the user to electronically transmit correspondence, documentation, and reports directly to Content Vendors, project staff, and other third parties.

Section B of the process allows the user to track valuable materials, including but not limited to content, throughout the production procedures. The user records the submission information for each piece of or group of valuable materials she receives. She records similar information for each transfer and/or return of valuable materials. By creating records of all materials received, transferred to third parties, and returned to their source, the user can accurately account for all of the valuable materials she has received. By storing the submission, transfer, and return records within the Electronic Storage Files of the Apparatus, and using a template process similar to that in Section A, the user can create correspondence, documents, and reports to assist her in completing and documenting each submission, transfer, and return.

Section C of the process links the master, working, and manipulated content copies to their content data, technical specifications, and licensing terms. The user may then create a draft of her project using a design/editing system (shown here outside of the Apparatus), manipulating the content within it as she needs. Accessing the identification link within the manipulated content copy used in the draft, and matching it to the other content records, the Apparatus will then assist the user in quickly and easily reviewing the financial, contractual, and technical responsibilities and/or viability of her project draft. It will also assist her in creating production reports containing details for the design, such as credit line and storage location lists.

In Section D, when a design has been finalized, the user may employ the Apparatus to store the final pricing specifications for each piece of content. If the user has stored all of the administrative, contractual, technical, and use information electronically, she could also employ the Apparatus to create use notifications, using a template to access and organize pertinent information.

In addition, the user may record her compliance with licensing terms, such as payment information, in the Apparatus. The user may choose to link the Apparatus with other optional modules (such as accounting, shipping, printing, and/or project management systems) using the Communication Links, thus integrating the payment or and/or compliance with licensing terms with her own records.

The user may archive all of the project records. She may wish to include materials from other sections of the production process, such as copies of design layouts from design/editing systems or printing press specifications. The user may choose to store the project records in electronic form (such as on a CD ROM), in hard copy form, or in a combination of both. The user may wish to archive the records within a larger archive that contains the records from other projects.

Finally, the user may wish to access the project records in the archive to review and make use of various details of the project at a later date. For example, she may verify compliance with licensing terms, create forms and documents to assist her in re-licensing content for later editions/variations of the project, create a series of reports comparing project or vendor information with similar information from other projects she has completed, and/or create estimates for new projects. When licensing terms and research fees have been agreed to, the user has the option of generating a contract which confirms the final licensing terms and assigns the contract a unique identification code.

U.S. Patent No. 6,499,106 is incorporated herein by reference. The '106 patent discloses a method and system for securely distributing data recorded on high density fixed media such as compact discs ("CDs"). A central access control system copies sensitive information from a master set of one or more CDs and records the information on distribution CDs using an embedded data encryption process. In addition to the encrypted data, unique disc identification information is also recorded on each disc of each set of distribution CDs. The distribution disc sets are identical to each other and the master set but for the unique disc identification information which, in a preferred embodiment, is recorded in the R-W subchannels of the control bytes of the first sector of CD-R media.

The central access control system records, in a database, the disc identification information of each disc of each set of distribution CDs and a remote location access rights list (ARL). In addition, a list of unique remote location identification numbers are stored in the central access control database. The disc identification information of each CD is correlated with the intended recipient remote location. Thus, the central access control system is able to determine which remote location should be authorized to access which distribution CDs.

A distribution CD set is physically delivered to each remote location requiring access to the recorded information. Each remote location is equipped with an information access system that includes its unique remote location identification number, a CD reader with an embedded decryption system, and a bilateral communication link to the central access control system. When a user wishes to access the information, he logs into the information access system using his unique user identification and password pair. The information access system then reads the disc identification information and sends its unique remote location identification number and the disc identification information as an access request to the central access control system via the bilateral communication link. If the access control system is able to verify the request based on the central access control database and grant the request based on the ARL, the central access control system will send the requesting information access system a unique decryption key to access the particular distribution CD currently contained in the information access system.

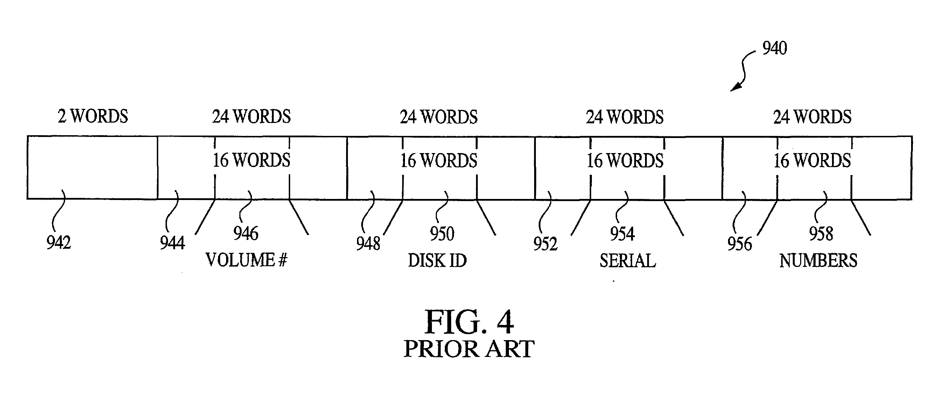

In FIGURE 4, a block diagram depicting a layout of an embodiment of the disc identification information 940 is provided. The central access control system can track an trace which duplicated CD disc goes to which information access system at a branch office. This tracking and tracing is achieved through the disc identification information 940 recorded directly on the CD media. The program in the central access control system is configured to write to the R-W subchannels of the control bytes of the first sector of a recordable disc. There are 98 control bytes in this sector with the R-W occupying Bit 0 through Bit 5 of each byte. Following the first 2 bytes 942, there are 64 six bit words available for user data contained within four groups 944, 948, 952, 956 of 24 bytes. There are 16 six bit words within the first group of 24 bytes 944 that are used for central access control system 100 designated Volume numbers 946, within the next group of 24 bytes 948, there are 16 six bit words that are used for disc ID numbers 950, and within the remaining two groups of 24 bytes 952, 956 (48 bytes total) there are 32 six bit words that are used for Serial numbers 954, 958.

Using the SCSI-3 "WRITE PARAMETER" command, the Volume numbers 946, the disc ID numbers 950, and the Serial numbers 954, 958 are recorded in the user data area. In a preferred embodiment, the characters and numbers that are used to represent the disc identification information 940 are taken from the Transcode character set. The transcode character set includes the necessary alphabets (of a number of languages) in upper case, numbers, and some control characters. Use of the Transcode character set eliminates the need to perform shift-pack and shift-unpack of the six bit words when reading and writing to and from the CD media. As described above the disc identification information 940 is used by the information access systems 130, 140, 150 to request decryption keys from the central access control system 100.

U.S. Patent No. 6,434,535 is incorporated herein by reference. The '535 patent discloses a system and method for distribution of electronic content over a network infrastructure and compensation of vendors of such data using prepaid media that includes a client device for operation by a user desiring to receive the electronic content and server that contains the electronic content and offering the electronic content for downloading to the client device via the network infrastructure. The client device communicates a unique identifier associated with a particular piece of media to which the electronic content is to be stored to the server. The server contacts a media tracking sever to determine if the media is valid and a remaining balance of the prepaid media. The cost of the electronic content to be downloaded is deducted from the remaining balance and credited to the vendor's account. The server then encrypts the electronic content using the unique identifier as a key and downloads the encrypted electronic content to the client computer, where the client computer writes the encrypted electronic content to the particular piece of media such that the encrypted electronic content may only be accessed from the particular piece of media. The electronic content is only accessible from only the one piece of media having the unique identifier and is not accessible from any other media having a different or no identifier.

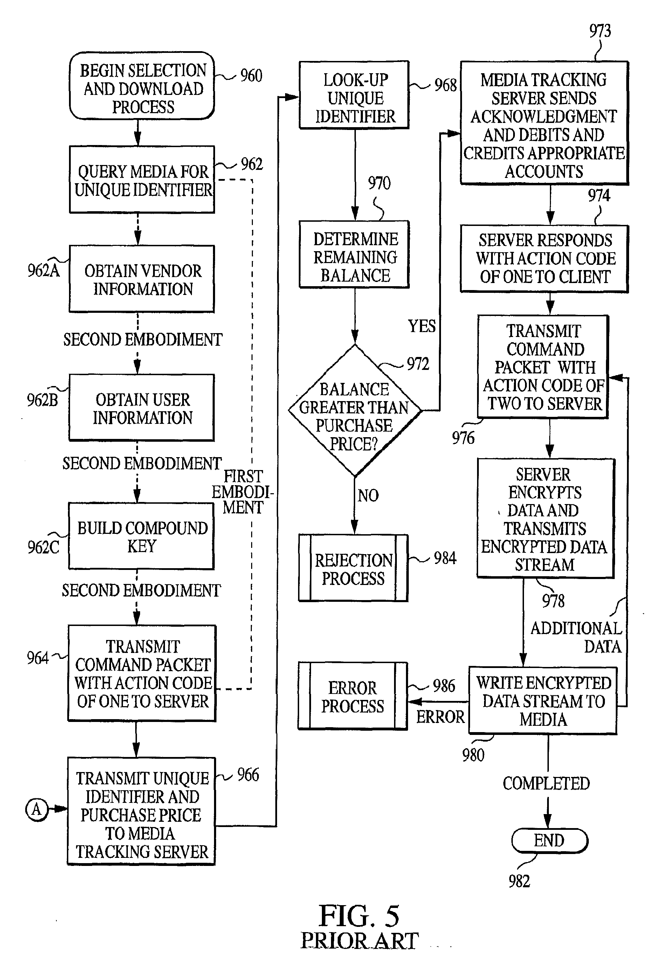

FIGURE 5 illustrates by which a customer selects and downloads electronic content using prepaid media. The user initiates the electronic data distribution process at step 960 when he or she desires to purchase software, music or videos (i.e., protected electronic data) using a home personal computer or stand alone device.

After receiving the first command packet, at step 966, the server contacts the media tracking server to verify that the media's unique identifier is valid and that there is a sufficient balance to cover the cost of the content to be downloaded. The media tracking server 16a then looks-up the unique identifier at step 968 in the tracking database, and at step 970, determines the remaining balance. At step 972, the media tracking server determines if the remaining balance is greater than the purchase price of the electronic content. If the remaining balance is greater than the purchase price of the electronic content, then at step 974 the media tracking server responds to the E-commerce server with a positive acknowledgment at step 973, debits the purchase price from the remaining balance associated with the unique identifier, and credits the E-commerce entity's account with the purchase price amount.

None of the prior art discloses a format for a standard release and/or license identifier for uniquely identifying releases and/or licenses or metadata associated with particular releases and/or licenses.

What is desired is the use of standard identifiers related to the release of data and/or copyrighted data, and the licensing of the data and/or copyrighted data contained in the releases to increase the efficiency in the exchange of release and license related metadata.

SUMMARY OF THE INVENTION

It is one feature and advantage of the present invention to have preferably standard and/or substantially standard release and/or license identifiers having formats that allow for identification of releases and/or licenses.

It is another optional feature and advantage of the present invention to have preferably standard and/or substantially standard release and/or license identifiers that include a check character to protect integrity of the release and/or license identifier as it is disseminated.

It is another optional feature and advantage of the present invention to have preferably standard and/or substantially standard release and/or license identifiers that facilitates accurate and timely identification of releases and/or licenses to enable the efficient and timely tracking and/or processing of use, transactions and/or revenue associated with the releases and/or licenses.

It is another optional feature and advantage of the present invention to have preferably standard and/or substantially standard release and/or license identifiers that enable retrieval of identifying and/or descriptive information pertaining to releases and/or licenses.

It is another optional feature and advantage of the present invention to have preferably standard and/or substantially standard release and/or license identifiers that can be applied to both physical and electronic distributions of releases and/or associated licenses.

It is another optional feature and advantage of the present invention to have preferably standard and/or substantially standard release and/or license identifiers that provide a mechanism for identifying legitimately released and/or licensed content.

These and other features and advantages of the present invention are achieved in a memory storing a data structure that comprises release identifier information relating to identification, validation, authorization, and/or use of data, including a data arrangement, a data collection, and/or a data set. The data structure also includes at least one intellectual property right associated with the data. The data structure is retrieved from the memory responsive to instructions implemented by a data processor and/or a computer. The data structure further includes a first data element that includes an issuer code, a second data element that includes an intellectual property bundle number, and a third data element that includes a check character. The first, second, and third data elements are used in the identification, validation, authorization, and/or use of the data.

In another embodiment of the present invention, a memory stores a data structure that includes license identifier information relating to identification, validation, authorization, and/or use of data, including a data arrangement, a data collection, and/or a data set. The data structure also includes at least one intellectual property right associated with the data. The data structure is retrieved from the memory responsive to instructions implemented by a data processor and/or a computer. The data structure further includes a first data element that includes an issuer code, a second data element that includes a license reference, and a third data element that includes a check character. The first, second, and third data elements are used in the identification, validation, authorization, and/or use of the data.

In another alternative embodiment of the present invention, a memory stores a data structure that includes release identifier information relating to identification, validation, authorization, and/or use of data, including a data arrangement, a data collection, and/or a data set. The data structure also includes at least one intellectual property right associated with the data. The data structure is retrieved from the memory responsive to instructions being implemented by a data processor and/or a computer. The data structure further includes a first data element that includes an identifier scheme, which has two valid characters. The data structure also includes a second data element that includes an issuer code, which has five valid characters. The first data element preferably precedes the second data element. The data structure further includes a third data element that includes an intellectual property bundle number, which has seven valid characters in one embodiment. The second data element preferably precedes the third data element. The data structure optionally also includes a fourth data element that includes a delivery attribute extension, which, for example, has three valid characters. The third data element preferably precedes the fourth data element. In another embodiment, the intellectual property bundle number includes the delivery attribute extension and is, thus, ten valid characters in length. A valid character is one of any upper case letter of the Roman alphabet, excluding "I" and "O", and any Arabic digit and is preferably defined using ASCII codes. The data structure further includes a fifth data element that includes a check character, which has one character. The one character preferably is any upper case letter of the Roman alphabet or any Arabic digit and preferably is defined using ASCII codes. The fourth data element preferably precedes the fifth data element.

In another embodiment of the present invention, a memory stores a data structure that includes license identifier information relating to identification, validation, authorization, and/or use of data, including a data arrangement, a data collection, and/or a data set. The data structure includes at least one intellectual property right associated with the data. The data structure is retrieved from the memory responsive to instructions implemented by a data processor and/or a computer. The data structure further includes a first data element that includes an identifier scheme, which has two valid characters. The data structure also includes a second data element that includes an issuer code, which has five valid characters. The first data element preferably precedes the second data element. The data structure further includes a third data element that includes a license reference, which has seven valid characters in one embodiment. The second data element preferably precedes the third data element. The data structure optionally also includes a fourth data element that includes a society auxiliary extension, which, for example, has three valid characters. The third data element preferably precedes the fourth data element. In another embodiment, the license reference includes the society auxiliary extension and is, thus, ten characters in length. The data structure further includes a fifth data element that includes a check character, which has one character. The character preferably is any upper case letter of the Roman alphabet or any Arabic digit and is defined using ASCII codes. The fourth data element preferably precedes the fifth data element.

In another alternative embodiment of the present invention, a memory stores a data structure that includes release identifier information relating to identification, validation, authorization, and/or use of data, including a data arrangement, a data collection, and/or a data set. The data structure also includes at least one intellectual property right associated with the data. The data structure is retrieved from the memory responsive to instructions being implemented by a data processor and/or a computer. The data structure further includes a first data element that includes an identifier scheme, which has two valid characters. The data structure also includes a second data element that includes an issuer code, which has five valid characters. The first data element preferably precedes the second data element. The data structure further includes a third data element that includes an intellectual property bundle number, which has seven valid characters in one embodiment. The second data element preferably precedes the third data element. The data structure optionally also includes a fourth data element that includes a delivery attribute extension, which, for example, has three valid characters. The third data element preferably precedes the fourth data element. In another embodiment, the intellectual property bundle number includes the delivery attribute extension and is, thus, ten valid characters in length. A valid character is one of any upper case letter of the Roman alphabet, excluding "I" and "O", and any Arabic digit and is preferably defined using ASCII codes. The data structure further includes a fifth data element that includes a check character, which has one character. The one character preferably is any upper case letter of the Roman alphabet or any Arabic digit and preferably is defined using ASCII codes. The fourth data element preferably precedes the fifth data element.

In another embodiment of the present invention, a memory stores a data structure that includes license identifier information relating to identification, validation, authorization, and/or use of data, including a data arrangement, a data collection, and/or a data set. The data structure includes at least one intellectual property right associated with the data. The data structure is retrieved from the memory responsive to instructions implemented by a data processor and/or a computer. The data structure further includes a first data element that includes an identifier scheme, which has two valid characters. The data structure also includes a second data element that includes an issuer code, which has five valid characters. The first data element preferably precedes the second data element. The data structure further includes a third data element that includes a license reference, which has seven valid characters in one embodiment. The second data element preferably precedes the third data element. The data structure optionally also includes a fourth data element that includes a society auxiliary extension, which, for example, has three valid characters. The third data element preferably precedes the fourth data element. In another embodiment, the license reference includes the society auxiliary extension and is, thus, ten characters in length. The data structure further includes a fifth data element that includes a check character, which has one character. The character preferably is any upper case letter of the Roman alphabet or any Arabic digit and is defined using ASCII codes. The fourth data element preferably precedes the fifth data element. least one license into appropriate fields within the standard metadata schema. The method further includes transmitting the license identifier and metadata from the first entity to a second entity, and converting, by the second entity, the license identifier and the metadata associated with the at least one license from the standard format into a second proprietary format associated with the second entity. The license identifier and the metadata identify and describe the at least one license.

There has thus been outlined, rather broadly, the more important features of the invention and several, but not all, embodiments in order that the detailed description thereof that follows may be better understood, and in order that the present contribution to the art may be better appreciated. There are, of course, additional features of the invention that will be described hereinafter and which will form the subject matter of the claims appended hereto.

In this respect, before explaining at least one embodiment of the invention in detail, it is to be understood that the invention is not limited in its application to the details of construction and to the arrangements of the components set forth in the following description or illustrated in the drawings. The invention is capable of other embodiments and of being practiced and carried out in various ways. Also, it is to be understood that the phraseology and terminology employed herein are for the purpose of description and should not be regarded as limiting.

As such, those skilled in the art will appreciate that the conception, upon which this disclosure is based, may readily be utilized as a basis for the designing of other structures, methods and systems for carrying out the several purposes of the present invention. It is important, therefore, that the claims be regarded as including such equivalent constructions insofar as they do not depart from the spirit and scope of the present invention.

Further, the purpose of the foregoing abstract is to enable the U.S. Patent and Trademark Office and the public generally, and especially the scientists, engineers and practitioners in the art who are not familiar with patent or legal terms or phraseology, to determine quickly from a cursory inspection the nature and essence of the technical disclosure of the application. The abstract is neither intended to define the invention of the application, which is measured by the claims, nor is it intended to be limiting as to the scope of the invention in any way.

These, together with other objects of the invention, along with the various features of novelty, which characterize the invention, are pointed out with particularity in the claims annexed to and forming a part of this disclosure. For a better understanding of the invention, its operating advantages and the specific objects attained by its uses, reference should be had to the accompanying drawings and descriptive matter in which there is illustrated preferred embodiments of the invention.

BRIEF DESCRIPTION OF THE DRAWINGS

FIGURE 1 illustrates a prior art application of an information repository to enterprise data modeling;

FIGURE 2 illustrates a prior art system for secure electronic copyright management;

FIGURE 3 illustrates a prior art process for expediting the licensing and management of content for communications projects;

FIGURE 4 illustrates a block diagram depicting a layout of a prior art disc identification information;

FIGURE 5 illustrates a prior art method by which a customer selects and downloads electronic content using prepaid media;

FIGURE 6 illustrates a model for a relationship between release and license identification systems according to the present invention;

FIGURE 7 is a flow chart diagram illustrating a method for management of the identification and description of releases and licenses according to the present invention;

FIGURE 8 is a flow chart diagram illustrating a method for the exchange of release and/or license information according to the present invention;

FIGURE 9A is an illustration of a release identifier according to the present invention;

FIGURE 9B is an illustration of another embodiment of release identifier according to the present invention;

FIGURE 10 illustrates an example of the structure for a release containing a multi-asset intellectual property bundle;

FIGURE 11A is an illustration of a license identifier according to the present invention;

FIGURE 11B is an illustration of a license identifier according to the present invention;

FIGURE 12 illustrates a process for assigning issuer codes according to the present invention;

FIGURES 13A and 13B illustrate an example of fields in a transaction message for an inter-company sales reporting transaction;

FIGURES 14A, 14B, and 14C illustrate an example of fields in a transaction message for a retail notification transaction;

FIGURE 15 illustrates an example of a navigational view feature for a release;

FIGURE 16 illustrates another example of a navigational view feature for a release;

FIGURES 17A, 17B, and 17C illustrate an example of fields in a transaction message for a release notification licensing transaction;

FIGURES 18A, 18B, and 18C illustrate an example of fields in a transaction message for a release confirmation licensing transaction;

FIGURE 19 is a diagram of an information architecture to support access to release and license metadata according to the present invention; and

FIGURE 20 is a diagram of an communications network for accessing release and license metadata according to the present invention.

DESCRIPTION OF THE PREFERRED EMBODIMENTS

Reference now will be made in detail to the presently preferred embodiments of the invention. Such embodiments are provided by way of explanation of the invention, which is not intended to be limited thereto. In fact, those of ordinary skill in the art may appreciate upon reading the present specification and viewing the present drawings that various modifications and variations can be made.

For example, features illustrated or described as part of one embodiment can be used on other embodiments to yield a still further embodiment. Additionally, certain features may be interchanged with similar devices or features not mentioned yet which perform the same or similar functions. It is therefore intended that such modifications and variations are included within the totality of the present invention.

In accordance with one embodiment of the invention, different music rights societies ("societies") and record companies depend upon their ability to accurately identify musical works and sound recordings to respectively license musical works and release sound recordings and products containing these sound recordings. The parties incur significant costs from the business processes associated with the task of uniquely identifying a musical work and a sound recording whenever music is "used." Within the databases of many music industry organizations, sound recording information is linked to musical work information to enable, for example, identification. However, it has been determined that accurate identification frequently is not achieved due to the lack of standard identification systems and inconsistent descriptive metadata. We also have determined that the ability to accurately identify sound recordings and musical works is greatly improved, in accordance with one embodiment of the invention, by linking release identifiers to license identifiers, in conjunction with linking International Standard Recording Codes (ISRCs) to International Standard Musical Work Codes (ISWCs) to establish the relationship between a musical work and the sound recordings on which it appears.

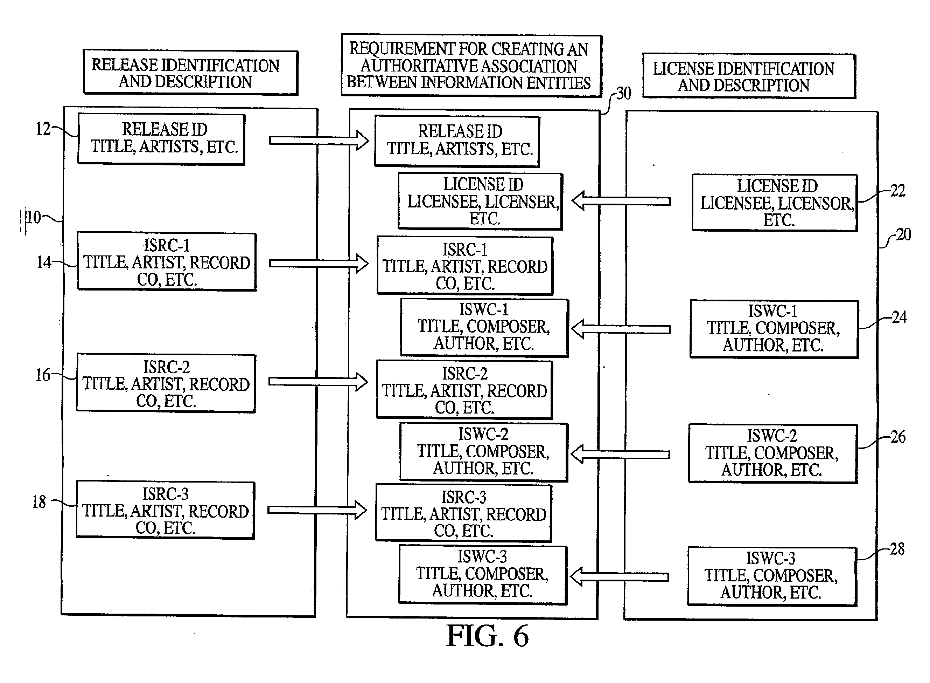

FIGURE 6 illustrates a functional interaction or model for the relationship between identification systems to create an association between information entities. A release identification and description implementation 10 comprises, for example, release identifier 12 and several ISRCs 14, 16, and 18. Release identifier 12 identifies, for example, the title, artist, etc. of a release. ISRCs 14, 16, and 18 identify, for example, the title, artist, record company, etc. for various sound recordings included in the Release. Alternative data and/or copyrighted data may be identified by release identifier 12, as well.

A license identification and description implementation 20 comprises, for example, license identifier 22 and several ISWCs 24, 26, and 28. License identifier 22 identifies, for example, the licensee, licensor, etc. of data and/or copyrighted data, such as a musical work. ISWCs identify, for example, the title, composer, author, etc. for various other musical works. Information entity association 30 comprises the joining of release and related licensing information for sound recordings and musical works. For example, release identifier 12 and license identifier 22 join to identify the complete relationship between the release and musical work identified by release identifier 12 and license identifier 22, respectively.

One means of achieving both the association between information entities and to provide for appropriate access to release and license information is to associate information regarding licenses and the data, such as musical works, within unencrypted information fields of release file formats. Certain information is preferably carried in the unencrypted information fields to enable, for example: license verification; anti-piracy; documentation for identification purposes; and usage monitoring.

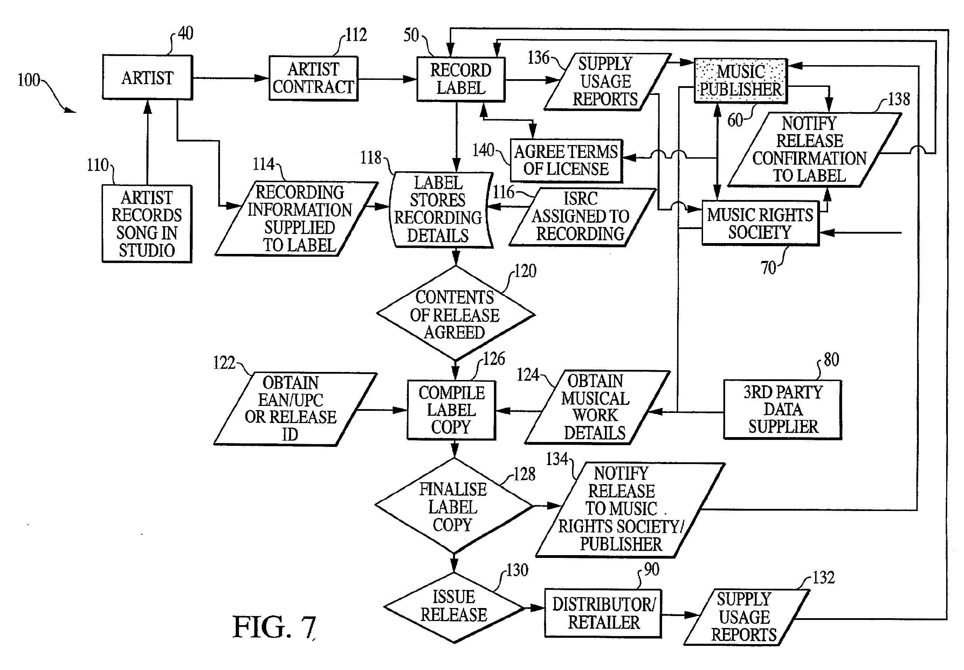

In accordance with one embodiment of the invention, where the data comprises musical works, FIGURE 7 is a flow chart diagram illustrating management of the identification and description of releases and sound recordings by record companies, as well as management of the identification and description of musical works and licenses by societies, denoted generally by reference numeral 100. In this embodiment, several entities are involved in management process 100, including, for example: artist(s) 40; record label(s) 50; music publisher(s) 60; society or societies 70; third party data supplier(s) 80; and distributor(s)/retailer(s) 90.

Management process 100 begins when artist 40 records a musical work, e.g., a song, in a studio, for example, step 110. Artist 40 then contracts with a record label 50, for instance, to market and distribute the song, step 112. Artist 40, or some other entity, provides the recording information details to record label 50, step 114. A standard ISRC is also optionally assigned to the recording, step 116. Record label 50 then stores the recording information details, along with the ISRC if assigned, step 118.

The concerned parties, including artist 40 and record label 50, subsequently agree on the contents of a proposed release, step 120. A release identifier is then assigned to the release, step 122. Optionally, a standard European Article Number ("EAN"), for Europe and other territories, and/or a standard Universal Product Code ("UPC"), for the US and Canada, may be assigned to the release. The descriptive details regarding the musical work are also obtained from music publisher 60 and/or third party data supplier 80, step 124. Using the identification and descriptive information for the release and its associated musical works, record label 50 compiles a label copy, step 126. A label copy is literally the "copy" or words that are used on the label of the physical embodiment of a release, e.g., C lines, or copyright notices, P notices, or performance rights notices, etc. The label copy is also used by record label 50 to describe the product, for example, whether the release is a single or an album. The label copy is also used by licensing entities as a main source of information regarding the release, for example, performance rights societies. Furthermore, repertoire and product database providers also often retrieve necessary information from the label copy for their respective operations.

After the label copy is compiled, record label 126 then can finalize the label copy, step 128, and then issue the release to a distributor/retailer 90, step 130. Distributor/retailer 90 supplies usage reports to record label 50. Other entities may optionally be responsible for supplying usage reports to record label 50. Record label 50, or some other entity, in turn, supplies the usage reports to society 70 and/or music publisher 60, step 136.

Record label 50 notifies society 70 and/or music publisher 60 of the release, step 134, which begins the licensing process. Society 70 and/or music publisher 60 sends a confirmation to record label 50 that notification of the release has been received, step 138. Record label 50 then negotiates the terms of a license of any musical work or works contained within the release with society 70 and/or music publisher 60, step 140. In an alternate embodiment, record label 50 may negotiate the license with some other entity, which then negotiates with society 70 and/or music publisher 60. Other inter-entity information processes may occur other than those described above. Additionally, each society 70 may have its own individual processes that vary from those represented in FIGURE 7 and may not manage information about sound recordings and their relationship with musical works to the same level of detail.

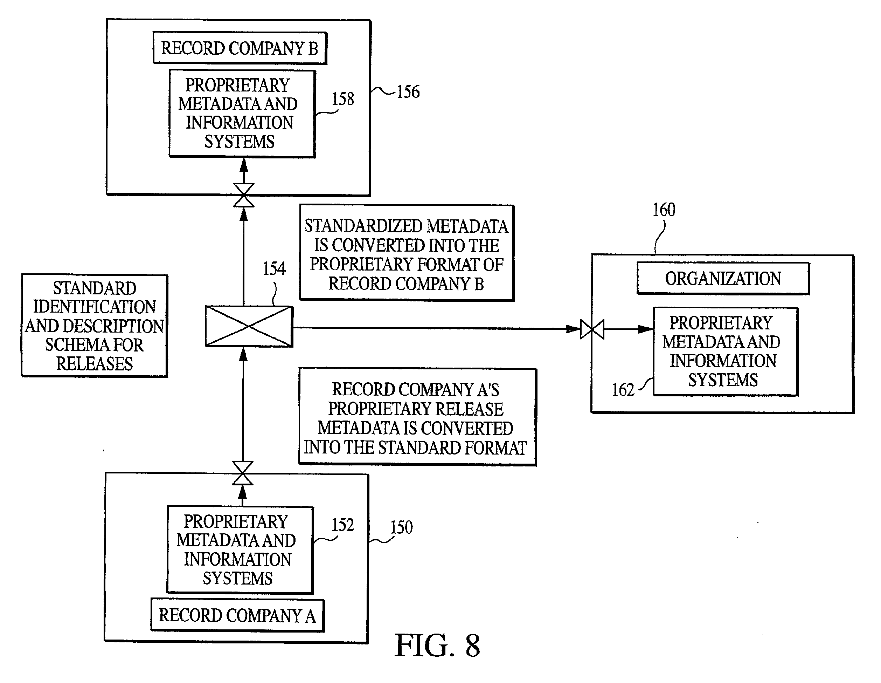

FIGURE 8 is a flow chart diagram illustrating a method for exchanging information regarding releases and/or licenses using standardized metadata. For example, Record Company A 150 wishes to issue an identifier and descriptive information for a release. The metadata and identifiers are initially held in proprietary metadata and information systems 152 of Record Company A 150. The metadata and identifiers are mapped to the appropriate fields 154 within a standard metadata schema (see Appendix A) for a Release. Any coded values are translated from proprietary to the standardized versions. The standardized identifiers and metadata are preferably expressed in an extensible mark-up language ("XML")-type message and delivered to external organizations, for example Record Company B 156 and/or Organization 160.

Record Company B 156 maps the standardized fields 154 of metadata and identifiers to its own proprietary data descriptions and codes that are recognized in its information systems 158. The translation process is then duplicated by each organization 160 that needs to process the release information. This method also applies to the transfer of license information between organizations.

### I. Release and License Identifiers

A. Release Identifiers

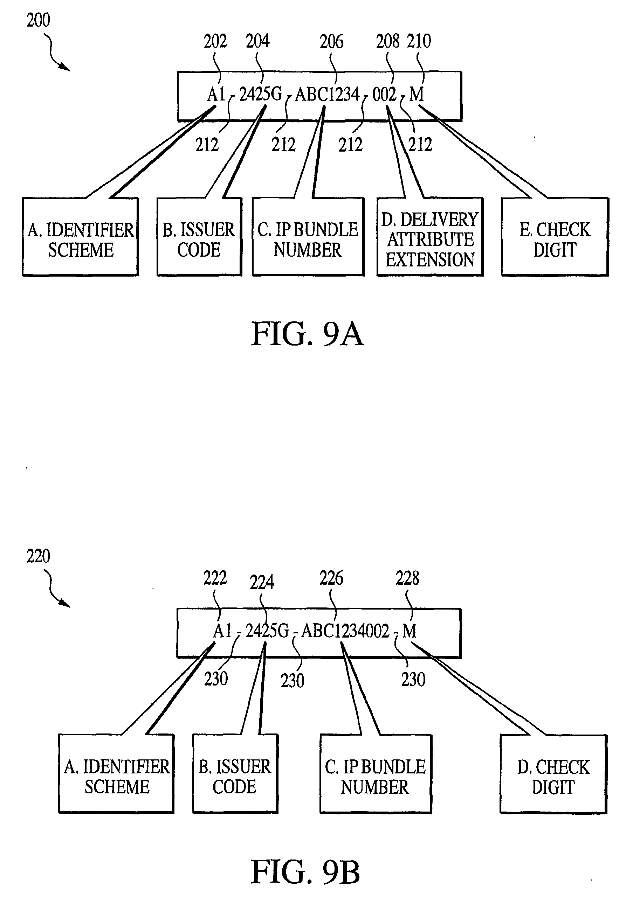

FIGURE 9A illustrates a format for a release identifier. A release identifier ("ID") preferably is used to identify releases, which can contain single or multiple intellectual property assets, including, for example, sound recordings, text, images, video, and software. Release ID 200 comprises an issuer code 204, an intellectual property ("IP") bundle number 206, and a check character 210. Release ID 200 also optionally includes Release identifier scheme 202 and/or delivery attribute extension 208.

Release ID 200 preferably is of the form A-B-C-D-E, where each of the five elements preferably is separated by a hyphen 212, "-". Several elements preferably are formed of "valid characters." A "valid character" is either any upper case letter of the Roman alphabet, except for "I" or "O" (to avoid ambiguities with the Arabic numbers one and zero) or any Arabic digit. Therefore, there are 34 valid characters. A valid character preferably is coded as defined in the International Reference Version (IRV) of ISO 646 (incorporated herein by reference), which is equal to, or consistent with, ASCII codes. Release ID 200, as illustrated in FIGURE 9, is an example of the structure of a typical release ID. The size of release ID 200 is preferably 18 characters. Other formats and sizes for release ID 200 apply to alternative embodiments.

Release identifier scheme 202 uniquely identifies the identification scheme, for example, the release ID for the record industry, from any other identification scheme adopting the same structure that might be used to identify releases of other content types. Release identifier scheme 202 preferably comprises two valid characters. In this example, the release identifier scheme is "A1", however, release identifier scheme 202 may be any combination of, for example, two valid characters, i.e., "A2 to "A0" and "AA" to "ZZ". Other formats and/or numerical or character compositions for release identifier scheme 202 may optionally be used.

Issuer code 204 uniquely identifies the entity responsible for issuing a release ID 200. Issuer code 204 preferably comprises five valid characters, although other formats are possible. IP bundle number 206 is allocated uniquely by an entity that has been assigned an issuer code 206 to identify the collection of IP assets and their accompanying descriptive metadata associated with each release. IP bundle number 206 preferably comprises seven valid characters, although other formats are possible.

Delivery attribute extension 208 optionally is allocated uniquely by a an entity that has been assigned an issuer code 204 to distinguish between different versions of a release where an IP bundle remains the same but the parameters relating to the trade of the different versions need to be distinguished. The parameters indicated by delivery attribute extension 208 typically have no material impact on the intellectual property with the IP bundle. In one embodiment, entities issuing IP bundle numbers are free to choose whether or not they wish to differentiate between the different delivery attributes, which might relate to the same IP bundle. Therefore, delivery attribute extension 208 is optional. Delivery attribute extension 208 preferably comprises three valid characters, although other formats are possible.

An optional, check character 210 is calculated for each release identifier 200 to ensure that release ID 200 has been correctly entered into a computer system, a database, or some other system that enables the management and dissemination of release information. Check character 210 preferably is calculated in accordance with "ISO 7064:1983 (incorporated herein by reference), as described below in more detail. Check character 210 preferably comprises one alphanumeric character. Check character 210, as calculated under ISO 7064:1983, may lead to any letter (including "I" or an "O").

Release ID 200 may have several alternative formats. In one alternative embodiment, release ID 200 is of the form B-C-D-E, i.e., without Release identifier scheme 202) when it is obvious to all concerned entities which identifier scheme is being used. In another alternative embodiment, release ID 200 is of the form ABCDE, i.e., without hyphens 212 separating the elements, which it is obvious to all concerned entities that the code is a release ID. In a further alternative embodiment, release ID 200 is of the form BCDE, i.e., without release identifier scheme 202 and without hyphens 212, when it is obvious to all concerned entities that the code is a release ID and which identifier scheme is being used.

FIGURE 9B illustrates an alternate format for a release identifier. Release ID 220 comprises an issuer code 224, an IP bundle number 226, and a check character 228. Release ID 200 also optionally includes Release identifier scheme 222. In this embodiment, IP bundle number 226, which is ten characters in length, contains information regarding a delivery attribute in addition to information regarding the intellectual property rights associated with the release. Therefore, a delivery attribute extension may be omitted.

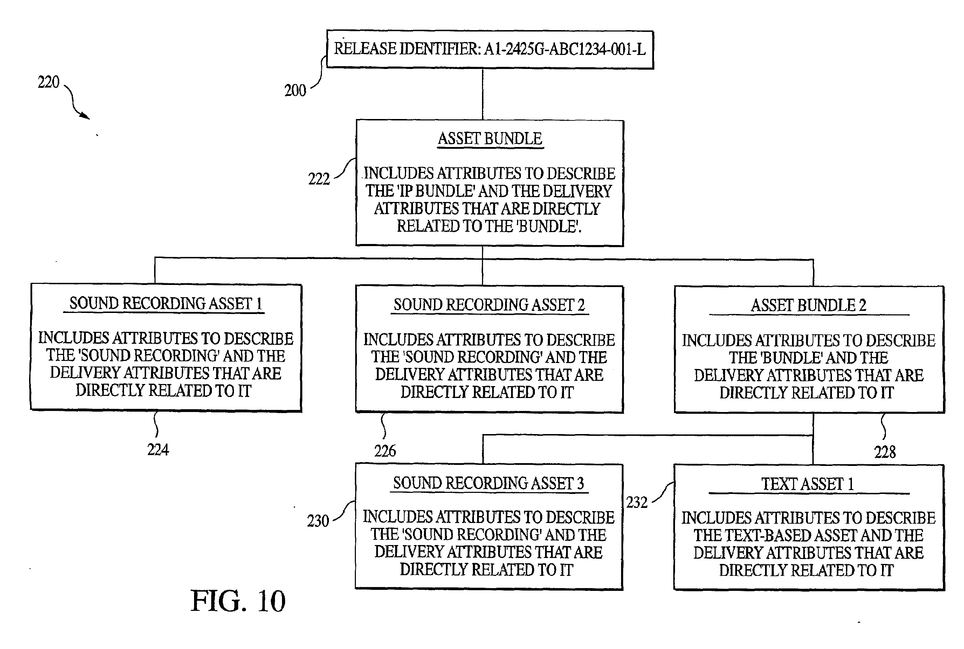

FIGURE 10 illustrates the structure for an example release containing a multi-asset IP bundle. Release 220 is identified by a unique release ID 200, as described previously. Release 220 has an IP or asset bundle 222, which consists of two sound recordings, sound recording asset 224 and sound recording asset 226. IP bundle 222 also includes an additional IP bundle 228, referred to as a "sub-bundle" to illustrate the possible, hierarchical structure of IP bundles. IP bundle 228, or sub-bundle, includes sound recording asset 230 and text asset 232. IP bundle 222 is uniquely identified by the IP bundle number of release ID 200, in this example, "ABC1234".

B. License Identifiers

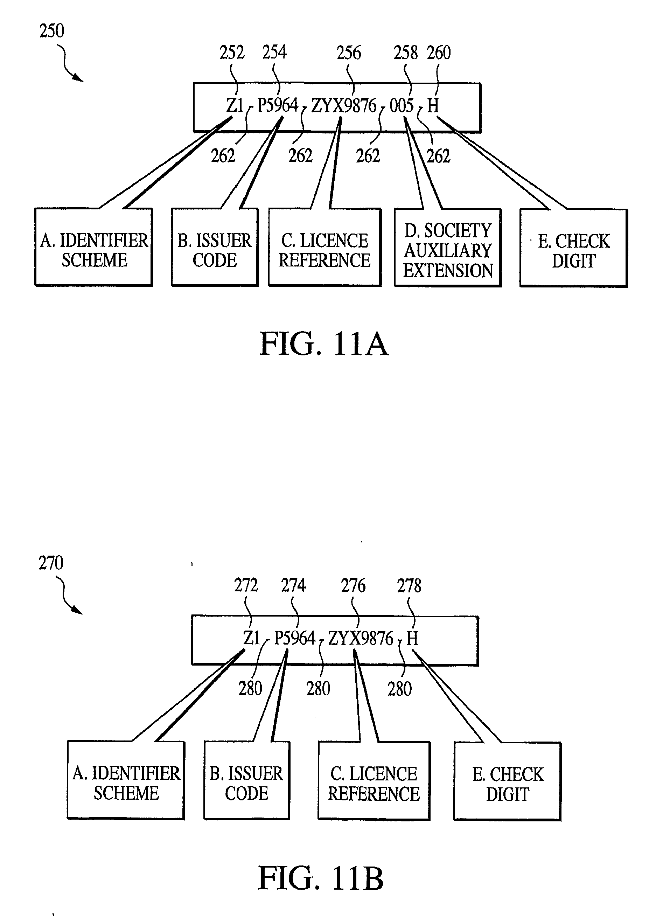

FIGURE 11 illustrates a preferred format for a license identifier. A license identifier ("ID") is preferably used to identify licenses, relating to electronic music delivery releases and other products, for example, embodying musical works. In one embodiment, license ID 250 comprises an issuer code 254, a license reference 256, and a check character 260. License ID 250 also optionally includes identifier scheme 252 and/or society auxiliary extension 258.

License ID 250 is preferably of the form A-B-C-D-E, where each of the five elements is separated by a hyphen 262, "-". Several elements preferably are formed of "valid characters," as described previously. License ID 250, as illustrated in FIGURE 11, is an example of the structure of a typical license ID. The size of license ID 250 is preferably 18 characters. Other formats and sizes for license ID 250 apply to alternative embodiments.

License identifier scheme 252 uniquely identifies the identification scheme, for example, the license ID for licenses issued with respect to musical works, from any other identification scheme adopting the same structure that might be used to identify other content types. License identifier, scheme 252 preferably comprises two valid characters. In this example, the license identifier scheme is "Z1", however, license identifier scheme 252 may be any combination of, for example, two valid characters, i.e., "Z2" to "Z0" and "ZA" to "ZZ". Other formats and/or numerical or character compositions for license identifier scheme 252 may optionally be used.

Issuer code 254 uniquely identifies the entity responsible for issuing a license ID 250. Issuer code 254 preferably comprises five valid characters, although other formats are possible. License reference 256 is allocated uniquely by an entity that has been assigned an issuer code 256 to identify a license and its accompanying metadata. License reference 256 preferably comprises seven valid characters, although other formats are possible.

Society auxiliary extension 258 optionally is allocated uniquely by an entity that has been assigned an issuer code 254 to distinguish between different versions of a license. Society auxiliary extension 258 may be used for a range of applications needed to distinguish or link licenses. For example, an organization issuing license IDs may use society auxiliary extension 258 as an additional means (other than the license ID's metadata) to identify specific licensees, so that all licenses issued to a specific licensee will have the same society auxiliary extension 258 but different license references 256. Alternatively, society auxiliary extension 258 may be used to distinguish licenses where all the terms and conditions are identical except, for example, the period of the license. Entities issuing license references are free to choose whether or not they wish to use society auxiliary extension 258 as a means of differentiating or linking license references. Therefore, society auxiliary extension 258 is optional. Society auxiliary extension 258 preferably comprises three valid characters, although other formats are possible.

An optional check character 260 is calculated for each license identifier 250 to ensure that license ID 250 has been correctly entered into a computer system, a database, or some other system that enables the management and dissemination of license information. Check character 260 preferably is calculated in accordance with "ISO 7064:1983 (incorporated herein by reference), as described below in more detail. Check character 210 preferably comprises one alphanumeric character. Check character 210, as calculated under ISO 7064:1983, may lead to any letter (including "I" or an "O").

License ID 250 may have several alternative formats. In one alternative embodiment, license ID 250 is of the form B-C-D-E, i.e., without License identifier scheme 252) when it is obvious to all concerned entities which identifier scheme is being used. In another alternative embodiment, license ID 250 is of the form ABCDE, i.e., without hyphens 262 separating the elements, which it is obvious to all concerned entities that the code is a license ID. In a further alternative embodiment, license ID 250 is of the form BCDE, i.e., without license identifier scheme 252 and without hyphens 262, when it is obvious to all concerned entities that the code is a license ID and which identifier scheme is being used.

FIGURE 11B illustrates an alternate format for a release identifier. In an alternate embodiment, license ID 270 comprises an issuer code 274, a license reference 276, and a check character 278. License ID 270 also optionally includes identifier scheme 272. In this embodiment, a society auxiliary extension is omitted. In another alternate embodiment license reference 276 may contains information regarding a society auxiliary extension, and thus be ten characters in length.

C. Check Character Calculation

Release ID check character 210 and license ID check character 260 are preferably calculated according to ISO 7064:1983 ("ISO 7064"), although alternative methods of calculation are possible. In one embodiment when ISO 7064 is used, ISO 7064 maps, for example, a string of alphanumeric characters (comprising the 26 Roman letters and 10 Arabic digits, and therefore being a superset of the valid characters used for composing Release and License Identifiers) to, for example, a single alphanumeric character.

The characters of the release ID or license ID are processed, optionally, character by character from left to right. n=18 is defined as the preferably number of characters including the check character in the release ID or license ID. The characters of the release ID or license ID (including the check character) are numbered, for example, from right to left such that $a_1$ is check character, and $a_2$ to $a_{18}$ are the characters of the release ID or license ID as follows, using release ID 200 in FIGURE 9 as an example:

| A | 1 | 2 | 4 | 2 | 5 | G | A | B | C | 1 | 2 | 3 | 4 | 0 | 0 | 2 | X |
|---|---|---|---|---|---|---|---|---|---|---|---|---|---|---|---|---|---|
| $a_{18}$ | $a_{17}$ | $a_{16}$ | $a_{15}$ | $a_{14}$ | $a_{13}$ | $a_{12}$ | $a_{11}$ | $a_{10}$ | $a_9$ | $a_8$ | $a_7$ | $a_6$ | $a_5$ | $a_4$ | $a_3$ | $a_2$ | $a_1$ |

The counter $a_j$ for j=n...2 is set such that $a_n$ is the value for the first character of the release ID or license ID (see Table 1), $a_{n-1}$ is the value for the second character of the release ID or license ID, etc. $a_2$ is the last character in the release ID before the check character. Setting j=1 and $P_1$=36, $S_j$ and $P_{j+1}$ are calculated as follows:

$$S_j = P_j|_{37} + a_{n-j+1}$$

$$P_{j+1} = S_j\|_{36} * 2$$

for j=1...n. $\|_{36}$ is the remainder after division of $S_j$ by 36. If the remainder equals zero, then $\|_{36} = 36$. $|_{37}$ is the remainder after division of $P_j$ by 37 (never equals to 0). $a_{n-j+1}$ is the value of a character in the release ID or license ID string.

Table 1: Character Table for ISO 7064

| Char | Value | Char | Value | Char | Value |
|------|-------|------|-------|------|-------|
| 0 | 0 | A | 10 | N | 23 |
| 1 | 1 | B | 11 | O | 24 |
| 2 | 2 | C | 12 | P | 25 |
| 3 | 3 | D | 13 | Q | 26 |
| 4 | 4 | E | 14 | R | 27 |
| 5 | 5 | F | 15 | S | 28 |
| 6 | 6 | G | 16 | T | 29 |
| 7 | 7 | H | 17 | U | 30 |
| 8 | 8 | I | 18 | V | 31 |
| 9 | 9 | J | 19 | W | 32 |
|  |  | K | 20 | X | 33 |
|  |  | L | 21 | Y | 34 |
|  |  | M | 22 | Z | 35 |

The check character $a_1$ is computed so that $S_{18}\|_{36} = 1$. Table 1 then is used to select the calculated check character. An example, using release ID 200 (FIGURE 9), follows (for n=18 and $P_1$=36):

| j | Char | Char Value | $a_{n-j+1}$ | $P_j$ | $P_j|_{37}$ | $S_j$ | $S_j\|_{36}$ | $P_{j+1}$ |
|----|------|------------|-------------|-------|-------------|-------|--------------|-----------|
| 1 | - | - | 10 | 36 | 36 | 46 | 10 | 20 |
| 2 | 2 | 2 | 1 | 20 | 20 | 21 | 21 | 42 |
| 3 | 0 | 0 | 2 | 42 | 5 | 7 | 7 | 14 |
| 4 | 0 | 0 | 4 | 14 | 14 | 18 | 18 | 36 |
| 5 | 4 | 4 | 2 | 36 | 36 | 38 | 2 | 4 |
| 6 | 3 | 3 | 5 | 4 | 4 | 9 | 9 | 18 |
| 7 | 2 | 2 | 16 | 18 | 18 | 34 | 34 | 68 |
| 8 | 1 | 1 | 10 | 68 | 31 | 41 | 5 | 10 |
| 9 | C | 12 | 11 | 10 | 10 | 21 | 21 | 42 |
| 10 | B | 11 | 12 | 42 | 5 | 17 | 17 | 34 |
| 11 | A | 10 | 1 | 34 | 34 | 35 | 35 | 70 |
| 12 | G | 16 | 2 | 70 | 33 | 35 | 35 | 70 |
| 13 | 5 | 5 | 3 | 70 | 33 | 36 | 36 | 72 |
| 14 | 2 | 2 | 4 | 72 | 35 | 39 | 3 | 6 |
| 15 | 4 | 4 | 0 | 6 | 6 | 6 | 6 | 12 |
| 16 | 2 | 2 | 0 | 12 | 12 | 12 | 12 | 24 |

(continued)

| j | Char | Char Value | $a_{n-j+1}$ | $P_j$ | $P_j|_{37}$ | $S_j$ | $S_j\|_{36}$ | $P_{j+1}$ |
|---|------|-----------|-------------|-------|-----------|-------|-----------|-----------|
| 17 | 1 | 1 | 2 | 24 | 24 | 26 | 26 | 52 |
| 18 | A | 10 | - | 52 | 15 | - | - | - |

$S_{18}$ is defined as $S_{18} = P_{18}|_{37} + a_1$, where $a_1$ is the check character. Therefore, since the condition is that $S_{18}\|_{36}$ = 1, $a_1$ should be calculated such that $P_{18}|_{37} + a_1 - 1$ is divisible by 36 without remainder. In the above example, where $P_{18}|_{37} = 15$, the condition is that $15 + a_1 - 1$ is divisible by 36. Therefore, using the equation:

$$(15 + a_1 - 1)/36 = 1$$

$a_1$ is found to equal 22, for the above example. According to Table 1, the number 22 represents the character "M". Hence, the complete release ID is AI-2425G-ABC1234-002-M, as is shown in FIGURE 9. Other optional method may be used to calculate or assign a check character to a release identifier and/or a license identifier.

C. Management of Release IDs and License IDs

An optional central registration service, which may include one or more central registration agencies, is responsible for providing national and regional support to users of the release and license metadata system. The central registration service allocates issuer codes for release IDs and/or license IDs to entities that satisfy criteria determined by the central registration service. The central registration service is also involved in the registration process of entities that intend to become issuers, including the management and quality assurance of collected metadata for releases and/or licenses.

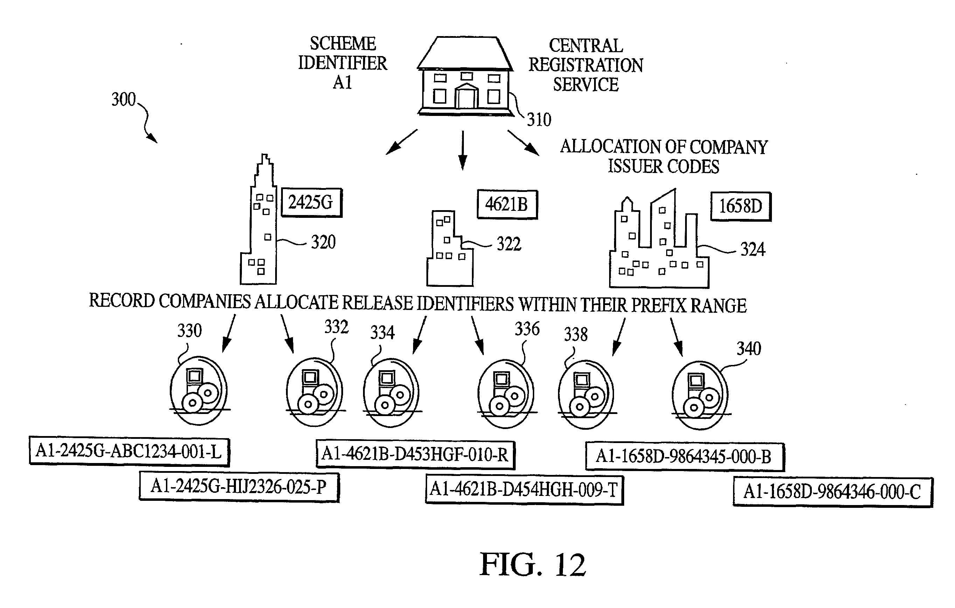

FIGURE 12 illustrates a preferred method for assigning, for example, release ID issuer codes by the optional central registration service, denoted generally by reference numeral 300. Assignment method 300 may also be used for assigning license ID issuer codes. Central registration service 310 manages, for example, release IDs using the "A1" identifier scheme. Central registration service 310 allocates issuer codes "2425G," "4621 B," and "1658D" to record companies 320, 322, and 324, respectively. Record companies 320, 322, and 324 then allocate release IDs, with the appropriate issuer code, to releases that are being issued, for example, to distributors and/or retailers. Record company 320, which is assigned issuer code "2425G," issues two releases, 330 and 332, having release IDs "AI-2425G-ABC1234-001-L" and "AI-245G-HIJ2325-025-P," respectively. Record company 322, which is assigned issuer code "4621B," issues two releases, 334 and 336, having release IDs "A1-46218-D453HGF-010-R" and "A1-4621B-D454HGH-009-T," respectively. Finally, record company 324, which is assigned issuer code "1658D," issues two releases, 338 and 340, having release IDs "A1-1658D-9864345-000-B" and "A1-1658D-9864346-000-C," respectively.

**II. Release and License Metadata**

A standard metadata schema (Appendix A) preferably is used to describe the principle units of transaction for record companies and societies - namely releases or sound recordings and other assets, and license of musical works, respectively. Alternative entities may also utilize the release and/or license identifiers of the present invention. A standard metadata schema provides several advantages. The identification of and creation of standard data definition and their representations for data items that are common to both the record industry and to societies create a framework from which open information standards for the music industry can be established. The standard metadata schema provides a common means for the exchange of metadata.

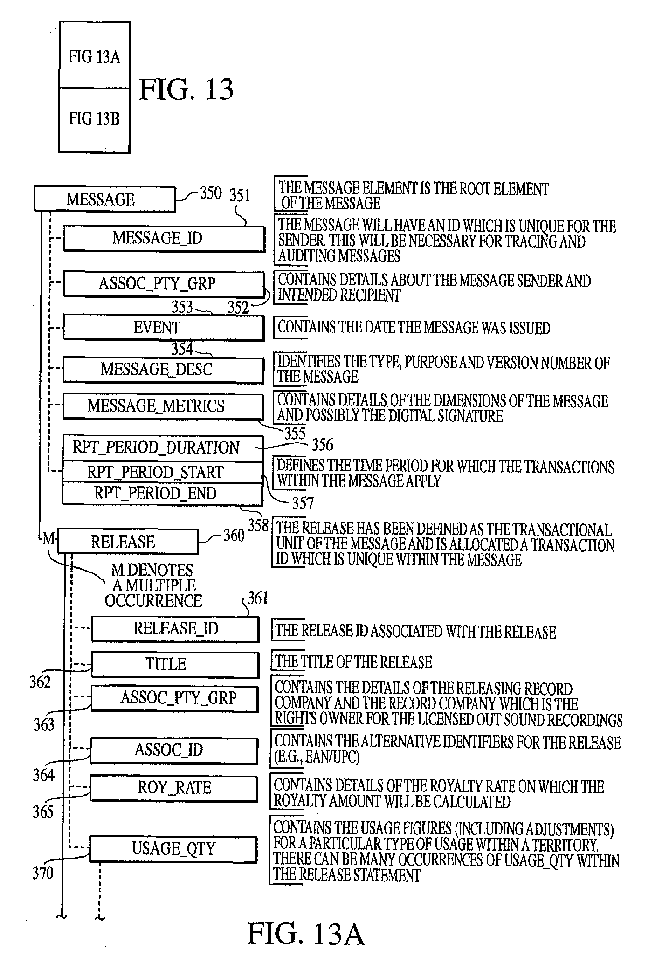

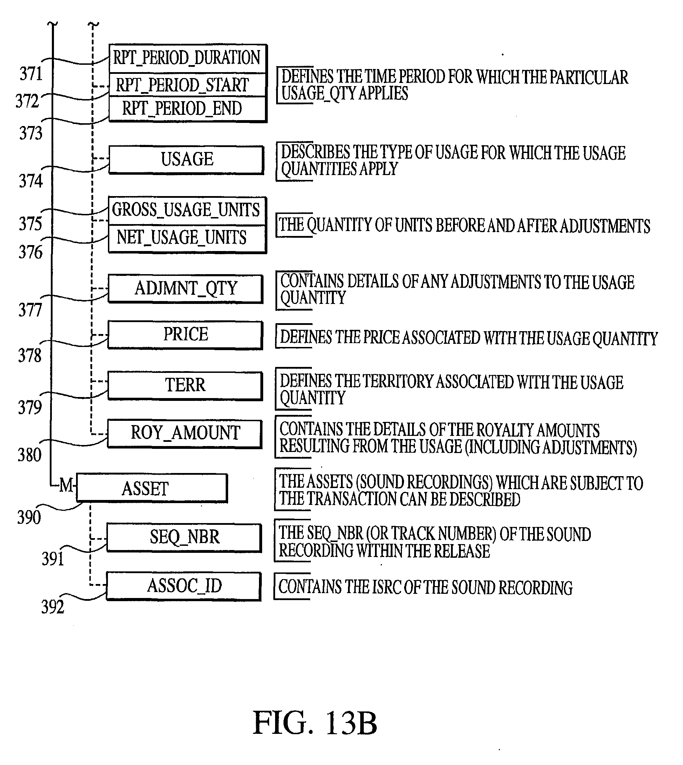

The standard metadata schema contains the terms and "allowed values" for the description of releases and/or licenses, as well as other units of transaction. The standard metadata schema also declares rules and defines the structures that are used to construct transaction messages. FIGURES 13, 14, 17, and 18 illustrate four examples of transaction messages that may be implemented using the standard metadata schema. Other formats and/or schemes may be used to describe the principle units of transaction.

FIGURES 13A and 13B illustrate an example of fields in a transaction message for an inter-company sales reporting transaction between two record companies. Message 350 supports, for example, third quarter sales and royalty reporting between Record Company A and Record Company B. The transaction message contains a group of descriptive fields that contain information regarding the subject(s) of the transaction message. MESSAGE_ID 351 is an identifier that is unique, for example, to the sender of message 350. ASSOC_PTY_GRP 352 contains details regarding, for example, the message sender and the intended recipient. EVENT 353 contains, for example, the data the message was issued. MESSAGE_DESC 354 identifies, for example, the type, purpose, and/or version number of the message. MESSAGE_METRICS 355 contains details regarding, for example, the dimensions of the message and possibly a digital signature. RPT_PERIOD_DURATION 356, RPT_PERIOD_START 357, and RPT_PERIOD_END 358 define, for example, the time period for which the transactions within the message apply.

In this example, message 350 contains sales figures for two releases contained within the message. Release(s) 360 may be a multiply occurring field, as denoted by the "M," the fields of which contain information for each of the two releases, Release-1 and Release-2. Each release 360 is defined as the transactional unit of message 350 and is allocated a transaction ID, which is unique within message 350. In this example, Release-1 is a physical product, e.g., a compact disc ("CD"). Release-1 has a unique RELEASE_ID 361, as described above. TITLE 362 indicates the title of Release-1. Release-1 is distributed by Record Company A, as denoted by ASSOC_PTY_GRP 363, which contains the details of the release record company and the record company that owns the rights for the licenses sound recordings contained within Release-1. In this example Record Company B owns 13% of the phonographic rights of the sound recording featured in Release-1. Release-1 may also be identified with alternative identifiers (e.g., EAN/UPC), as denoted in ASSOC_ID 364. ROY_RATE 365 denotes the royalty rate that is used to calculate the royalties due to Record Company B.

USAGE_QTY 370, which also may be a multiply occurring field, contains, for example, the usage figures (including adjustments) for a particular type of usage within a territory. Within the field USAGE_QTY 370, numerous sub-fields may be used to provide additional information. RPT_PERIOD_DURATION 371, RPT_PERIOD_START 372, and RPT_PERIOD_END 373 define, for example, the time period for which the particular USAGE_QTY 370 applies. USAGE 374 describes the type of usage for which the usage quantities apply. GROSS_USAGE_UNITS 375 and NET_USAGE_UNITS 376 denote, for example, the quantity of usage units before and after adjustments. ADJMNT_QTY 377 contains details of any adjustments to the usage quantity. PRICE 378 defines the price associated with the usage quantity. TERR 379 defines the territory associated with the usage quantity, for example, the United States or Great Britain. ROY_AMOUNT 380 contains details of the royalty amounts resulting from the usage (including adjustments).

Asset(s) 390 denote the asset(s) (e.g., sound recording) contained within release(s) 360 that is subject to the transaction. As there may be multiple assets within a release, RELEASE 390 may be a multiply occurring field. SEQ_NBR 391 denotes, for example, the sequence number of the asset within the release, *i.e.*, the track number on the CD. ASSOC_ID 392 contains, for example, the ISRC of the sound recording that makes up asset 390. Each field described above may contain multiple sub_fields to allow for more detailed information within the transaction message. The information associated with Release-2 is presented in message 350 using parallel fields under release 360.

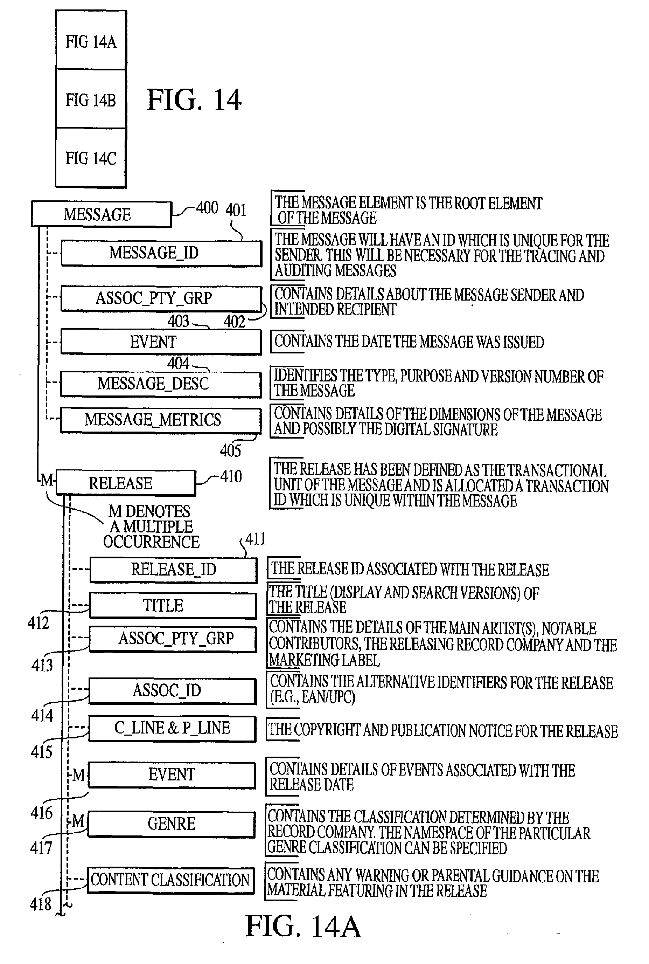

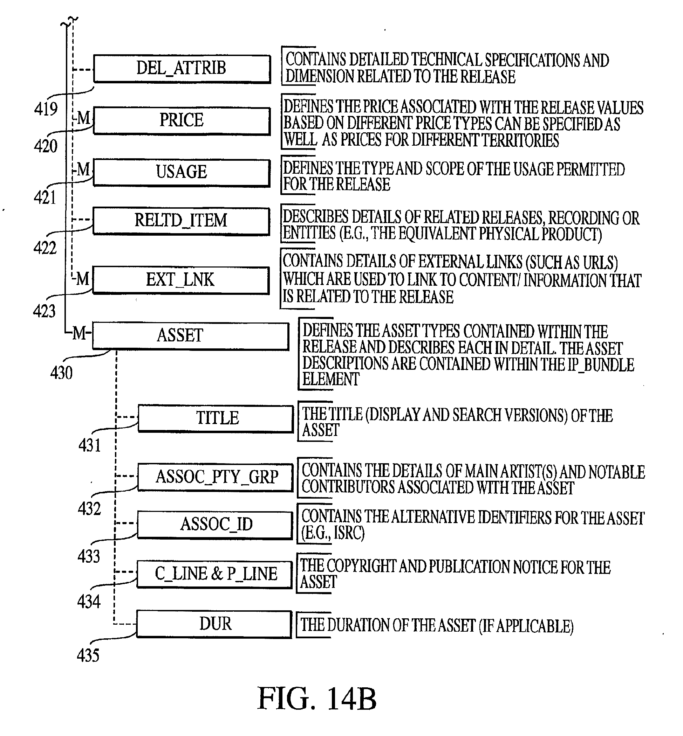

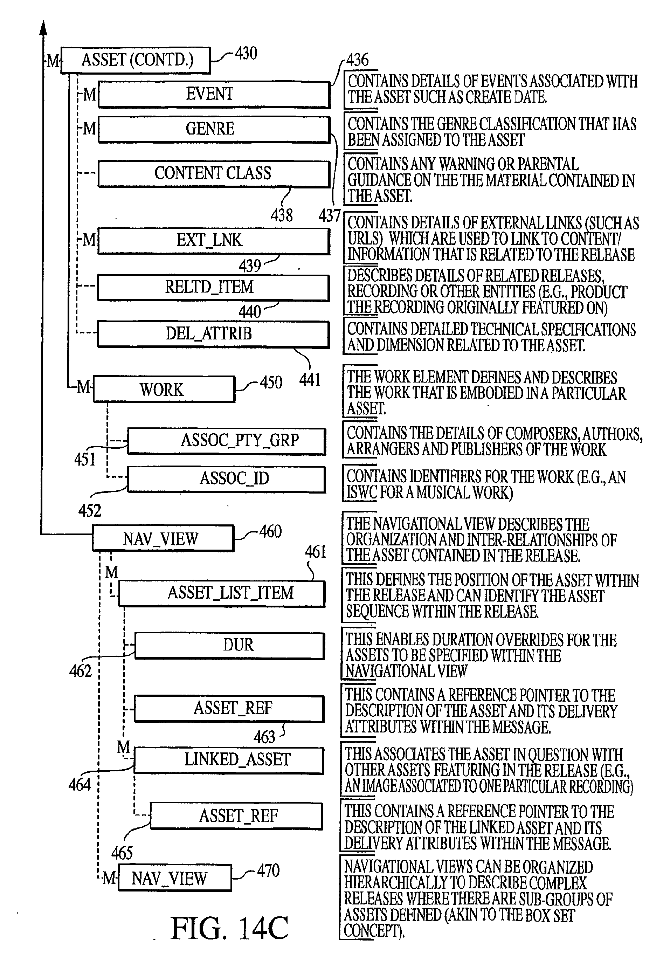

FIGURES 14A, 14B, and 14C illustrate an example of fields in a transaction message for a retail notification transaction between a record company to a retailer or an affiliate. In FIGURE 14A, message 400 supports, for example, details sent from Record Company to Retailer regarding two releases: a complex multimedia product and a simple single track product. Message 400 contains a group of descriptive fields similar to the descriptive fields described with regard to message 350: MESSAGE_ID 401; ASSOC_PTY_GRP 402; EVENT 403; MESSAGE_DESC 404; and MESSAGE_METRICS 405.

In this example, message 400 contains details about two releases, Release- and Release-2, which are both on-line products. Release-1, a download product, contains several assets and Release-2, a streaming product, contains a single asset. Both Release-1 and Release-2 contain a navigational viewing feature.

Release(s) 410, may be a multiply occurring field, as denoted by the "M," and contains information for each of the two releases, Release-1 and Release-2. As in the previous example, each release 410 is allocated a transaction ID. Each release 41.0 also has a unique RELEASE_ID 411 and TITLE 412. ASSOC_PTY_GRP 413 contains details regarding, for example, the main artist(s), notable contributors, the releasing record company, the marketing label, etc. C_LINE & P_LINE 415 contains the copyright and/or publication notice for release 410. EVENT 416 contains details of events associated with release 410, such as a release date.

GENRE 417 contains, for example, the classification determined by the record company, i.e. R&B, hip-hop, pop, and/or country & western. CONTENT CLASSIFICATION 418 contains, for example, any warning or parental guidance information on the material featured in release 410. DEL_ATTRIB 419 contains, for example, detailed technical specifications and dimensions related to release 410, such as the operating system on which release 410 can be downloaded.

PRICE 420 defines, for example, the price associated with release 410. Values based on different price types can be specified, *e.g.*, US dollars or British pounds, as well as prices for different territories. As in the previous example, USAGE 421 defines the type and scope of the usage permitted for release 410. RELTD_ITEM 422 describes, for example, details of related releases, recordings, and/or entities (*e.g.*, the equivalent physical product to the on-line release). EXT_LNK 423 contains, for example, details of external links (e.g. URLs), which are used to link to content and/or information that is related to release 410.

In this example, Release-1 contains a plurality of different assets: audio assets (*e.g.*, the sound recordings), image assets (*e.g.*, cover artwork and photographs), text assets (*e.g.*, lyrics), software assets (*e.g.,* a screensaver), and video assets (*e.g.,* a music video). Information for each asset is contained in the multiply occurring field Asset 430 and its sub-fields. Asset 430 defines, for example, the asset types contained within release 410 and describes each in detail. The asset descriptions are associated with the IP bundle for the release.

TITLE 431 contains the title of asset 430, for example, in display and search versions. ASSOC_PTY_GRP 432 contains, for example, details of main artist(s) and notable contributors associated with asset 430. ASSOC_ID 433 contains, for example, alternative identifiers for asset 430 (*e.g.*, ISRC). C_LINE & P_LINE 434 contains the copyright and/or publication notice for asset 430, as compared to C_LINE & P_LINE 415, which contains notice(s) for the entire release 410. DUR 435 denotes, for example, the duration of asset 430, such as playing time, if applicable.

Continuing in FIGURE 14B, EVENT 436 contains, for example, details of events associated with asset 430, such as a creation date. GENRE 437 denotes genre classification information for asset 430, which may differ from GENRE 417 for the entire release. Likewise, CONTENT CLASS 438 contains, for example, any additional warnings or parental guidance information for the release apart from CONTENT CLASSIFICATION 418 for the entire release. EXT_ LNK 439 contains, for example, details of external links used to link to content and/or information related to asset 430. RELTD_ITEM 440 describes, for example, details of related releases, recordings, etc., such as the release on which the asset originally featured. DEL_ATTRIB 441 contains, for example, detailed technical specifications and dimensions related to asset 430.

Each asset 430 may additionally contain information regarding the work present in that asset. Work(s) 450 defines and describes the work that is embodied in a particular asset 430. ASSOC_PTY_GRP 451 contains, for example, the details of composers, authors, arrangers, and/or publishers of work 450. ASSOC_ID 452 contains, for example, identifiers for work 450 (e.g., an ISWC for a musical work). By associating asset and work information, license information for works in an asset optionally can be related to a release.

Releases 400 also have an optional navigational view feature, NAV_VIEW 460. NAV_VIEW 460 provides a visual description of the organization and inter-relationships for asset(s) 430 contained in release(s) 400. ASSET_LIST_ ITEM 461 defines, for example, the position of asset 430 within release 410 and identifies the asset sequence within release 410. There may be an ASSET_LIST_ITEM 461 associated with each asset 430 within release 410. DUR 462 enables duration overrides for asset 430 to be specified within NAV_VIEW 460, for example, if a user wishes to play only a portion rather than an entire track.

ASSET_REF 463 contains, for example, a reference pointer to the description of asset 430 and its delivery attributes within message 400. LNKD_ASSET 464 associates asset 430 with other assets featured in release 410 (*e.g.,* an image associated to one particular recording). ASSET_REF 465 contains, for example, a reference pointer to the description of the linked asset 430 and its delivery attributes within message 400.

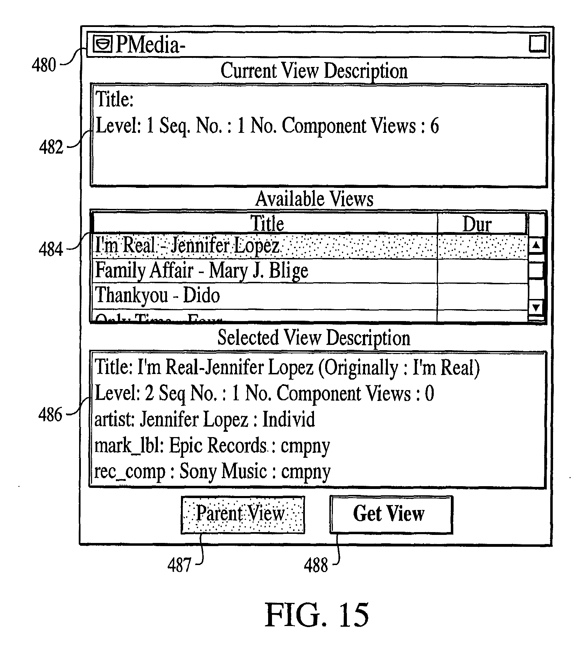

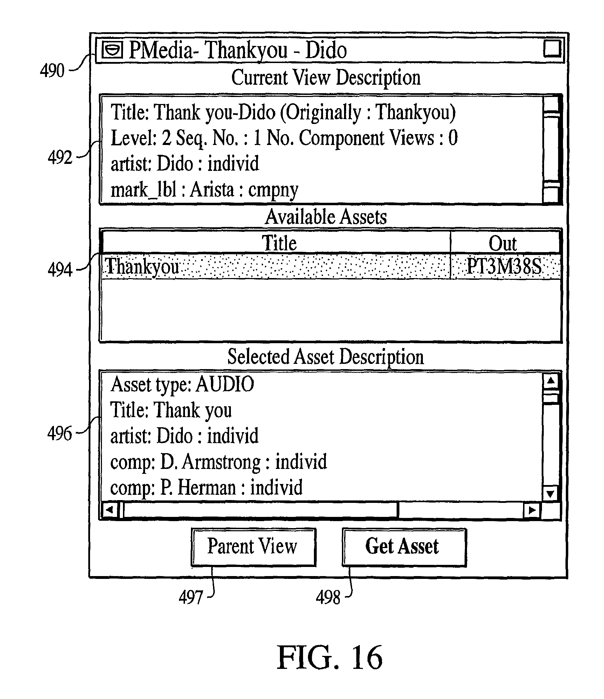

Additional optional navigational views may exist within a navigational view, as shown by NAV_VIEW 470. Navigational views can be organized hierarchically to describe complex releases where there are sub-groups of assets defined (*e.g.*, in a CD box set). FIGURES 15 and 16 illustrate examples of navigational views for a release.

In FIGURE 15, navigational view dialogue box 480 has title bar 482, which contains the display title for the navigational view currently being viewed. Available views table 484 shows assets and/or views, available as child views (*e.g.*, NAV_VIEW 470) of the current view (*e.g.*, NAV_VIEW 460). Selected view description bar 486 displays details for the currently selected asset and/or view in Available view table 484. If the view currently being displayed is the child of another view, parent view button 487 allows the user to access the parent navigational view. If the current navigational view does not have a parent, parent view button 487 is disabled. Get view button 488 changes the navigational view displayed to the currently selected navigational view. If assets are being displayed, the button text preferably will read "Get Asset" and the button will initiate download and playback of the currently selected asset.

In FIGURE 16, navigational view dialogue box 490 shows only assets. Navigational view dialogue box 490 functions similarly to navigational view dialogue box 480. Title bar 492 displays details associated with the currently selected view. Available assets list 494 displays the assets that are accessible through the current view. Selected asset description bar 496 displays the details of the currently selected asset. Navigational view dialogue box 490 also has parent view button 497 and get asset button 498.

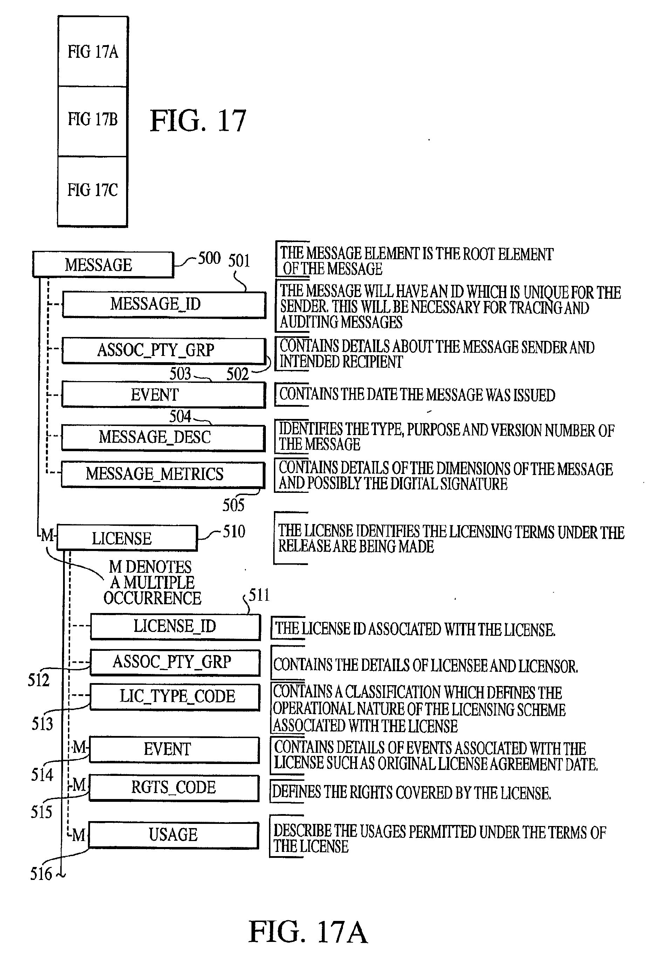

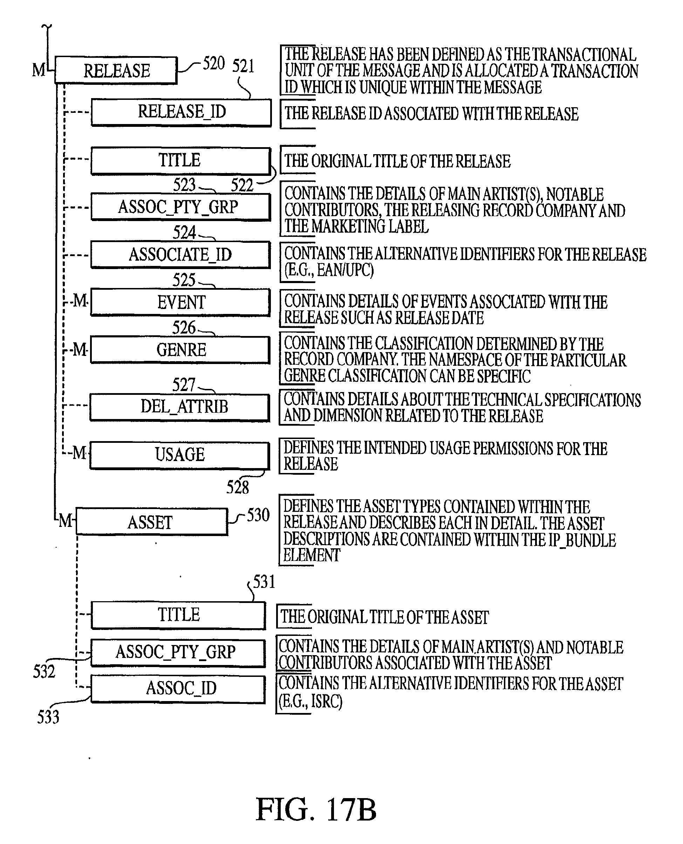

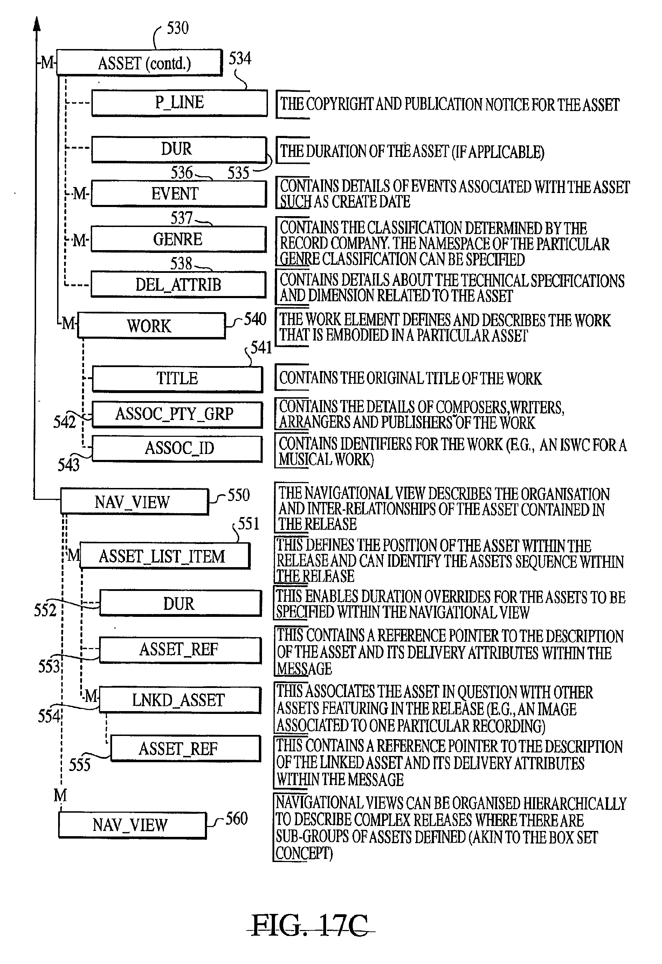

FIGURES 17A, 17B, and 17C illustrate an example of fields in a transaction message for a release notification licensing transaction between, for example, a record company and a society. As seen in FIGURE 17A, message 500 supports, for example, the notification of a release from Record Company to a licensing Society under a pre-arranged licensing agreement. Message 500 contains details regarding a pre-defined licensing agreement and details regarding two releases: a multimedia product and a simple single-track product. The multimedia product contains, for example, two sound recording, each embodying one musical work, and two images. Message 500 contains a group of descriptive fields similar to the descriptive fields described with regard to message 350 and message 400: MESSAGE_ID 501; ASSOC_PTY_GRP 502; EVENT 503; MESSAGE_DESC 504; and MESSAGE_METRICS 505.

Licence 510, which optionally may be a multiply occurring field, identifies the licensing terms under which the release(s) is being made. License 510 has a unique LICENSE_ID 511, as described above. ASSOC_PTY_GRP 512 contains the details of the licensee and licensor, for example, the licensee Record Company and the licensor Society. LIC_TYPE_CODE 513 contains, for example, a classification, which defines the operational nature of the licensing scheme associated with the license. EVENT 525 contains details of events associate with license 510, for example, the original license agreement date. RGTS_CODE 515 defines, for example, the rights covered by the license, e.g., mechanical rights, synchronization rights, and/or performing rights. USAGE 516 describes the usages permitted under license 510.

The terms and conditions of license 510 cover release(s) 520. Release 520 contains information in sub-fields as described with respect to release(s) 410 (FIGURE 14A). The information regarding release 520 includes, for example: RELEASE_ID 521; TITLE 522; ASSOC_PTY_GRP 523; ASSOC_ID 524; EVENT 525; GENRE 526; DEL_ATTRIB 527; and USAGE 528.

The asset(s) contained within release(s) 520 are described in the field asset 530 and its sub-fields, as seen in FIGURES 17A-17C. As described with respect to asset(s) 430 (FIGURES 14A-14C), the information regarding asset (s) 530 include, for example: TITLE 531; ASSOC_PTY_GRP 532; ASSOC_ID 533; C_LINE & P_LINE 534; DUR 535; EVENT 536; GENRE 537; and DEL_ATTRIB 538.

The works included in each asset 530, for example, the musical works embodied in each sound recording, are described in field work(s) 540. TITLE 541 denotes the original title of the work. ASSOC_PTY_GRP 542 contains the details of, for example, the composers, writers, arrangers, and publishers of work 540. ASSOC_ID contains, for example, identifiers for work 540 (e.g., ISWC for a musical work).

NAV_VIEW 550 describes the organization and inter-relationships of asset(s) 530 contained within release(s) 520. As described with respect to NAV_VIEW 460 (FIGURE 14B), information regarding the navigational viewing feature includes, for example: ASSET_LIST_ITEM 551; DUR 552; ASSET_REF 553; LNK_ASSET 554; and ASSET_REF 555. NAV_VIEW 560 may also include subordinate navigational views, NAV_VIEW 560.

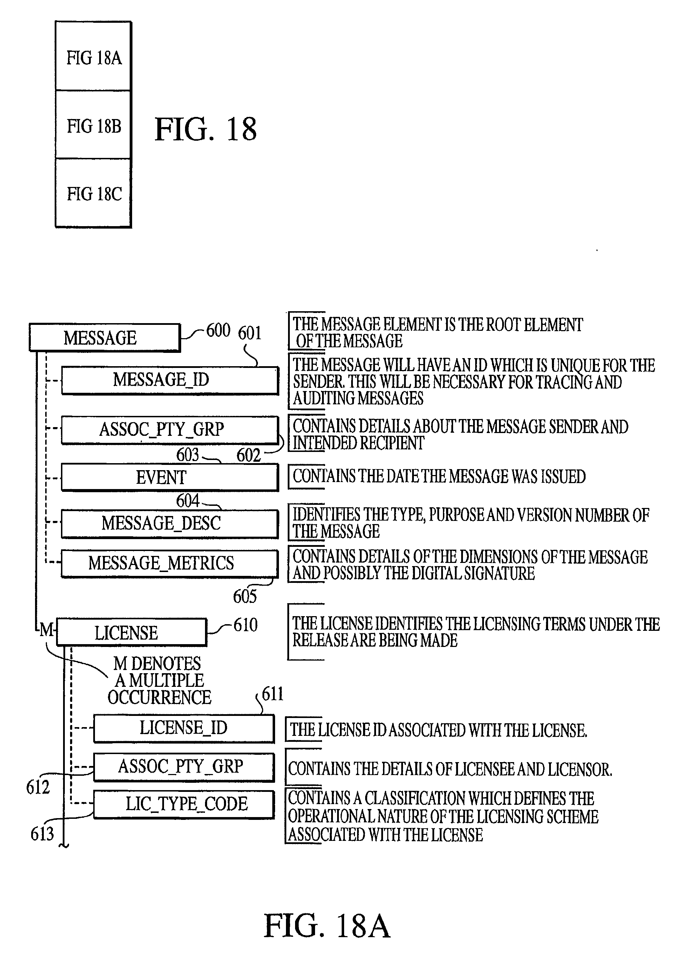

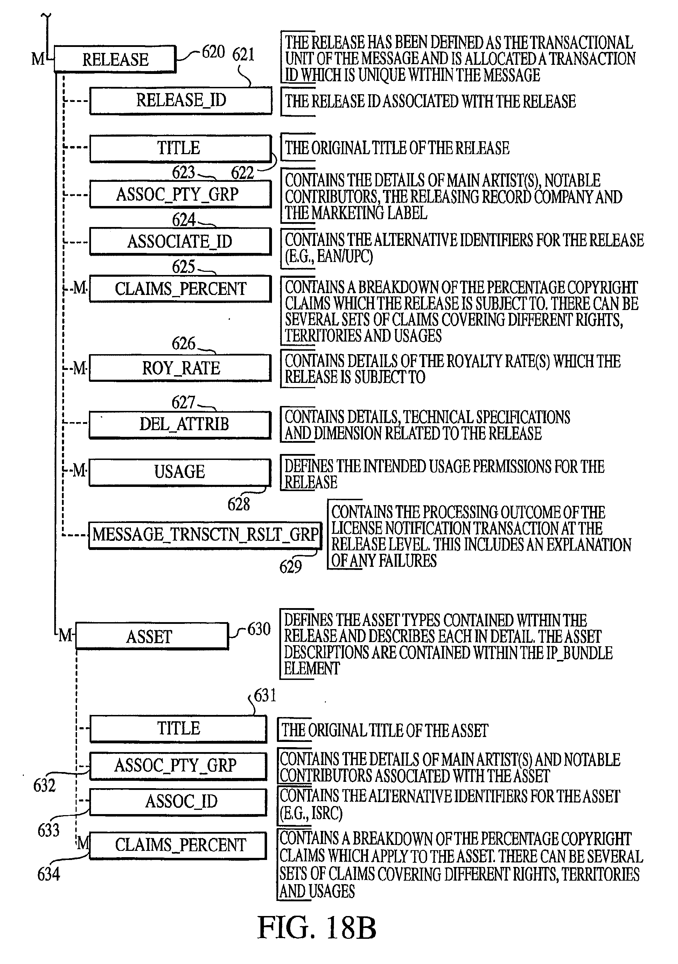

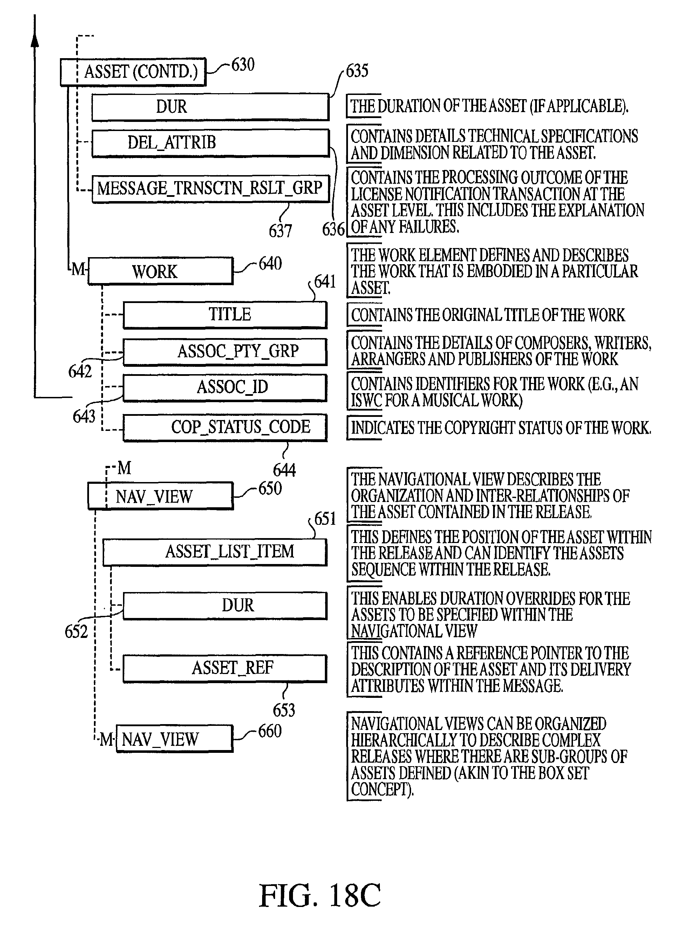

FIGURES 18A, 18B, and 18C illustrate an example of fields in a transaction message for a release confirmation licensing transaction from a society to a record company. As seen in FIGURE 18A, message 600 supports, for example, the confirmation of the licensing information for a release. Message 600 is sent by a Society to a Record Company and the confirmation is made under the terms of a pre-arranged licensing agreement. Message 600 identifies, for example, a pre-defined licensing agreement and the licensing details regarding two releases: a multimedia product, which contains two sound recording, each embodying one musical work, and two images; and a simple single-track product. Message 600 contains a group of descriptive fields similar to the descriptive fields described with regard to message 350, message 400, and message 500: MESSAGE_ID 601; ASSOC_PTY_GRP 602; EVENT 603; MESSAGE_DESC 604; and MESSAGE_METRICS 605.

License 610, which may be a multiply occurring field, identifies the licensing terms under which the release(s) is being made. As described with respect to license 510 (FIGURE 17A), the information that describes license 610 includes, for example: LICENSE_ID 611; ASSOC_PTY_GRP 612; and LIC_TYPE_CODE 513.

The terms and conditions of license 610 cover release(s) 620. Release 620 contains information in sub-fields as described with respect to release(s) 410 (FIGURE 14A) and release(s) 510 (FIGURE 17A). The information regarding release 620 includes, for example: RELEASE_ID 621; TITLE 622; ASSOC_PTY_GRP 623; ASSOC_ID 624; DEL_ATTRIB 627; and USAGE 628. In this example, release 620 also includes CLAIMS_PERCENT 625, which contains, for example, a breakdown of the percentage copyright claims to which release 620 is subject. There may be several sets of claims covering different right, territories, and usages. ROY_RATE 626 contains details of the royalty rate(s) to which release 620 is subject. MESSAGE_TRNSCTN_RSLT_GRP 629 contains, for example, the processing outcome for the license notification transaction at the release level, including an explanation of any failures.

The asset(s) contained within release(s) 620 are described in the field asset 630 and its sub-fields, as seen in FIGURES 18A-18C. As described with respect to asset(s) 430 (FIGURES 14A-14C) and asset(s) 530 (FIGURES 17A-17C), the information regarding asset(s) 630 include, for example: TITLE 631; ASSOC_PTY_GRP 632; ASSOC_ID 633; DUR 635; and DEL_ATTRIB 636. In this example, asset 630 also includes CLAIMS_PERCENT 634, which contains, for example, a breakdown of the percentage copyright claims, which apply to asset 630. There may be several sets of claims covering different rights, territories, and usages. MESSAGE_TRNSCTN_RSLT_GRP 637 contains, for example, the processing outcome of the license notification transaction at the asset level, including the explanation for any failures.

Work(s) 640 defines and describes the work(s) that is embodied in a particular asset 630. As with respect to work 530 (FIGURE 17B), work 640 contains information including, for example: TITLE 641; ASSOC_PTY_GRP 642; and ASSOC_ID 643. In this example, work 640 also includes COP_STATUS_CODE 644, which indicates the copyright status of work 640.

NAV_VIEW 650 describes the organization and inter-relationships of asset(s) 630 contained within release(s) 620. As described with respect to NAV_VIEW 460 (FIGURE 14B) and NAV_VIEW 550 (FIGURE 17B), information regarding the navigational viewing feature includes, for example: ASSET_LIST_ITEM 651; DUR 652; and ASSET_REF 653. NAV_VIEW 650 may also include subordinate navigational views, NAV_VIEW 660.

### III. Information Architecture

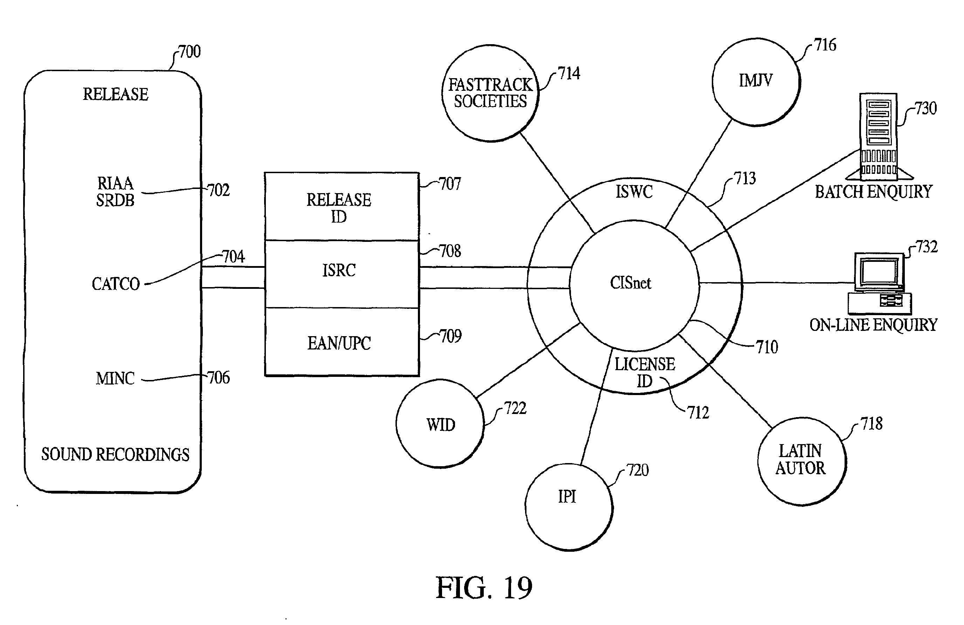

FIGURE 19 is a diagram of an information architecture to support access to release and license metadata, in accordance with one embodiment of the invention when the data comprises musical works associated with the Recording Industry. Entities responsible for releases, such as record companies, preferably maintain repositories 700 for release metadata. For example, RIAA/SRDB 702 maintains repositories in the US, CatCo 704 maintains repositories in the United Kingdom, and MINC 706 maintains repositories in Japan.

Entities responsible for licensing, such as societies, preferably maintain a distributed network, for example, CISnet 710, to provide access to information regarding musical works. Societies responsible for licensing and maintaining CISnet 710 include, for example: FastTrack 714; International Music Joint Venture ("IMJV") 716; Latin Autor 718; Interest Party Identifier ("IPI") 720; and **WID** 722. In another embodiment, an extension to CISnet 710 is used to provide a repository for license information regarding those musical works.

Access to release information in repositories 700, may be accessed using release ID 707, as described above, or through some alternate means of identification, for example, ISRC 708, and/or EAN/UPC 709. Access to license information through CISnet 710 and/or some additional repository, may be accessed using license ID 712, as described above, or through some alternate means of identification, for example, ISWC 713.

Access to release information stored in repositories 700 may be achieved through CISnet 710 using a batch enquiry 730 and/or an on-line enquiry 732. Alternatively, access to release information may be achieved by accessing repositories 700 directly. Access to license information through CISnet 710 may also be achieved using a batch enquiry 730 and/or an on-line enquiry 732. If license information is being stored in some additional repository, access may be achieved through CISnet 710, or alternatively to the additional repository directly.

The open network architecture of CISnet 710 allows for repositories 700, for example, to become additional "nodes," and therefore, to provide societies access to information about releases and/or sound recordings. Similarly, CISnet 710 provides the means for record companies to access metadata regarding musical works.

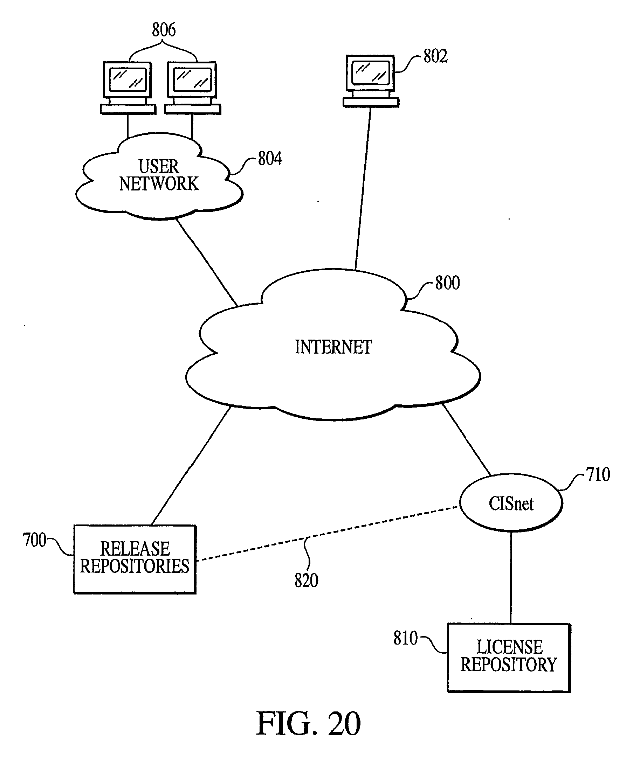

FIGURE 20 is a diagram of an example of a communications network used to access release and/or license metadata, such as Internet 800. Users can access the data using a single user terminal 802, e.g., a customer downloading a electronic music file to a home computer. Alternately, a user in a network environment can access the data using user network 804 and networked user terminal 806, *e.g.,* in a local area network environment.

As described above, release data resides in repositories 700 and license data can be accessed using CISnet 710. The actual license metadata may reside in some repository, for example, license repository 810. In one embodiment, release data can be accessed directly from repositories 700. In another embodiment, release data can be access through CISnet 710 over link 820.

The many features and advantages of the invention are apparent from the detailed specification, and thus, it is intended by the appended claims to cover all such features and advantages of the invention, which fall within the true spirit and scope of the invention. Further, since numerous modifications and variations will readily occur to those skilled in the art, it is not desired to limit the invention to the exact construction illustrated and described, and accordingly, all suitable modifications and equivalence may be resorted to, falling within the scope of the invention.

## Appendix A Music Industry Integrated Identifiers Project - XML Schema for Example Messages
Schema MI3P schema.xsd

Elements

ADJMNT CODE

ASSET

ASSOC ID

ASSOC PTY GRP

CLAIMS PERCENT

CMNTS

CMPSIT TYPE CODE

COMM AMNT

CONTENT CLASS

COP STATUS

COPY PRTCT FLG

CURR CODE

CURR CONVRSN

DEL ATTRIB

DIST CHAN CODE

DUR

END USER TYPE

EVENT

EXT LNK

FILE FRMT CODE

FRMT

GENRE

INST VCL CODE

INSTRMNT

LANG CODE

LICENCE

MESSAGE

MESSAGE TRNSCTN RSLT GRP

NAV VIEW

PRICE

PTY OWNSHP

RELEASE

RELTD ITEM

RGTS CODE

ROY AMNT

ROY AMNT VALUE

ROY RATE

RPT PERIOD DURATION

RPT PERIOD END

RPT PERIOD START

SCHEMA COMP LNK

TERR

TITLE

USAGE

**Music Industry Integrated Identifiers Project  -  XML Schema for Example Messages**

USAGE QTY

WORK

## element ADJMNT_CODE

| diagram | |
|---|---|
| type | restriction of xsd:string |
| used by | elements   USAGE QTY/ADJMNT QTY ROY RATE/RATE ADJMNT ROY AMNT/ROY ADJMNT |
| facets | enumeration   PKG<br>enumeration   PROMO<br>enumeration   ADVANCE<br>enumeration   RETURNS<br>enumeration   RSRVE_AGST_RETRN |
| source | `<xsd:element name="ADJMNT_CODE">`<br>`<xsd:simpleType>`<br>`<xsd:restriction base="xsd:string">`<br>`<xsd:enumeration value="PKG"/>`<br>`<xsd:enumeration value="PROMO"/>`<br>`<xsd:enumeration value="ADVANCE"/>`<br>`<xsd:enumeration value="RETURNS"/>`<br>`<xsd:enumeration value="RSRVE_AGST_RETRN"/>`<br>`</xsd:restriction>`<br>`</xsd:simpleType>`<br>`</xsd:element>` |

**Music Industry Integrated Identifiers Project   -   XML Schema for Example Messages**

element **ASSET**

| diagram | |
|---|---|

**Music Industry Integrated Identifiers Project  -  XML Schema for Example Messages**

| children | TITLE ASSOC_PTY_GRP ASSOC_ID COP_STATUS CLAIMS_PERCENT ROY_RATE ROY_AMNT P_LINE C_LINE DUR EVENT GENRE INST_VCL_CODE CMPSIT_TYPE_CODE LANG_CODE COPY_PRTCT_FLG CONTENT_CLASS CMNTS MXD_MEDIA_FLG EXT_LNK RELTD_ITEM DEL_ATTRIB FTRD_BCKGND_CODE MESSAGE_TRNSCTN_RSLT_GRP SCHEMA_COMP_LNK | | | |
|---|---|---|---|---|
| used by | elements RELEASE/IP_BUNDLE/ASSET_DESC SCHEMA_COMP_LNK | | | |
| attributes | Name | Type | Use | Value |
| | INTERNAL_REF_ID | xsd:ID | optional | |
| | ASSET_TYPE_CODE | xsd:string | required | |
| | SEQ_NBR | xsd:integer | optional | |
| | MESSAGE_TRNSCTN_ID | xsd:ID | optional | |
| source | ```xml
<xsd:element name="ASSET">
  <xsd:complexType>
    <xsd:sequence>
      <xsd:element ref="TITLE" minOccurs="0"/>
      <xsd:element ref="ASSOC_PTY_GRP" minOccurs="0"/>
      <xsd:element ref="ASSOC_ID" minOccurs="0" maxOccurs="unbounded"/>
      <xsd:element ref="COP_STATUS" minOccurs="0"/>
      <xsd:element ref="CLAIMS_PERCENT" minOccurs="0" maxOccurs="unbounded"/>
      <xsd:element ref="ROY_RATE" minOccurs="0" maxOccurs="unbounded"/>
      <xsd:element ref="ROY_AMNT" minOccurs="0" maxOccurs="unbounded"/>
      <xsd:element name="P_LINE" minOccurs="0"/>
      <xsd:element name="C_LINE" minOccurs="0"/>
      <xsd:element ref="DUR" minOccurs="0"/>
      <xsd:element ref="EVENT" minOccurs="0" maxOccurs="unbounded"/>
      <xsd:element ref="GENRE" minOccurs="0"/>
      <xsd:element ref="INST_VCL_CODE" minOccurs="0"/>
      <xsd:element ref="CMPSIT_TYPE_CODE" minOccurs="0"/>
      <xsd:element ref="LANG_CODE" minOccurs="0"/>
      <xsd:element ref="COPY_PRTCT_FLG" minOccurs="0"/>
      <xsd:element ref="CONTENT_CLASS" minOccurs="0"/>
      <xsd:element ref="CMNTS" minOccurs="0"/>
      <xsd:element name="MXD_MEDIA_FLG" type="xsd:boolean" minOccurs="0"/>
      <xsd:element ref="EXT_LNK" minOccurs="0" maxOccurs="unbounded"/>
      <xsd:element ref="RELTD_ITEM" minOccurs="0"/>
      <xsd:element ref="DEL_ATTRIB" minOccurs="0"/>
      <xsd:element name="FTRD_BCKGND_CODE" minOccurs="0">
        <xsd:simpleType>
          <xsd:restriction base="xsd:string">
            <xsd:enumeration value="FTRD"/>
            <xsd:enumeration value="BCKGND"/>
          </xsd:restriction>
        </xsd:simpleType>
      </xsd:element>
      <xsd:element ref="MESSAGE_TRNSCTN_RSLT_GRP" minOccurs="0"/>
      <xsd:element ref="SCHEMA_COMP_LNK" minOccurs="0" maxOccurs="unbounded"/>
    </xsd:sequence>
    <xsd:attribute ref="INTERNAL_REF_ID" use="optional"/>
    <xsd:attribute ref="ASSET_TYPE_CODE" use="required"/>
    <xsd:attribute name="SEQ_NBR" type="xsd:integer" use="optional"/>
    <xsd:attribute ref="MESSAGE_TRNSCTN_ID"/>
  </xsd:complexType>
</xsd:element>
``` | | | |

## element ASSET/FTRD_BCKGND_CODE

| diagram | FTRD_BCKGND_CODE |
|---|---|

Music Industry Integrated Identifiers Project - XML Schema for Example Messages

| type | restriction of xsd:string |
|---|---|
| facets | enumeration FTRD<br>enumeration BCKGND |
| source | `<xsd:element name="FTRD_BCKGND_CODE" minOccurs="0">`<br>  `<xsd:simpleType>`<br>    `<xsd:restriction base="xsd:string">`<br>      `<xsd:enumeration value="FTRD"/>`<br>      `<xsd:enumeration value="BCKGND"/>`<br>    `</xsd:restriction>`<br>  `</xsd:simpleType>`<br>`</xsd:element>` |

·element **ASSOC_ID**

| diagram | |
|---|---|
| children | RELEASE_ID EAN_UPC ICPN JAN LOCAL_CAT_NBR LOCAL_CAT_PREF LOCAL_CAT_SUFF ISRC ISWC ISBN ISMN ISSN ISAN V_ISAN ISTC UPID PROP OTH TAX_ID |
| used by | elements  ASSET NAV_VIEW RELEASE RELTD_ITEM WORK |
| source | `<xsd:element name="ASSOC_ID">` |

```
<xsd:complexType>
 <xsd:choice maxOccurs="unbounded">
  <xsd:element name="RELEASE_ID">
   <xsd:complexType>
    <xsd:simpleContent>
     <xsd:extension base="xsd:string">
      <xsd:attribute ref="ALT_ID_FLAG"/>
      <xsd:attribute ref="MOD_ID_FLAG"/>
     </xsd:extension>
    </xsd:simpleContent>
   </xsd:complexType>
  </xsd:element>
  <xsd:element name="EAN_UPC">
   <xsd:complexType>
    <xsd:simpleContent>
     <xsd:extension base="xsd:string">
      <xsd:attribute ref="ALT_ID_FLAG"/>
      <xsd:attribute ref="MOD_ID_FLAG"/>
     </xsd:extension>
    </xsd:simpleContent>
   </xsd:complexType>
  </xsd:element>
  <xsd:element name="ICPN">
   <xsd:complexType>
    <xsd:simpleContent>
     <xsd:extension base="xsd:string">
      <xsd:attribute ref="ALT_ID_FLAG"/>
      <xsd:attribute ref="MOD_ID_FLAG"/>
     </xsd:extension>
    </xsd:simpleContent>
   </xsd:complexType>
  </xsd:element>
  <xsd:element name="JAN">
   <xsd:complexType>
    <xsd:simpleContent>
     <xsd:extension base="xsd:string">
      <xsd:attribute ref="ALT_ID_FLAG"/>
      <xsd:attribute ref="MOD_ID_FLAG"/>
     </xsd:extension>
    </xsd:simpleContent>
   </xsd:complexType>
  </xsd:element>
  <xsd:element name="LOCAL_CAT_NBR">
   <xsd:complexType>
    <xsd:simpleContent>
     <xsd:extension base="xsd:string">
      <xsd:attribute ref="ALT_ID_FLAG"/>
      <xsd:attribute ref="MOD_ID_FLAG"/>
     </xsd:extension>
    </xsd:simpleContent>
   </xsd:complexType>
  </xsd:element>
  <xsd:element name="LOCAL_CAT_PREF">
   <xsd:complexType>
    <xsd:simpleContent>
     <xsd:extension base="xsd:string">
      <xsd:attribute ref="ALT_ID_FLAG"/>
      <xsd:attribute ref="MOD_ID_FLAG"/>
     </xsd:extension>
```

23

**Music Industry Integrated Identifiers Project  -  XML Schema for Example Messages**

```
            </xsd:simpleContent>
          </xsd:complexType>
        </xsd:element>
        <xsd:element name="LOCAL_CAT_SUFF">
          <xsd:complexType>
            <xsd:simpleContent>
              <xsd:extension base="xsd:string">
                <xsd:attribute ref="ALT_ID_FLAG"/>
                <xsd:attribute ref="MOD_ID_FLAG"/>
              </xsd:extension>
            </xsd:simpleContent>
          </xsd:complexType>
        </xsd:element>
        <xsd:element name="ISRC">
          <xsd:complexType>
            <xsd:simpleContent>
              <xsd:extension base="xsd:string">
                <xsd:attribute ref="ALT_ID_FLAG"/>
                <xsd:attribute ref="MOD_ID_FLAG"/>
              </xsd:extension>
            </xsd:simpleContent>
          </xsd:complexType>
        </xsd:element>
        <xsd:element name="ISWC">
          <xsd:complexType>
            <xsd:simpleContent>
              <xsd:extension base="xsd:string">
                <xsd:attribute ref="ALT_ID_FLAG"/>
                <xsd:attribute ref="MOD_ID_FLAG"/>
              </xsd:extension>
            </xsd:simpleContent>
          </xsd:complexType>
        </xsd:element>
        <xsd:element name="ISBN">
          <xsd:complexType>
            <xsd:simpleContent>
              <xsd:extension base="xsd:string">
                <xsd:attribute ref="ALT_ID_FLAG"/>
                <xsd:attribute ref="MOD_ID_FLAG"/>
              </xsd:extension>
            </xsd:simpleContent>
          </xsd:complexType>
        </xsd:element>
        <xsd:element name="ISMN">
          <xsd:complexType>
            <xsd:simpleContent>
              <xsd:extension base="xsd:string">
                <xsd:attribute ref="ALT_ID_FLAG"/>
                <xsd:attribute ref="MOD_ID_FLAG"/>
              </xsd:extension>
            </xsd:simpleContent>
          </xsd:complexType>
        </xsd:element>
        <xsd:element name="ISSN">
          <xsd:complexType>
            <xsd:simpleContent>
              <xsd:extension base="xsd:string">
                <xsd:attribute ref="ALT_ID_FLAG"/>
                <xsd:attribute ref="MOD_ID_FLAG"/>
```

```
        </xsd:extension>
       </xsd:simpleContent>
      </xsd:complexType>
     </xsd:element>
     <xsd:element name="ISAN">
      <xsd:complexType>
       <xsd:simpleContent>
        <xsd:extension base="xsd:string">
         <xsd:attribute ref="ALT_ID_FLAG"/>
         <xsd:attribute ref="MOD_ID_FLAG"/>
        </xsd:extension>
       </xsd:simpleContent>
      </xsd:complexType>
     </xsd:element>
     <xsd:element name="V_ISAN">
      <xsd:complexType>
       <xsd:simpleContent>
        <xsd:extension base="xsd:string">
         <xsd:attribute ref="ALT_ID_FLAG"/>
         <xsd:attribute ref="MOD_ID_FLAG"/>
        </xsd:extension>
       </xsd:simpleContent>
      </xsd:complexType>
     </xsd:element>
     <xsd:element name="ISTC">
      <xsd:complexType>
       <xsd:simpleContent>
        <xsd:extension base="xsd:string">
         <xsd:attribute ref="ALT_ID_FLAG"/>
         <xsd:attribute ref="MOD_ID_FLAG"/>
        </xsd:extension>
       </xsd:simpleContent>
      </xsd:complexType>
     </xsd:element>
     <xsd:element name="UPID">
      <xsd:complexType>
       <xsd:simpleContent>
        <xsd:extension base="xsd:string">
         <xsd:attribute ref="ALT_ID_FLAG"/>
         <xsd:attribute ref="MOD_ID_FLAG"/>
        </xsd:extension>
       </xsd:simpleContent>
      </xsd:complexType>
     </xsd:element>
     <xsd:element name="PROP">
      <xsd:complexType>
       <xsd:simpleContent>
        <xsd:extension base="xsd:string">
         <xsd:attribute ref="ALT_ID_FLAG"/>
         <xsd:attribute ref="MOD_ID_FLAG"/>
        </xsd:extension>
       </xsd:simpleContent>
      </xsd:complexType>
     </xsd:element>
     <xsd:element name="OTH">
      <xsd:complexType>
       <xsd:simpleContent>
        <xsd:extension base="xsd:string">
         <xsd:attribute ref="ALT_ID_FLAG"/>
```

2000

```
<xsd:attribute ref="MOD_ID_FLAG"/>
</xsd:extension>
</xsd:simpleContent>
</xsd:complexType>
</xsd:element>
<xsd:element name="TAX_ID" type="xsd:string"/>
</xsd:choice>
</xsd:complexType>
</xsd:element>
```

## element ASSOC_ID/<any of the child elements>

| type | extension of xsd:string | | | |
|---|---|---|---|---|
| attributes | Name | Type | Use | Value |
| | ALT_ID_FLAG | xsd:boolean | | |
| | MOD_ID_FLAG | xsd:boolean | | |
| source | `<xsd:element name="RELEASE_ID">`<br>`<xsd:complexType>`<br>`<xsd:simpleContent>`<br>`<xsd:extension base="xsd:string">`<br>`<xsd:attribute ref="ALT_ID_FLAG"/>`<br>`<xsd:attribute ref="MOD_ID_FLAG"/>`<br>`</xsd:extension>`<br>`</xsd:simpleContent>`<br>`</xsd:complexType>`<br>`</xsd:element>` | | | |

## element ASSOC_PTY_GRP

| diagram | |
|---|---|
| children | ASSOC_PTY |
| used by | elements  ASSET EVENT LICENCE MESSAGE MESSAGE/MESSAGE ACKNWLDGE NAV VIEW RELEASE RELTD ITEM WORK |
| source | `<xsd:element name="ASSOC_PTY_GRP">`<br>`<xsd:complexType>`<br>`<xsd:sequence>`<br>`<xsd:element name="ASSOC_PTY" maxOccurs="unbounded">`<br>`<xsd:complexType>`<br>`<xsd:sequence>`<br>`<xsd:element name="FULLNAME" type="xsd:string" minOccurs="0"/>`<br>`<xsd:element name="FIRSTNAME" type="xsd:string" minOccurs="0"/>`<br>`<xsd:element name="LASTNAME" type="xsd:string" minOccurs="0"/>`<br>`<xsd:element name="DISP_NAME" type="xsd:string" minOccurs="0"/>`<br>`<xsd:element name="SORT_NAME" type="xsd:string" minOccurs="0"/>`<br>`<xsd:element name="ADDRESS" type="xsd:string" minOccurs="0"/>`<br>`<xsd:element name="PTY_ROLE" maxOccurs="unbounded">`<br>`<xsd:complexType>`<br>`<xsd:sequence>`<br>`<xsd:element name="PTY_ROLE_CODE">`<br>`<xsd:simpleType>`<br>`<xsd:restriction base="xsd:string">`<br>`<xsd:enumeration value="COMP"/>`<br>`<xsd:enumeration value="AUTH"/>`<br>`<xsd:enumeration value="ARR"/>`<br>`<xsd:enumeration value="ADPT"/>` |

**Music Industry Integrated Identifiers Project — XML Schema for Example Messages**

```
          <xsd:enumeration value="PUBL"/>
          <xsd:enumeration value="PUBL_INCOME_PART"/>
          <xsd:enumeration value="SUBST_PUBL"/>
          <xsd:enumeration value="SUB_AUTH"/>
          <xsd:enumeration value="SUBB_ARR"/>
          <xsd:enumeration value="TRAN"/>
          <xsd:enumeration value="ARTIST"/>
          <xsd:enumeration value="BND_MBR"/>
          <xsd:enumeration value="REC_ENG"/>
          <xsd:enumeration value="PROD"/>
          <xsd:enumeration value="MAST"/>
          <xsd:enumeration value="RE_MAST"/>
          <xsd:enumeration value="EXEC_PROD"/>
          <xsd:enumeration value="CO_EXEC_PROD"/>
          <xsd:enumeration value="ASST_EXEC_PROD"/>
          <xsd:enumeration value="CONDUCT"/>
          <xsd:enumeration value="ORCH"/>
          <xsd:enumeration value="MARK_LBL"/>
          <xsd:enumeration value="REC_COMP"/>
          <xsd:enumeration value="BRDCSTER"/>
          <xsd:enumeration value="PHTGRPHR"/>
          <xsd:enumeration value="DSGN_ARTIST"/>
          <xsd:enumeration value="SCRPT_WRTR"/>
          <xsd:enumeration value="EDTR"/>
          <xsd:enumeration value="DIRCTR"/>
          <xsd:enumeration value="ACTOR"/>
          <xsd:enumeration value="CHARCTR"/>
          <xsd:enumeration value="SPNSR"/>
          <xsd:enumeration value="SENDER"/>
          <xsd:enumeration value="RECVR"/>
          <xsd:enumeration value="FWDR"/>
          <xsd:enumeration value="RGTS_OWN"/>
          <xsd:enumeration value="PAYEE"/>
          <xsd:enumeration value="LICENSOR"/>
          <xsd:enumeration value="LICENSEE"/>
          <xsd:enumeration value="SOCIETY"/>
          <xsd:enumeration value="NOTIF"/>
          <xsd:enumeration value="CSTMR"/>
          <xsd:enumeration value="AFFIL"/>
          <xsd:enumeration value="MANUF"/>
          <xsd:enumeration value="DISTRIB"/>
          <xsd:enumeration value="PACKAG"/>
          <xsd:enumeration value="IMPRTR"/>
          <xsd:enumeration value="EXPRTR"/>
          <xsd:enumeration value="RETLR"/>
          <xsd:enumeration value="DRM_PROV"/>
          <xsd:enumeration value="DSP"/>
          <xsd:enumeration value="UNKN"/>
        </xsd:restriction>
      </xsd:simpleType>
    </xsd:element>
    <xsd:element name="ROLE_SUB_CAT" minOccurs="0" maxOccurs="unbounded">
      <xsd:complexType>
        <xsd:sequence>
          <xsd:element name="SUB_CAT_CODE" type="xsd:string"/>
          <xsd:element name="SUB_CAT_DESC" type="xsd:string"/>
        </xsd:sequence>
        <xsd:attribute name="MDATA_NS" use="required">
          <xsd:simpleType>
```

27

Music Industry Integrated Identifiers Project  -  XML Schema for Example Messages

```
      <xsd:restriction base="xsd:string">
       <xsd:enumeration value="BIEM"/>
       <xsd:enumeration value="M3IP_SCHEMA"/>
       <xsd:enumeration value="CISAC"/>
       <xsd:enumeration value="RIAA_SRDB"/>
       <xsd:enumeration value="CATCO"/>
       <xsd:enumeration value="ONIX"/>
       <xsd:enumeration value="OPEN_SW_DESC_ARCH"/>
       <xsd:enumeration value="MPEG_7"/>
       <xsd:enumeration value="ISO_639"/>
      </xsd:restriction>
     </xsd:simpleType>
    </xsd:attribute>
    <xsd:attribute name="MDATA_NS_VER" type="xsd:string" use="required"/>
   </xsd:complexType>
  </xsd:element>
 </xsd:sequence>
</xsd:complexType>
</xsd:element>
<xsd:element name="FTRD_ARTIST_FLG" type="xsd:boolean" minOccurs="0"/>
<xsd:element ref="TERR" minOccurs="0"/>
<xsd:element name="PTY_TYPE">
 <xsd:simpleType>
  <xsd:restriction base="xsd:string">
   <xsd:enumeration value="INDIVID"/>
   <xsd:enumeration value="GROUP"/>
   <xsd:enumeration value="CMPNY"/>
  </xsd:restriction>
 </xsd:simpleType>
</xsd:element>
<xsd:element ref="PTY_OWNSHP" minOccurs="0" maxOccurs="unbounded"/>
<xsd:element name="SOC_AFFIL" minOccurs="0">
 <xsd:complexType>
  <xsd:sequence>
   <xsd:element name="SOC_NAME"/>
   <xsd:element name="MEMB_STATUS">
    <xsd:simpleType>
     <xsd:restriction base="xsd:string">
      <xsd:enumeration value="CURR_MEMB"/>
      <xsd:enumeration value="NON_MEMB"/>
     </xsd:restriction>
    </xsd:simpleType>
   </xsd:element>
  </xsd:sequence>
 </xsd:complexType>
</xsd:element>
<xsd:element ref="EXT_LNK" minOccurs="0"/>
<xsd:element name="PTY_ID" minOccurs="0" maxOccurs="unbounded">
 <xsd:complexType>
  <xsd:sequence>
   <xsd:choice>
    <xsd:element name="CAE"/>
    <xsd:element name="IPI_BASE_NBR"/>
    <xsd:element name="IPI_NAME_NBR"/>
    <xsd:element name="PPL_PERF_ID"/>
    <xsd:element name="IPN"/>
    <xsd:element name="CLL_COMP"/>
    <xsd:element name="SOCIETY_ID"/>
    <xsd:element name="PHONONET"/>
```

**Music Industry Integrated Identifiers Project  -   XML Schema for Example Messages**

```
        <xsd:element name="RIAJ_COMP"/>
        <xsd:element name="EMAIL_ADD"/>
        <xsd:element name="SOCIETY_ID"/>
        <xsd:element name="PROP"/>
        <xsd:element name="UNKN"/>
      </xsd:choice>
      <xsd:element ref="TERR" minOccurs="0"/>
    </xsd:sequence>
  </xsd:complexType>
</xsd:element>
<xsd:element ref="USAGE_QTY" minOccurs="0"/>
</xsd:sequence>
<xsd:attribute ref="SEQ_NBR">
  <xsd:simpleType>
    <xsd:restriction base="xsd:integer">
      <xsd:minInclusive value="1"/>
    </xsd:restriction>
  </xsd:simpleType>
</xsd:attribute>
</xsd:complexType>
</xsd:element>
</xsd:sequence>
</xsd:complexType>
</xsd:element>
```

element **ASSOC_PTY_GRP/ASSOC_PTY**

**Music Industry Integrated Identifiers Project - XML Schema for Example Messages**

| diagram | |
|---|---|
| children | FULLNAME FIRSTNAME LASTNAME DISP_NAME SORT_NAME ADDRESS PTY_ROLE FTRD_ARTIST_FLG TERR PTY_TYPE PTY_OWNSHP SOC_AFFIL EXT_LNK PTY_ID USAGE_QTY |

| attributes | Name | Type | Use | Value |
|---|---|---|---|---|
| | SEQ_NBR | xsd:Integer | required | |

### element ASSOC_PTY_GRP/ASSOC_PTY/PTY_ROLE

| diagram | |
|---|---|
| children | PTY_ROLE_CODE ROLE_SUB_CAT |

### element ASSOC_PTY_GRP/ASSOC_PTY/PTY_ROLE/PTY_ROLE_CODE

| diagram | |
|---|---|
| type | restriction of xsd:string |
| facets | enumeration COMP |
| | enumeration AUTH |
| | enumeration ARR |

**Music Industry Integrated Identifiers Project - XML Schema for Example Messages**

| | | |
|---|---|---|
| enumeration | ADPT |
| enumeration | PUBL |
| enumeration | PUBL_INCOME_PART |
| enumeration | SUBST_PUBL |
| enumeration | SUB_AUTH |
| enumeration | SUBB_ARR |
| enumeration | TRAN |
| enumeration | ARTIST |
| enumeration | BND_MBR |
| enumeration | REC_ENG |
| enumeration | PROD |
| enumeration | MAST |
| enumeration | RE_MAST |
| enumeration | EXEC_PROD |
| enumeration | CO_EXEC_PROD |
| enumeration | ASST_EXEC_PROD |
| enumeration | CONDUCT |
| enumeration | ORCH |
| enumeration | MARK_LBL |
| enumeration | REC_COMP |
| enumeration | BRDCSTER |
| enumeration | PHTGRPHR |
| enumeration | DSGN_ARTIST |
| enumeration | SCRPT_WRTR |
| enumeration | EDTR |
| enumeration | DIRCTR |
| enumeration | ACTOR |
| enumeration | CHARCTR |
| enumeration | SPNSR |
| enumeration | SENDER |
| enumeration | RECVR |
| enumeration | FWDR |
| enumeration | RGTS_OWN |
| enumeration | PAYEE |
| enumeration | LICENSOR |
| enumeration | LICENSEE |
| enumeration | SOCIETY |
| enumeration | NOTIF |
| enumeration | CSTMR |
| enumeration | AFFIL |
| enumeration | MANUF |
| enumeration | DISTRIB |
| enumeration | PACKAG |
| enumeration | IMPRTR |
| enumeration | EXPRTR |
| enumeration | RETLR |
| enumeration | DRM_PROV |

Music Industry Integrated Identifiers Project - XML Schema for Example Messages

| | enumeration | DSP |
|---|---|---|
| | enumeration | UNKN |

## element ASSOC_PTY_GRP/ASSOC_PTY/PTY_ROLE/ROLE_SUB_CAT

| diagram | | | | |
|---|---|---|---|---|
| children | SUB_CAT_CODE SUB_CAT_DESC | | | |
| attributes | Name | Type | Use | Value |
| | MDATA_NS | xsd:string | required | |
| | MDATA_NS_VER | xsd:string | required | |

## element ASSOC_PTY_GRP/ASSOC_PTY/PTY_TYPE

| diagram | |
|---|---|
| type | restriction of xsd:string |
| facets | enumeration INDIVID |
| | enumeration GROUP |
| | enumeration CMPNY |

## element ASSOC_PTY_GRP/ASSOC_PTY/SOC_AFFIL

| diagram | |
|---|---|
| children | SOC_NAME MEMB_STATUS |

## element ASSOC_PTY_GRP/ASSOC_PTY/SOC_AFFIL/MEMB_STATUS

| diagram | |
|---|---|
| type | restriction of xsd:string |
| facets | enumeration CURR_MEMB |
| | enumeration NON_MEMB |

**Music Industry Integrated Identifiers Project  -  XML Schema for Example Messages**

### element ASSOC_PTY_GRP/ASSOC_PTY/PTY_ID

| diagram | |
|---|---|
| children | CAE IPI_BASE_NBR IPI_NAME_NBR PPL_PERF_ID IPN CLL_COMP SOCIETY_ID PHONONET RIAJ_COMP EMAIL_ADD SOCIETY_ID PROP UNKN TERR |

Music Industry Integrated Identifiers Project - XML Schema for Example Messages

## element CLAIMS_PERCENT

| diagram | |
|---|---|
| children | CLAIM EXCPTN FLG RGTS CODE USAGE NBR AUDIO ASSETS CLMD LICENSOR CLAIM PM CLAIM DP CLAIM SAI PAI CLAIM SPKN WRD CLAIM BUY OUT CLAIM CLAIM VALID START DATE CLAIM VALID END DATE TERR |
| used by | elements   ASSET NAV VIEW RELEASE WORK |
| source | `<xsd:element name="CLAIMS_PERCENT">` |

```
<xsd:element name="CLAIMS_PERCENT">
 <xsd:complexType>
  <xsd:sequence>
   <xsd:element name="CLAIM_EXCPTN_FLG" type="xsd:boolean" minOccurs="0"/>
   <xsd:element ref="RGTS_CODE" maxOccurs="unbounded"/>
   <xsd:element ref="USAGE" minOccurs="0"/>
   <xsd:element name="NBR_AUDIO_ASSETS_CLMD" type="xsd:string" minOccurs="0"/>
   <xsd:element name="LICENSOR_CLAIM"/>
   <xsd:element name="PM_CLAIM"/>
   <xsd:element name="DP_CLAIM"/>
   <xsd:element name="SAI_PAI_CLAIM"/>
   <xsd:element name="SPKN_WRD_CLAIM" minOccurs="0"/>
   <xsd:element name="BUY_OUT_CLAIM" minOccurs="0"/>
   <xsd:element name="CLAIM_VALID_START_DATE" minOccurs="0">
    <xsd:complexType>
     <xsd:simpleContent>
      <xsd:extension base="xsd:date">
       <xsd:attribute ref="DATE_FRMT"/>
      </xsd:extension>
     </xsd:simpleContent>
    </xsd:complexType>
   </xsd:element>
   <xsd:element name="CLAIM_VALID_END_DATE" minOccurs="0">
```

**Music Industry Integrated Identifiers Project - XML Schema for Example Messages**

| | |
|---|---|
| | ```xml<br><xsd:complexType><br> <xsd:simpleContent><br>  <xsd:extension base="xsd:date"><br>   <xsd:attribute ref="DATE_FRMT"/><br>  </xsd:extension><br> </xsd:simpleContent><br></xsd:complexType><br></xsd:element><br><xsd:element ref="TERR" maxOccurs="unbounded"/><br></xsd:sequence><br></xsd:complexType><br></xsd:element><br>``` |
| used by | elements  <u>ASSET MESSAGE/MESSAGE ACKNWLDGE/ERROR DESC MESSAGE NAV VIEW RELEASE WORK</u> |
| source | `<xsd:element name="CMNTS"/>` |

## element CMPSIT_TYPE_CODE

| | |
|---|---|
| diagram | CMPSIT_TYPE_CODE |
| type | restriction of xsd:string |
| used by | elements  <u>ASSET WORK</u> |
| facets | enumeration  CMPSIT_OF_SMPLS<br>enumeration  WRK_MDLEY<br>enumeration  REC_MDLEY<br>enumeration  PTPOURRI<br>enumeration  UNSPEC_CMPSIT |
| source | ```xml<br><xsd:element name="CMPSIT_TYPE_CODE"><br> <xsd:simpleType><br>  <xsd:restriction base="xsd:string"><br>   <xsd:enumeration value="CMPSIT_OF_SMPLS"/><br>   <xsd:enumeration value="WRK_MDLEY"/><br>   <xsd:enumeration value="REC_MDLEY"/><br>   <xsd:enumeration value="PTPOURRI"/><br>   <xsd:enumeration value="UNSPEC_CMPSIT"/><br>  </xsd:restriction><br> </xsd:simpleType><br></xsd:element><br>``` |

## element COMM_AMNT

| | |
|---|---|
| diagram | COMM_AMNT — RGTS_CODE / USAGE / COMM_AMHT_VALUE / CURR_CODE / TERR |
| children | <u>RGTS_CODE USAGE COMM_AMNT_VALUE CURR_CODE TERR</u> |
| used by | elements  <u>MESSAGE/MESSAGE SUMMARY NAV VIEW RELEASE</u> |
| source | `<xsd:element name="COMM_AMNT">` |

**Music Industry Integrated Identifiers Project  -  XML Schema for Example Messages**

```
<xsd:complexType>
  <xsd:sequence>
    <xsd:element ref="RGTS_CODE"/>
    <xsd:element ref="USAGE"/>
    <xsd:element name="COMM_AMNT_VALUE" type="xsd:decimal"/>
    <xsd:element name="CURR_CODE" type="xsd:string"/>
    <xsd:element ref="TERR"/>
  </xsd:sequence>
</xsd:complexType>
</xsd:element>
```

## element CONTENT_CLASS

| diagram | |
|---|---|
| | |
| children | PRNTL_WARN_FLG CONTENT_CLASS_VALUE TERR |
| used by | elements    ASSET NAV_VIEW RELEASE WORK |
| source | `<xsd:element name="CONTENT_CLASS">`<br>`  <xsd:complexType>`<br>`    <xsd:sequence>`<br>`      <xsd:element name="PRNTL_WARN_FLG" type="xsd:boolean"/>`<br>`      <xsd:element name="CONTENT_CLASS_VALUE" minOccurs="0">`<br>`        <xsd:complexType>`<br>`          <xsd:simpleContent>`<br>`            <xsd:extension base="xsd:string">`<br>`              <xsd:attribute ref="MDATA_NS"/>`<br>`              <xsd:attribute ref="MDATA_NS_VER"/>`<br>`            </xsd:extension>`<br>`          </xsd:simpleContent>`<br>`        </xsd:complexType>`<br>`      </xsd:element>`<br>`      <xsd:element ref="TERR" minOccurs="0" maxOccurs="unbounded"/>`<br>`    </xsd:sequence>`<br>`  </xsd:complexType>`<br>`</xsd:element>` |

## element CONTENT_CLASS/CONTENT_CLASS_VALUE

| diagram | | | | |
|---|---|---|---|---|
| | | | | |
| type | extension of xsd:string | | | |
| attributes | Name | Type | Use | Value |
| | MDATA_NS | xsd:string | | |
| | MDATA_NS_VER | xsd:string | | |

**Music Industry Integrated Identifiers Project - XML Schema for Example Messages**

### element COP_STATUS

| diagram | |
|---|---|
| children | COP STATUS CODE RGTS CODE TERR |
| used by | elements **ASSET WORK** |
| source | ```
<xsd:element name="COP_STATUS">
  <xsd:complexType>
    <xsd:sequence>
      <xsd:element name="COP_STATUS_CODE">
        <xsd:simpleType>
          <xsd:restriction base="xsd:string">
            <xsd:enumeration value="PD"/>
            <xsd:enumeration value="COP"/>
            <xsd:enumeration value="UKN"/>
          </xsd:restriction>
        </xsd:simpleType>
      </xsd:element>
      <xsd:element ref="RGTS_CODE" minOccurs="0"/>
      <xsd:element ref="TERR" minOccurs="0"/>
    </xsd:sequence>
  </xsd:complexType>
</xsd:element>
``` |

### element COP_STATUS/COP_STATUS_CODE

| diagram | |
|---|---|
| type | restriction of xsd:string |
| facets | enumeration  PD<br>enumeration  COP<br>enumeration  UKN |

### element COPY_PRTCT_FLG

| diagram | |
|---|---|
| type | xsd:boolean |
| used by | elements **ASSET RELEASE** |
| source | `<xsd:element name="COPY_PRTCT_FLG" type="xsd:boolean"/>` |

### element CURR_CODE

| diagram | |
|---|---|
| type | xsd:string |
| used by | element **ROY AMNT** |
| source | `<xsd:element name="CURR_CODE" type="xsd:string"/>` |

## element CURR_CONVRSN

| diagram | |
|---|---|
| children | CURR_CODE CONVRSN_RATE CONVRSN_VALUE |
| used by | elements    ROY_AMNT/BUY_OUT ROY_AMNT/DP ROY_AMNT/GROSS_ROY ROY_AMNT/LICENSOR ROY_AMNT/LICENSOR_ADVANCE ROY_AMNT/NET_ROY ROY_AMNT/PM_PRICE ROY_AMNT/ROY_ADJMNT ROY_AMNT/SAI_PAI ROY_AMNT/SPKN_WRD |
| source | `<xsd:element name="CURR_CONVRSN">`<br>`<xsd:complexType>`<br>`<xsd:sequence>`<br>`<xsd:element name="CURR_CODE" type="xsd:string"/>`<br>`<xsd:element name="CONVRSN_RATE" type="xsd:decimal"/>`<br>`<xsd:element name="CONVRSN_VALUE" type="xsd:decimal"/>`<br>`</xsd:sequence>`<br>`</xsd:complexType>`<br>`</xsd:element>` |

Music Industry Integrated Identifiers Project - XML Schema for Example Messages

## element DEL_ATTRIB

| diagram | |
|---|---|
| children | IMG_HEIGHT IMG_WIDTH COL_IND_CODE ASP_RAT BIT_RATE CODEC_CODE CODEC_VER FRMT FILE_FRMT_CODE DGTL_ANAL_CODE CHANNEL_FRMT_CODE FILE_SIZE FILE_NAME DRM_PLAT_CODE DRM_PLAT_VER OS_CODE OS_VER |
| used by | elements  ASSET NAV_VIEW RELEASE |

| attributes | Name | Type | Use | Value |
|---|---|---|---|---|
| | INTERNAL_REF_ID | xsd:ID | optional | |

| source | `<xsd:element name="DEL_ATTRIB">` |
|---|---|
| | `  <xsd:complexType>` |
| | `   <xsd:sequence>` |
| | `    <xsd:element name="IMG_HEIGHT" minOccurs="0">` |
| | `     <xsd:complexType>` |
| | `      <xsd:simpleContent>` |
| | `       <xsd:extension base="xsd:decimal">` |
| | `        <xsd:attribute ref="MSRMNT_UNIT"/>` |
| | `       </xsd:extension>` |
| | `      </xsd:simpleContent>` |
| | `     </xsd:complexType>` |
| | `    </xsd:element>` |
| | `    <xsd:element name="IMG_WIDTH" minOccurs="0">` |
| | `     <xsd:complexType>` |

```xml
      <xsd:simpleContent>
       <xsd:extension base="xsd:decimal">
        <xsd:attribute ref="MSRMNT_UNIT"/>
       </xsd:extension>
      </xsd:simpleContent>
     </xsd:complexType>
    </xsd:element>
    <xsd:element name="COL_IND_CODE" minOccurs="0">
     <xsd:simpleType>
      <xsd:restriction base="xsd:string">
       <xsd:enumeration value="COL"/>
       <xsd:enumeration value="BW"/>
      </xsd:restriction>
     </xsd:simpleType>
    </xsd:element>
    <xsd:element name="ASP_RAT" minOccurs="0"/>
    <xsd:element name="BIT_RATE" minOccurs="0">
     <xsd:complexType>
      <xsd:simpleContent>
       <xsd:extension base="xsd:decimal">
        <xsd:attribute ref="MSRMNT_UNIT"/>
       </xsd:extension>
      </xsd:simpleContent>
     </xsd:complexType>
    </xsd:element>
    <xsd:element name="CODEC_CODE" minOccurs="0">
     <xsd:simpleType>
      <xsd:restriction base="xsd:string">
       <xsd:enumeration value="AAC"/>
       <xsd:enumeration value="MP3"/>
       <xsd:enumeration value="MP2"/>
       <xsd:enumeration value="WMA"/>
       <xsd:enumeration value="REAL_AUD"/>
       <xsd:enumeration value="JPEG"/>
       <xsd:enumeration value="JPEG_2000"/>
       <xsd:enumeration value="JPEG_M"/>
       <xsd:enumeration value="PDF"/>
       <xsd:enumeration value="AVI"/>
       <xsd:enumeration value="MS_READER"/>
      </xsd:restriction>
     </xsd:simpleType>
    </xsd:element>
    <xsd:element name="CODEC_VER" minOccurs="0">
     <xsd:simpleType>
      <xsd:restriction base="xsd:string"/>
     </xsd:simpleType>
    </xsd:element>
    <xsd:element ref="FRMT" minOccurs="0"/>
    <xsd:element ref="FILE_FRMT_CODE" minOccurs="0"/>
    <xsd:element name="DGTL_ANAL_CODE" minOccurs="0">
     <xsd:simpleType>
      <xsd:restriction base="xsd:string">
       <xsd:enumeration value="DGTL"/>
       <xsd:enumeration value="ANLG"/>
      </xsd:restriction>
     </xsd:simpleType>
    </xsd:element>
    <xsd:element name="CHANNEL_FRMT_CODE" minOccurs="0">
     <xsd:simpleType>
```

**Music Industry Integrated Identifiers Project - XML Schema for Example Messages**

```
            <xsd:restriction base="xsd:string">
              <xsd:enumeration value="MONO"/>
              <xsd:enumeration value="STEREO"/>
              <xsd:enumeration value="JNT_STER"/>
              <xsd:enumeration value="MLTI_CHAN_5_1"/>
            </xsd:restriction>
          </xsd:simpleType>
        </xsd:element>
        <xsd:element name="FILE_SIZE" minOccurs="0">
          <xsd:complexType>
            <xsd:simpleContent>
              <xsd:extension base="xsd:decimal">
                <xsd:attribute ref="MSRMNT_UNIT"/>
              </xsd:extension>
            </xsd:simpleContent>
          </xsd:complexType>
        </xsd:element>
        <xsd:element name="FILE_NAME" type="xsd:string" minOccurs="0"/>
        <xsd:element name="DRM_PLAT_CODE" minOccurs="0">
          <xsd:simpleType>
            <xsd:restriction base="xsd:string">
              <xsd:enumeration value="LIQ_AUD"/>
              <xsd:enumeration value="INTTRST"/>
              <xsd:enumeration value="WIN_MED"/>
              <xsd:enumeration value="EMMS"/>
              <xsd:enumeration value="MS_DAS"/>
              <xsd:enumeration value="NOT_PROT"/>
            </xsd:restriction>
          </xsd:simpleType>
        </xsd:element>
        <xsd:element name="DRM_PLAT_VER" type="xsd:string" minOccurs="0"/>
        <xsd:element name="OS_CODE" minOccurs="0">
          <xsd:simpleType>
            <xsd:restriction base="xsd:string">
              <xsd:enumeration value="MS_WIN"/>
              <xsd:enumeration value="MACOS"/>
              <xsd:enumeration value="LINUX"/>
              <xsd:enumeration value="OTH"/>
            </xsd:restriction>
          </xsd:simpleType>
        </xsd:element>
        <xsd:element name="OS_VER" type="xsd:string" minOccurs="0"/>
      </xsd:sequence>
      <xsd:attribute ref="INTERNAL_REF_ID"/>
    </xsd:complexType>
  </xsd:element>
```

## element DEL_ATTRIB/IMG_HEIGHT

| diagram | IMG_HEIGHT | | | |
|---|---|---|---|---|
| type | extension of xsd:decimal | | | |
| attributes | Name | Type | Use | Value |
| | MSRMNT_UNIT | xsd:string | required | |

Music Industry Integrated Identifiers Project - XML Schema for Example Messages

### element DEL_ATTRIB/IMG_WIDTH

| diagram | IMG_WIDTH | | | |
|---|---|---|---|---|
| type | extension of xsd:decimal | | | |
| attributes | Name | Type | Use | Value |
| | MSRMNT_UNIT | xsd:string | required | |

### element DEL_ATTRIB/COL_IND_CODE

| diagram | COL_IND_CODE |
|---|---|
| type | restriction of xsd:string |
| facets | enumeration COL |
| | enumeration BW |

### element DEL_ATTRIB/BIT_RATE

| diagram | BIT_RATE | | | |
|---|---|---|---|---|
| type | extension of xsd:decimal | | | |
| attributes | Name | Type | Use | Value |
| | MSRMNT_UNIT | xsd:string | required | |

### element DEL_ATTRIB/CODEC_CODE

| diagram | CODEC_CODE |
|---|---|
| type | restriction of xsd:string |
| facets | enumeration AAC |
| | enumeration MP3 |
| | enumeration MP2 |
| | enumeration WMA |
| | enumeration REAL_AUD |
| | enumeration JPEG |
| | enumeration JPEG_2000 |
| | enumeration JPEG_M |
| | enumeration PDF |
| | enumeration AVI |
| | enumeration MS_READER |

### element DEL_ATTRIB/DGTL_ANAL_CODE

| diagram | DGTL_ANAL_CODE |
|---|---|
| type | restriction of xsd:string |
| facets | enumeration DGTL |
| | enumeration ANLG |

**Music Industry Integrated Identifiers Project  -  XML Schema for Example Messages**

## element DEL_ATTRIB/CHANNEL_FRMT_CODE

| diagram | CHANNEL_FRMT_CODE | | | |
|---|---|---|---|---|
| type | restriction of xsd:string | | | |
| facets | enumeration | MONO | | |
| | enumeration | STEREO | | |
| | enumeration | JNT_STER | | |
| | enumeration | MLTI_CHAN_5_1 | | |

## element DEL_ATTRIB/FILE_SIZE

| diagram | FILE_SIZE | | | |
|---|---|---|---|---|
| type | extension of xsd:decimal | | | |
| attributes | Name | Type | Use | Value |
| | MSRMNT_UNIT | xsd:string | required | |

## element DEL_ATTRIB/DRM_PLAT_CODE

| diagram | DRM_PLAT_CODE | |
|---|---|---|
| type | restriction of xsd:string | |
| facets | enumeration | LIQ_AUD |
| | enumeration | INTTRST |
| | enumeration | WIN_MED |
| | enumeration | EMMS |
| | enumeration | MS_DAS |
| | enumeration | NOT_PROT |

## element DEL_ATTRIB/OS_CODE

| diagram | OS_CODE |
|---|---|
| type | restriction of xsd:string |
| facets | enumeration MS_WIN |
| | enumeration MACOS |
| | enumeration LINUX |
| | enumeration OTH |

## element DIST_CHAN_CODE

| diagram | DIST_CHAN_CODE |
|---|---|
| type | restriction of xsd:string |
| used by | element USAGE |
| facets | enumeration PHYSICAL |
| | enumeration TERSTL |
| | enumeration CABLE |
| | enumeration SATEL |
| | enumeration INTERNT |
| | enumeration MOBILE |
| source | ```<xsd:element name="DIST_CHAN_CODE"><br><xsd:simpleType><br><xsd:restriction base="xsd:string"><br><xsd:enumeration value="PHYSICAL"/><br><xsd:enumeration value="TERSTL"/><br><xsd:enumeration value="CABLE"/><br><xsd:enumeration value="SATEL"/><br><xsd:enumeration value="INTERNT"/><br><xsd:enumeration value="MOBILE"/><br></xsd:restriction><br></xsd:simpleType><br></xsd:element>``` |

## element DUR

| diagram | DUR |
|---|---|
| type | xsd:timeDuration |
| used by | elements ASSET NAV VIEW/ASSET LIST/ASSET LIST ITEM NAV VIEW/ASSET LIST/ASSET LIST ITEM/LNKD ASSET LIST/LNKD ASSET NAV VIEW RELEASE |
| source | `<xsd:element name="DUR" type="xsd:timeDuration"/>` |

## element END_USER_TYPE

| | |
|---|---|
| diagram | END_USER_TYPE |
| type | restriction of xsd:string |
| used by | element USAGE |
| facets | enumeration COMM<br>enumeration EDU<br>enumeration PROMO<br>enumeration HOSP<br>enumeration MIL<br>enumeration CLUB<br>enumeration UNKN |
| source | `<xsd:element name="END_USER_TYPE">`<br>`<xsd:simpleType>`<br>`<xsd:restriction base="xsd:string">`<br>`<xsd:enumeration value="COMM"/>`<br>`<xsd:enumeration value="EDU"/>`<br>`<xsd:enumeration value="PROMO"/>`<br>`<xsd:enumeration value="HOSP"/>`<br>`<xsd:enumeration value="MIL"/>`<br>`<xsd:enumeration value="CLUB"/>`<br>`<xsd:enumeration value="UNKN"/>`<br>`</xsd:restriction>`<br>`</xsd:simpleType>`<br>`</xsd:element>` |

## element EVENT

| | |
|---|---|
| diagram | EVENT — EVENT_CODE<br>EVENT_DATE<br>EVENT_TIME<br>ASSOC_PTY_GRP<br>USAGE_QTY<br>LOCATION_DESC<br>TERR |
| children | EVENT_CODE EVENT_DATE EVENT_TIME ASSOC_PTY_GRP USAGE_QTY LOCATION_DESC TERR |
| used by | elements ASSET LICENCE MESSAGE MESSAGE/MESSAGE_ACKNWLDGE NAV_VIEW RELEASE WORK |
| source | `<xsd:element name="EVENT">`<br>`<xsd:complexType>`<br>`<xsd:sequence>`<br>`<xsd:element name="EVENT_CODE">`<br>`<xsd:simpleType>`<br>`<xsd:restriction base="xsd:string">`<br>`<xsd:enumeration value="RELEASE"/>`<br>`<xsd:enumeration value="FIRST_REL"/>`<br>`<xsd:enumeration value="ORIG_REL"/>` |

45

```
          <xsd:enumeration value="RE_REL"/>
          <xsd:enumeration value="P_DATE"/>
          <xsd:enumeration value="CREATE"/>
          <xsd:enumeration value="DELETE"/>
          <xsd:enumeration value="FIN_SESSION"/>
          <xsd:enumeration value="MASTR"/>
          <xsd:enumeration value="REMAST"/>
          <xsd:enumeration value="FIN_MIX"/>
          <xsd:enumeration value="MANUF"/>
          <xsd:enumeration value="DISTRIB"/>
          <xsd:enumeration value="PACKG"/>
          <xsd:enumeration value="LICENSE"/>
          <xsd:enumeration value="RFUSE_LICENCE"/>
          <xsd:enumeration value="ORIG_LIC"/>
          <xsd:enumeration value="INVCE"/>
          <xsd:enumeration value="BRDCST"/>
          <xsd:enumeration value="PERF"/>
          <xsd:enumeration value="FIRST_REC"/>
          <xsd:enumeration value="COMMISN"/>
          <xsd:enumeration value="FIRST_PERF"/>
          <xsd:enumeration value="SERVER_FIX"/>
          <xsd:enumeration value="COP_REG"/>
          <xsd:enumeration value="COP_REN"/>
          <xsd:enumeration value="COP_EXT"/>
          <xsd:enumeration value="REV_RIGHT"/>
          <xsd:enumeration value="SIMIL_PUBL"/>
          <xsd:enumeration value="PUBL"/>
          <xsd:enumeration value="PURCH"/>
          <xsd:enumeration value="RGTS_EXP"/>
          <xsd:enumeration value="AKNWLDGE_MSG"/>
          <xsd:enumeration value="LAST_INFO_UPDATE"/>
          <xsd:enumeration value="DATA_TRANS"/>
          <xsd:enumeration value="IMPORT"/>
          <xsd:enumeration value="EXPORT"/>
        </xsd:restriction>
      </xsd:simpleType>
    </xsd:element>
    <xsd:element name="EVENT_DATE">
      <xsd:complexType>
        <xsd:simpleContent>
          <xsd:extension base="xsd:date"/>
        </xsd:simpleContent>
      </xsd:complexType>
    </xsd:element>
    <xsd:element name="EVENT_TIME" minOccurs="0">
      <xsd:complexType>
        <xsd:simpleContent>
          <xsd:extension base="xsd:time"/>
        </xsd:simpleContent>
      </xsd:complexType>
    </xsd:element>
    <xsd:element ref="ASSOC_PTY_GRP" minOccurs="0"/>
    <xsd:element ref="USAGE_QTY" minOccurs="0"/>
    <xsd:element name="LOCATION_DESC" type="xsd:string" minOccurs="0"/>
    <xsd:element ref="TERR" minOccurs="0"/>
  </xsd:sequence>
</xsd:complexType>
</xsd:element>
```

**Music Industry Integrated Identifiers Project  -  XML Schema for Example Messages**

element **EVENT/EVENT_CODE**

| diagram | EVENT_CODE |
|---|---|
| type | restriction of xsd:string |
| facets | enumeration RELEASE |
| | enumeration FIRST_REL |
| | enumeration ORIG_REL |
| | enumeration RE_REL |
| | enumeration P_DATE |
| | enumeration CREATE |
| | enumeration DELETE |
| | enumeration FIN_SESSION |
| | enumeration MASTR |
| | enumeration REMAST |
| | enumeration FIN_MIX |
| | enumeration MANUF |
| | enumeration DISTRIB |
| | enumeration PACKG |
| | enumeration LICENSE |
| | enumeration RFUSE_LICENCE |
| | enumeration ORIG_LIC |
| | enumeration INVCE |
| | enumeration BRDCST |
| | enumeration PERF |
| | enumeration FIRST_REC |
| | enumeration COMMISN |
| | enumeration FIRST_PERF |
| | enumeration SERVER_FIX |
| | enumeration COP_REG |
| | enumeration COP_REN |
| | enumeration COP_EXT |
| | enumeration REV_RIGHT |
| | enumeration SIMIL_PUBL |
| | enumeration PUBL |
| | enumeration PURCH |
| | enumeration RGTS_EXP |
| | enumeration AKNWLDGE_MSG |
| | enumeration LAST_INFO_UPDATE |
| | enumeration DATA_TRANS |
| | enumeration IMPORT |
| | enumeration EXPORT |

Music Industry Integrated Identifiers Project  -  XML Schema for Example Messages

## element EXT_LNK

| diagram | |
|---|---|
| children | EXT_LNK_VALUE EXT_LNK_RES_CODE FILE_FRMT_CODE EXT_LNK_EXP_DATE |
| used by | elements   ASSET ASSOC_PTY_GRP/ASSOC_PTY NAV_VIEW RELEASE WORK |
| source | (see below) |

```
<xsd:element name="EXT_LNK">
 <xsd:complexType>
  <xsd:sequence>
   <xsd:element name="EXT_LNK_VALUE">
    <xsd:complexType>
     <xsd:simpleContent>
      <xsd:extension base="xsd:string">
       <xsd:attribute name="EXT_LNK_CODE" use="required">
        <xsd:simpleType>
         <xsd:restriction base="xsd:string">
          <xsd:enumeration value="URL"/>
          <xsd:enumeration value="DOI"/>
          <xsd:enumeration value="TEL_NBR"/>
          <xsd:enumeration value="FAX_NBR"/>
         </xsd:restriction>
        </xsd:simpleType>
       </xsd:attribute>
      </xsd:extension>
     </xsd:simpleContent>
    </xsd:complexType>
   </xsd:element>
   <xsd:element name="EXT_LNK_RES_CODE">
    <xsd:simpleType>
     <xsd:restriction base="xsd:string">
      <xsd:enumeration value="PROMO_INFO"/>
      <xsd:enumeration value="PROMO_SAMPLE"/>
      <xsd:enumeration value="PROMO_IMAGE"/>
      <xsd:enumeration value="SPEC_OFFER"/>
      <xsd:enumeration value="ADD_MDATA"/>
      <xsd:enumeration value="LOGO"/>
     </xsd:restriction>
    </xsd:simpleType>
   </xsd:element>
   <xsd:element ref="FILE_FRMT_CODE" minOccurs="0"/>
   <xsd:element name="EXT_LNK_EXP_DATE" minOccurs="0">
    <xsd:complexType>
     <xsd:simpleContent>
      <xsd:extension base="xsd:date">
       <xsd:attribute ref="DATE_FRMT"/>
      </xsd:extension>
     </xsd:simpleContent>
    </xsd:complexType>
   </xsd:element>
  </xsd:sequence>
 </xsd:complexType>
```

**Music Industry Integrated Identifiers Project  -  XML Schema for Example Messages**

| | |
|---|---|
| </xsd:element> | |

## element EXT_LNK/EXT_LNK_VALUE

| diagram | EXT_LNK_VALUE | | | |
|---|---|---|---|---|
| type | extension of xsd:string | | | |
| attributes | Name | Type | Use | Value |
| | EXT_LNK_CODE | xsd:string | required | |

## element EXT_LNK/EXT_LNK_RES_CODE

| diagram | EXT_LNK_RES_CODE |
|---|---|
| type | restriction of xsd:string |
| facets | enumeration   PROMO_INFO |
| | enumeration   PROMO_SAMPLE |
| | enumeration   PROMO_IMAGE |
| | enumeration   SPEC_OFFER |
| | enumeration   ADD_MDATA |
| | enumeration   LOGO |

## element EXT_LNK/EXT_LNK_EXP_DATE

| diagram | EXT_LNK_EXP_DATE | | | |
|---|---|---|---|---|
| type | extension of xsd:date | | | |
| attributes | Name | Type | Use | Value |
| | DATE_FRMT | xsd:string | | |

## element FILE_FRMT_CODE

| diagram | FILE_FRMT_CODE |
|---|---|
| type | restriction of xsd:string |
| used by | elements   **DEL_ATTRIB EXT_LNK** |
| facets | enumeration   CARAF |
| | enumeration   MP2 |
| | enumeration   MP3 |
| | enumeration   AAC |
| | enumeration   WMA |
| | enumeration   BLUE_MATTER |
| | enumeration   REAL |
| | enumeration   DTS |
| | enumeration   ASF |
| | enumeration   LIQ_AUD |
| | enumeration   MPEG_1 |
| | enumeration   MPEG_2 |
| | enumeration   MPEG_4 |
| | enumeration   QT |
| | enumeration   AVI |

| | | |
|---|---|---|
| | enumeration | AVI |
| | enumeration | JPEG |
| | enumeration | JPEG_2000 |
| | enumeration | JPEG_M |
| | enumeration | PNG |
| | enumeration | JIF |
| | enumeration | BMP |
| | enumeration | TXT |
| | enumeration | XML |
| | enumeration | HTML |
| | enumeration | PDF |
| | enumeration | ZIP |
| | enumeration | EXE |
| source | <xsd:element name="FILE_FRMT_CODE">  <br> <xsd:simpleType>  <br>  <xsd:restriction base="xsd:string">  <br>   <xsd:enumeration value="CARAF"/>  <br>   <xsd:enumeration value="MP2"/>  <br>   <xsd:enumeration value="MP3"/>  <br>   <xsd:enumeration value="AAC"/>  <br>   <xsd:enumeration value="WMA"/>  <br>   <xsd:enumeration value="BLUE_MATTER"/>  <br>   <xsd:enumeration value="REAL"/>  <br>   <xsd:enumeration value="DTS"/>  <br>   <xsd:enumeration value="ASF"/>  <br>   <xsd:enumeration value="LIQ_AUD"/>  <br>   <xsd:enumeration value="MPEG_1"/>  <br>   <xsd:enumeration value="MPEG_2"/>  <br>   <xsd:enumeration value="MPEG_4"/>  <br>   <xsd:enumeration value="QT"/>  <br>   <xsd:enumeration value="AVI"/>  <br>   <xsd:enumeration value="JPEG"/>  <br>   <xsd:enumeration value="JPEG_2000"/>  <br>   <xsd:enumeration value="JPEG_M"/>  <br>   <xsd:enumeration value="PNG"/>  <br>   <xsd:enumeration value="JIF"/>  <br>   <xsd:enumeration value="BMP"/>  <br>   <xsd:enumeration value="TXT"/>  <br>   <xsd:enumeration value="XML"/>  <br>   <xsd:enumeration value="HTML"/>  <br>   <xsd:enumeration value="PDF"/>  <br>   <xsd:enumeration value="ZIP"/>  <br>   <xsd:enumeration value="EXE"/>  <br>  </xsd:restriction>  <br> </xsd:simpleType>  <br></xsd:element> | |

**Music Industry Integrated Identifiers Project  -  XML Schema for Example Messages**

## element FRMT

| | diagram | |
|---|---|---|
| | children | **MTRX_FRMT_CODE EMD_FRMT_CODE EMD_FRMT_VER MEDIA_TYPE SNGL_MULTI_ASSET_FLG SIZE_INCH SPEED** |
| | used by | elements **DEL_ATTRIB RELTD_ITEM** |

| attributes | Name | Type | Use | Value |
|---|---|---|---|---|
| | MDATA_NS | xsd:string | | |
| | MDATA_NS_VER | xsd:string | | |

source
```
<xsd:element name="FRMT">
  <xsd:complexType>
    <xsd:sequence>
      <xsd:element name="MTRX_FRMT_CODE" type="xsd:string" minOccurs="0"/>
      <xsd:element name="EMD_FRMT_CODE" type="xsd:string" minOccurs="0"/>
      <xsd:element name="EMD_FRMT_VER" type="xsd:string" minOccurs="0"/>
      <xsd:element name="MEDIA_TYPE" type="xsd:string" minOccurs="0"/>
      <xsd:element name="SNGL_MULTI_ASSET_FLG" minOccurs="0">
        <xsd:simpleType>
          <xsd:restriction base="xsd:string">
            <xsd:enumeration value="S"/>
            <xsd:enumeration value="M"/>
          </xsd:restriction>
        </xsd:simpleType>
      </xsd:element>
      <xsd:element name="SIZE_INCH" minOccurs="0">
        <xsd:simpleType>
          <xsd:restriction base="xsd:Integer">
            <xsd:enumeration value="3"/>
            <xsd:enumeration value="5"/>
            <xsd:enumeration value="7"/>
            <xsd:enumeration value="10"/>
            <xsd:enumeration value="12"/>
          </xsd:restriction>
        </xsd:simpleType>
      </xsd:element>
      <xsd:element name="SPEED" minOccurs="0">
        <xsd:simpleType>
          <xsd:restriction base="xsd:Integer">
            <xsd:enumeration value="16"/>
            <xsd:enumeration value="33"/>
            <xsd:enumeration value="45"/>
            <xsd:enumeration value="78"/>
          </xsd:restriction>
```

```
        </xsd:simpleType>
      </xsd:element>
    </xsd:sequence>
    <xsd:attribute ref="MDATA_NS"/>
    <xsd:attribute ref="MDATA_NS_VER"/>
  </xsd:complexType>
</xsd:element>
```

## element FRMT/SNGL_MULTI_ASSET_FLG

| diagram | SNGL_MULTI_ASSET_FLG |
|---|---|
| type | restriction of xsd:string |
| facets | enumeration   S |
|  | enumeration   M |

## element FRMT/SIZE_INCH

| diagram | SIZE_INCH |
|---|---|
| type | restriction of xsd:integer |
| facets | enumeration   3 |
|  | enumeration   5 |
|  | enumeration   7 |
|  | enumeration   10 |
|  | enumeration   12 |

## element FRMT/SPEED

| diagram | SPEED |
|---|---|
| type | restriction of xsd:integer |
| facets | enumeration   16 |
|  | enumeration   33 |
|  | enumeration   45 |
|  | enumeration   78 |

## element GENRE

| diagram | |
|---|---|
| children | GENRE_CODE GENRE_DESC |
| used by | elements   ASSET NAV VIEW RELEASE WORK |
| attributes | Name | Type | Use | Value |
|  | MDATA_NS | xsd:string |  |  |
|  | MDATA_NS_VER | xsd:string |  |  |
| source | `<xsd:element name="GENRE">`<br>`<xsd:complexType>`<br>`<xsd:sequence maxOccurs="unbounded">`<br>`<xsd:element name="GENRE_CODE" type="xsd:string"/>` |

```
        <xsd:element name="GENRE_DESC" type="xsd:string"/>
    </xsd:sequence>
    <xsd:attribute ref="MDATA_NS"/>
    <xsd:attribute ref="MDATA_NS_VER"/>
    </xsd:complexType>
</xsd:element>
```

## element INST_VCL_CODE

| diagram | INST_VCL_CODE |
|---|---|
| type | restriction of xsd:string |
| used by | elements **ASSET NAV VIEW** |
| facets | enumeration   INSTMNTL<br>enumeration   VCL<br>enumeration   VISUAL<br>enumeration   SPKN_WD<br>enumeration   UNSPEC |
| source | ```<xsd:element name="INST_VCL_CODE"><br>  <xsd:simpleType><br>    <xsd:restriction base="xsd:string"><br>      <xsd:enumeration value="INSTMNTL"/><br>      <xsd:enumeration value="VCL"/><br>      <xsd:enumeration value="VISUAL"/><br>      <xsd:enumeration value="SPKN_WD"/><br>      <xsd:enumeration value="UNSPEC"/><br>    </xsd:restriction><br>  </xsd:simpleType><br></xsd:element>``` |

## element INSTRMNT

| diagram | |
|---|---|
| children | **INST_CODE INST_DESC INST_TYPE NBR_PLAYERS NBR_VOICES** |
| used by | element   **WORK** |

| attributes | Name | Type | Use | Value |
|---|---|---|---|---|
| | MDATA_NS | xsd:string | | |
| | MDATA_NS_VER | xsd:string | | |

| source | ```<xsd:element name="INSTRMNT"><br>  <xsd:complexType><br>    <xsd:sequence><br>      <xsd:element name="INST_CODE" type="xsd:string"/><br>      <xsd:element name="INST_DESC" type="xsd:string" minOccurs="0"/><br>      <xsd:element name="INST_TYPE" type="xsd:string" minOccurs="0"/><br>      <xsd:element name="NBR_PLAYERS" type="xsd:integer" minOccurs="0"/>``` |
|---|---|

```
        <xsd:element name="NBR_VOICES" type="xsd:integer" minOccurs="0"/>
      </xsd:sequence>
      <xsd:attribute ref="MDATA_NS"/>
      <xsd:attribute ref="MDATA_NS_VER"/>
    </xsd:complexType>
  </xsd:element>
```

## element LANG_CODE

| | |
|---|---|
| diagram | LANG_CODE |
| type | xsd:string |
| used by | elements  ASSET NAV_VIEW RELEASE WORK |
| source | <xsd:element name="LANG_CODE" type="xsd:string"/> |

## element LICENCE

| | |
|---|---|
| diagram | |
| children | LICENCE_ID ASSOC_PTY_GRP LIC_TYPE_CODE EVENT RGTS_CODE USAGE INTD_SALES MESSAGE_TRNSCTN_RSLT_GRP SCHEMA_COMP_LNK |
| used by | element  SCHEMA_COMP_LNK |

| attributes | Name | Type | Use | Value |
|---|---|---|---|---|
| | SEQ_NBR | xsd:integer | optional | |
| | MESSAGE_TRNSCTN_ID | xsd:ID | optional | |

| | |
|---|---|
| source | <xsd:element name="LICENCE"> |

```
<xsd:element name="LICENCE">
  <xsd:complexType>
    <xsd:sequence>
      <xsd:element name="LICENCE_ID" type="xsd:string"/>
      <xsd:element ref="ASSOC_PTY_GRP"/>
      <xsd:element name="LIC_TYPE_CODE">
        <xsd:simpleType>
          <xsd:restriction base="xsd:string">
            <xsd:enumeration value="BLNKT"/>
            <xsd:enumeration value="WRK_BY_WRK"/>
```

**Music Industry Integrated Identifiers Project  -  XML Schema for Example Messages**

```
              <xsd:enumeration value="DEF_WRK_LST"/>
            </xsd:restriction>
          </xsd:simpleType>
        </xsd:element>
        <xsd:element ref="EVENT" minOccurs="0" maxOccurs="unbounded"/>
        <xsd:element ref="RGTS_CODE" maxOccurs="unbounded"/>
        <xsd:element ref="USAGE" maxOccurs="unbounded"/>
        <xsd:element name="INTD_SALES" minOccurs="0" maxOccurs="unbounded">
          <xsd:complexType>
            <xsd:sequence>
              <xsd:element ref="PRICE" minOccurs="0"/>
              <xsd:element ref="USAGE_QTY" minOccurs="0"/>
            </xsd:sequence>
          </xsd:complexType>
        </xsd:element>
        <xsd:element ref="MESSAGE_TRNSCTN_RSLT_GRP" minOccurs="0"/>
        <xsd:element ref="SCHEMA_COMP_LNK" minOccurs="0"/>
      </xsd:sequence>
      <xsd:attribute name="SEQ_NBR" type="xsd:integer" use="optional"/>
      <xsd:attribute ref="MESSAGE_TRNSCTN_ID"/>
    </xsd:complexType>
  </xsd:element>
```

## element LICENCE/LIC_TYPE_CODE

| diagram | LIC_TYPE_CODE | |
|---|---|---|
| type | restriction of xsd:string | |
| facets | enumeration | BLNKT |
| | enumeration | WRK_BY_WRK |
| | enumeration | DEF_WRK_LST |

## element LICENCE/INTD_SALES

| diagram | INTD_SALES — PRICE / USAGE_QTY |
|---|---|
| children | **PRICE USAGE_QTY** |

**Music Industry Integrated Identifiers Project  -  XML Schema for Example Messages**

element **MESSAGE**

| diagram | |
|---|---|
| children | MESSAGE_ID ASSOC_PTY_GRP EVENT MESSAGE_DESC MESSAGE_SUMMARY MESSAGE_METRICS CMNTS RPT_PERIOD_DURATION RPT_PERIOD_START RPT_PERIOD_END MESSAGE_CONTENT MESSAGE_ACKNWLDGE |
| source | (see below) |

```
<xsd:element name="MESSAGE">
  <xsd:complexType>
    <xsd:sequence>
      <xsd:element name="MESSAGE_ID" type="xsd:ID"/>
      <xsd:element ref="ASSOC_PTY_GRP"/>
      <xsd:element ref="EVENT" maxOccurs="unbounded"/>
      <xsd:element name="MESSAGE_DESC">
        <xsd:complexType>
          <xsd:sequence>
            <xsd:element name="MESSAGE_SUITE_CODE">
              <xsd:simpleType>
                <xsd:restriction base="xsd:string">
                  <xsd:enumeration value="BEL_ECL"/>
                  <xsd:enumeration value="CIS_NET"/>
                  <xsd:enumeration value="CWR"/>
                  <xsd:enumeration value="FASTTRACK"/>
                  <xsd:enumeration value="IMJV"/>
                  <xsd:enumeration value="MUSICNET"/>
                  <xsd:enumeration value="PRESSPLAY"/>
                  <xsd:enumeration value="M3IP"/>
                </xsd:restriction>
              </xsd:simpleType>
            </xsd:element>
            <xsd:element name="MESSAGE_TYPE_CODE">
              <xsd:simpleType>
                <xsd:restriction base="xsd:string">
                  <xsd:enumeration value="INTER_CMPNY_SALES"/>
                  <xsd:enumeration value="LICENCE_APP"/>
                  <xsd:enumeration value="LICENCE_CONF"/>
```

```
                        <xsd:enumeration value="SALES_RPT_SOCIETY"/>
                        <xsd:enumeration value="ROY_STMNT"/>
                        <xsd:enumeration value="INVCE"/>
                        <xsd:enumeration value="RETAIL_NOTIF"/>
                        <xsd:enumeration value="LICENCE_NOTIF"/>
                      </xsd:restriction>
                    </xsd:simpleType>
                  </xsd:element>
                </xsd:sequence>
                <xsd:attribute name="MESSAGE_TYPE_VER" type="xsd:string"/>
              </xsd:complexType>
            </xsd:element>
            <xsd:element name="MESSAGE_SUMMARY" minOccurs="0">
              <xsd:complexType>
                <xsd:sequence>
                  <xsd:element ref="USAGE_QTY"/>
                  <xsd:element ref="ROY_AMNT"/>
                  <xsd:element ref="COMM_AMNT" minOccurs="0"/>
                </xsd:sequence>
              </xsd:complexType>
            </xsd:element>
            <xsd:element name="MESSAGE_METRICS" minOccurs="0">
              <xsd:complexType>
                <xsd:sequence>
                  <xsd:element name="SIZE_OF_MESSAGE_KB"/>
                  <xsd:element name="NBR_OF_RECRDS"/>
                  <xsd:element name="DIG_SIG" type="xsd:binary"/>
                </xsd:sequence>
              </xsd:complexType>
            </xsd:element>
            <xsd:element ref="CMNTS" minOccurs="0"/>
            <xsd:element ref="RPT_PERIOD_DURATION" minOccurs="0"/>
            <xsd:element ref="RPT_PERIOD_START" minOccurs="0"/>
            <xsd:element ref="RPT_PERIOD_END" minOccurs="0"/>
            <xsd:element name="MESSAGE_CONTENT">
              <xsd:complexType>
                <xsd:sequence>
                  <xsd:element ref="SCHEMA_COMP_LNK"/>
                </xsd:sequence>
              </xsd:complexType>
            </xsd:element>
            <xsd:element name="MESSAGE_ACKNWLDGE" minOccurs="0">
              <xsd:complexType>
                <xsd:sequence>
                  <xsd:element ref="ASSOC_PTY_GRP"/>
                  <xsd:element ref="EVENT" maxOccurs="unbounded"/>
                  <xsd:element name="NBR_OF_ERROR" type="xsd:integer"/>
                  <xsd:element name="ERROR_DESC">
                    <xsd:complexType>
                      <xsd:sequence>
                        <xsd:element name="ERROR_LVL">
                          <xsd:simpleType>
                            <xsd:restriction base="xsd:string">
                              <xsd:enumeration value="CRITICAL"/>
                              <xsd:enumeration value="NON_CRITICAL"/>
                            </xsd:restriction>
                          </xsd:simpleType>
                        </xsd:element>
                        <xsd:element name="ERROR_TRANS_ID" type="xsd:IDREF" minOccurs="0"/>
```

Music Industry Integrated Identifiers Project - XML Schema for Example Messages

```
<xsd:element name="ERROR_DATA_ITEM_REF" type="xsd:string" minOccurs="0"/>
<xsd:element name="ERROR_DATA_ITEM_VALUE" type="xsd:string" minOccurs="0"/>
<xsd:element name="ERROR_ID" type="xsd:string"/>
<xsd:element name="ERROR_TYPE">
 <xsd:simpleType>
  <xsd:restriction base="xsd:string">
   <xsd:enumeration value="MISSING"/>
   <xsd:enumeration value="DUPLICATE"/>
   <xsd:enumeration value="FORMAT"/>
   <xsd:enumeration value="OTH"/>
  </xsd:restriction>
 </xsd:simpleType>
</xsd:element>
<xsd:element ref="CMNTS" minOccurs="0"/>
</xsd:sequence>
</xsd:complexType>
</xsd:element>
</xsd:sequence>
</xsd:complexType>
</xsd:element>
</xsd:sequence>
</xsd:complexType>
</xsd:element>
```

## element MESSAGE/MESSAGE_DESC

| diagram | |
|---|---|
| | MESSAGE_DESC → MESSAGE_SUITE_CODE / MESSAGE_TYPE_CODE |

| children | MESSAGE_SUITE_CODE MESSAGE_TYPE_CODE |
|---|---|

| attributes | Name | Type | Use | Value |
|---|---|---|---|---|
| | MESSAGE_TYPE_VER | xsd:string | | |

## element MESSAGE/MESSAGE_DESC/MESSAGE_SUITE_CODE

| diagram | MESSAGE_SUITE_CODE |
|---|---|
| type | restriction of xsd:string |
| facets | enumeration BEL_ECL |
| | enumeration CIS_NET |
| | enumeration CWR |
| | enumeration FASTTRACK |
| | enumeration IMJV |
| | enumeration MUSICNET |
| | enumeration PRESSPLAY |
| | enumeration M3IP |

## element MESSAGE/MESSAGE_DESC/MESSAGE_TYPE_CODE

| diagram | MESSAGE_TYPE_CODE |
|---|---|
| type | restriction of xsd:string |
| facets | enumeration INTER_CMPNY_SALES |
| | enumeration LICENCE_APP |

Music Industry Integrated Identifiers Project  –  XML Schema for Example Messages

| | | |
|---|---|---|
| · | enumeration | LICENCE_APP |
| | enumeration | LICENCE_CONF |
| | enumeration | SALES_RPT_SOCIETY |
| · | enumeration | ROY_STMNT |
| | enumeration | INVCE |
| | enumeration | RETAIL_NOTIF |
| | enumeration | LICENCE_NOTIF |

### element MESSAGE/MESSAGE_SUMMARY

| diagram | |
|---|---|
| children | **USAGE QTY ROY AMNT COMM AMNT** |

### element MESSAGE/MESSAGE_METRICS

| diagram | |
|---|---|
| children | **SIZE OF MESSAGE KB NBR OF RECRDS DIG SIG** |

### element MESSAGE/MESSAGE_CONTENT

| diagram | |
|---|---|
| children | **SCHEMA COMP LNK** |
| source | `<xsd:element name="MESSAGE_CONTENT">`<br>` <xsd:complexType>`<br>`  <xsd:sequence>`<br>`   <xsd:element ref="SCHEMA_COMP_LNK"/>`<br>`  </xsd:sequence>`<br>` </xsd:complexType>`<br>`</xsd:element>` |

### element MESSAGE/MESSAGE_ACKNWLDGE

| diagram | |
|---|---|
| children | **ASSOC PTY GRP EVENT NBR OF ERROR ERROR DESC** |

**Music Industry Integrated Identifiers Project  -  XML Schema for Example Messages**

### element MESSAGE/MESSAGE_ACKNWLDGE/ERROR_DESC

| diagram | |
|---|---|
| children | ERROR_LVL ERROR_TRANS_ID ERROR_DATA_ITEM_REF ERROR_DATA_ITEM_VALUE ERROR_ID ERROR_TYPE CMNTS |

### element MESSAGE/MESSAGE_ACKNWLDGE/ERROR_DESC/ERROR_LVL

| diagram | |
|---|---|
| type | restriction of xsd:string |
| facets | enumeration   CRITICAL<br>enumeration   NON_CRITICAL |

### element MESSAGE/MESSAGE_ACKNWLDGE/ERROR_DESC/ERROR_TYPE

| diagram | |
|---|---|
| type | restriction of xsd:string |
| facets | enumeration   MISSING<br>enumeration   DUPLICATE<br>enumeration   FORMAT<br>enumeration   OTH |

### element MESSAGE_TRNSCTN_RSLT_GRP

| diagram | |
|---|---|
| children | MESSAGE_TRNSCTN_RSLT |
| used by | elements   ASSET LICENCE RELEASE WORK |
| source | `<xsd:element name="MESSAGE_TRNSCTN_RSLT_GRP">`<br>`<xsd:complexType>`<br>`<xsd:sequence>`<br>`<xsd:element name="MESSAGE_TRNSCTN_RSLT" maxOccurs="unbounded">`<br>`<xsd:complexType>`<br>`<xsd:sequence>`<br>`<xsd:element ref="USAGE" minOccurs="0"/>`<br>`<xsd:element ref="RGTS_CODE" minOccurs="0"/>`<br>`<xsd:element name="MESSAGE_TRNSCTN_RSLT_CODE">` |

```
                <xsd:simpleType>
                 <xsd:restriction base="xsd:string">
                  <xsd:enumeration value="SUCCESS"/>
                  <xsd:enumeration value="PENDING"/>
                  <xsd:enumeration value="FAILURE"/>
                 </xsd:restriction>
                </xsd:simpleType>
               </xsd:element>
               <xsd:element name="MESSAGE_TRNSCTN_RSLT_REASN_CODE" minOccurs="0">
                <xsd:simpleType>
                 <xsd:restriction base="xsd:string">
                  <xsd:enumeration value="SAMPLE_CLEARANCE"/>
                  <xsd:enumeration value="ADAPTATION_CLEARANCE"/>
                  <xsd:enumeration value="APPROVAL_CLEARANCE"/>
                  <xsd:enumeration value="FIRST_LIC_REFUSAL"/>
                  <xsd:enumeration value="UNAUTH_SAMPLE"/>
                  <xsd:enumeration value="UNAUTH_ADAPTATION"/>
                 </xsd:restriction>
                </xsd:simpleType>
               </xsd:element>
              </xsd:sequence>
             </xsd:complexType>
            </xsd:element>
           </xsd:sequence>
          </xsd:complexType>
         </xsd:element>
```

element **MESSAGE_TRNSCTN_RSLT_GRP/MESSAGE_TRNSCTN_RSLT**

| diagram | |
| --- | --- |
| children | USAGE RGTS_CODE MESSAGE_TRNSCTN_RSLT_CODE MESSAGE_TRNSCTN_RSLT_REASN_CODE |

element
**MESSAGE_TRNSCTN_RSLT_GRP/MESSAGE_TRNSCTN_RSLT/MESSAGE_TRNSCTN_RSLT_CODE**

| diagram | |
| --- | --- |
| type | restriction of xsd:string |
| facets | enumeration  SUCCESS<br>enumeration  PENDING<br>enumeration  FAILURE |
|  |  |

element
**MESSAGE_TRNSCTN_RSLT_GRP/MESSAGE_TRNSCTN_RSLT/MESSAGE_TRNSCTN_RSLT_REAS N_CODE**

| diagram | |
| --- | --- |

**Music Industry Integrated Identifiers Project - XML Schema for Example Messages**

| type | restriction of xsd:string | |
|------|------|------|
| facets | enumeration | SAMPLE_CLEARANCE |
| | enumeration | ADAPTATION_CLEARANCE |
| | enumeration | APPROVAL_CLEARANCE |
| | enumeration | FIRST_LIC_REFUSAL |
| | enumeration | UNAUTH_SAMPLE |
| | enumeration | UNAUTH_ADAPTATION |

element **NAV_VIEW**

| diagram | |
|---------|---|

**Music Industry Integrated Identifiers Project  -  XML Schema for Example Messages**

| children | TITLE ASSOC PTY GRP ASSOC ID CLAIMS PERCENT ROY RATE ROY AMNT COMM AMNT C LINE P LINE DUR EVENT GENRE INST VCL CODE LANG CODE CONTENT CLASS EXT LNK DEL ATTRIB RELTD ITEM CMNTS NAV VIEW ASSET LIST | | | |
|---|---|---|---|---|
| used by | elements   RELEASE/IP BUNDLE NAV VIEW | | | |
| attributes | Name | Type | Use | Value |
| | NAV_VIEW_LVL_NBR | xsd:integer | required | |
| | NAV_VIEW_SEQ_NBR | xsd:integer | required | |
| | NAV_VIEW_COMP_QTY | xsd:integer | required | |
| source | (see source below) | | | |

```xml
<xsd:element name="NAV_VIEW">
 <xsd:complexType>
  <xsd:sequence>
   <xsd:element ref="TITLE" minOccurs="0"/>
   <xsd:element ref="ASSOC_PTY_GRP" minOccurs="0"/>
   <xsd:element ref="ASSOC_ID" minOccurs="0"/>
   <xsd:element ref="CLAIMS_PERCENT" minOccurs="0" maxOccurs="unbounded"/>
   <xsd:element ref="ROY_RATE" minOccurs="0" maxOccurs="unbounded"/>
   <xsd:element ref="ROY_AMNT" minOccurs="0" maxOccurs="unbounded"/>
   <xsd:element ref="COMM_AMNT" minOccurs="0"/>
   <xsd:element name="C_LINE" minOccurs="0"/>
   <xsd:element name="P_LINE" minOccurs="0"/>
   <xsd:element ref="DUR" minOccurs="0"/>
   <xsd:element ref="EVENT" minOccurs="0"/>
   <xsd:element ref="GENRE" minOccurs="0"/>
   <xsd:element ref="INST_VCL_CODE" minOccurs="0"/>
   <xsd:element ref="LANG_CODE" minOccurs="0"/>
   <xsd:element ref="CONTENT_CLASS" minOccurs="0"/>
   <xsd:element ref="EXT_LNK" minOccurs="0" maxOccurs="unbounded"/>
   <xsd:element ref="DEL_ATTRIB" minOccurs="0"/>
   <xsd:element ref="RELTD_ITEM" minOccurs="0"/>
   <xsd:element ref="CMNTS" minOccurs="0"/>
   <xsd:choice>
    <xsd:element ref="NAV_VIEW" maxOccurs="unbounded"/>
    <xsd:element name="ASSET_LIST">
     <xsd:complexType>
      <xsd:sequence>
       <xsd:element name="ASSET_LIST_ITEM" maxOccurs="unbounded">
        <xsd:complexType>
         <xsd:sequence>
          <xsd:element ref="DUR" minOccurs="0"/>
          <xsd:element name="ASSET_REF">
           <xsd:complexType>
            <xsd:attribute ref="DEL_ATTRIB_REF_ID" use="optional"/>
            <xsd:attribute ref="ASSET_REF_ID"/>
           </xsd:complexType>
          </xsd:element>
          <xsd:element name="LNKD_ASSET_LIST" minOccurs="0">
           <xsd:complexType>
            <xsd:sequence>
             <xsd:element name="LNKD_ASSET" maxOccurs="unbounded">
              <xsd:complexType>
               <xsd:sequence>
                <xsd:element ref="DUR" minOccurs="0"/>
                <xsd:element name="ASSET_REF">
                 <xsd:complexType>
                  <xsd:attribute ref="DEL_ATTRIB_REF_ID"/>
                  <xsd:attribute ref="ASSET_REF_ID"/>
                 </xsd:complexType>
```

```
                </xsd:element>
              </xsd:sequence>
              <xsd:attribute name="LNKD_ASSET_SEQ_NBR" type="xsd:integer" use="required"/>
              <xsd:attribute ref="ASSET_TYPE_CODE"/>
            </xsd:complexType>
          </xsd:element>
        </xsd:sequence>
      </xsd:complexType>
    </xsd:element>
    <xsd:element name="HIDDEN_SEQ_FLG" type="xsd:boolean" minOccurs="0"/>
    <xsd:element name="BONUS_SEQ_FLG" type="xsd:boolean" minOccurs="0"/>
  </xsd:sequence>
  <xsd:attribute name="ASSET_SEQ_NBR" type="xsd:integer" use="required"/>
  <xsd:attribute name="ASSET_SEQ_INDEX" type="xsd:integer" use="optional"/>
  <xsd:attribute ref="ASSET_TYPE_CODE"/>
            </xsd:complexType>
          </xsd:element>
        </xsd:sequence>
        <xsd:attribute name="NBR_AUDIO_ASSETS" type="xsd:integer" use="optional"/>
        <xsd:attribute name="NBR_MUS_WRKS" type="xsd:integer" use="optional"/>
        <xsd:attribute name="NBR_COP_MUS_WRKS" type="xsd:integer" use="optional"/>
      </xsd:complexType>
    </xsd:element>
  </xsd:choice>
</xsd:sequence>
<xsd:attribute name="NAV_VIEW_LVL_NBR" type="xsd:integer" use="required"/>
<xsd:attribute name="NAV_VIEW_SEQ_NBR" type="xsd:integer" use="required"/>
<xsd:attribute name="NAV_VIEW_COMP_QTY" type="xsd:integer" use="required"/>
      </xsd:complexType>
    </xsd:element>
```

## element NAV_VIEW/ASSET_LIST

| diagram | ASSET_LIST — ASSET_LIST_ITEM 1..∞ |
|---|---|
| children | ASSET_LIST_ITEM |

| attributes | Name | Type | Use | Value |
|---|---|---|---|---|
| | NBR_AUDIO_ASSETS | xsd:integer | optional | |
| | NBR_MUS_WRKS | xsd:integer | optional | |
| | NBR_COP_MUS_WRKS | xsd:integer | optional | |

## element NAV_VIEW/ASSET_LIST/ASSET_LIST_ITEM

| diagram | ASSET_LIST_ITEM — DUR / ASSET_REF / LNKD_ASSET_LIST / HIDDEN_SEQ_FLG / BONUS_SEQ_FLG |
|---|---|
| children | DUR ASSET_REF LNKD_ASSET_LIST HIDDEN_SEQ_FLG BONUS_SEQ_FLG |

| attributes | Name | Type | Use | Value |
|---|---|---|---|---|
| | ASSET_SEQ_NBR | xsd:integer | required | |

**Music Industry Integrated Identifiers Project - XML Schema for Example Messages**

| | ASSET_SEQ_NBR | xsd:integer | required | |
|---|---|---|---|---|
| | ASSET_SEQ_INDEX | xsd:integer | optional | |
| | ASSET_TYPE_CODE | xsd:string | required | |

### element NAV_VIEW/ASSET_LIST/ASSET_LIST_ITEM/ASSET_REF

| diagram | ASSET_REF | | | |
|---|---|---|---|---|
| attributes | Name | Type | Use | Value |
| | DEL_ATTRIB_REF_ID | xsd:IDREF | optional | |
| | ASSET_REF_ID | xsd:IDREF | required | |

### element NAV_VIEW/ASSET_LIST/ASSET_LIST_ITEM/LNKD_ASSET_LIST

| diagram | LNKD_ASSET_LIST --- LNKD_ASSET 1..∞ |
|---|---|
| children | **LNKD_ASSET** |

### element NAV_VIEW/ASSET_LIST/ASSET_LIST_ITEM/LNKD_ASSET_LIST/LNKD_ASSET

| diagram | LNKD_ASSET --- DUR ASSET_REF | | | |
|---|---|---|---|---|
| children | **DUR ASSET_REF** | | | |
| attributes | Name | Type | Use | Value |
| | LNKD_ASSET_SEQ_NBR | xsd:integer | required | |
| | ASSET_TYPE_CODE | xsd:string | required | |

### element NAV_VIEW/ASSET_LIST/ASSET_LIST_ITEM/LNKD_ASSET_LIST/LNKD_ASSET/ASSET_REF

| diagram | ASSET_REF | | | |
|---|---|---|---|---|
| attributes | Name | Type | Use | Value |
| | DEL_ATTRIB_REF_ID | xsd:IDREF | optional | |
| | ASSET_REF_ID | xsd:IDREF | required | |

**Music Industry Integrated Identifiers Project  -  XML Schema for Example Messages**

element **PRICE**

| diagram | |
|---|---|
| children | USAGE PRICE VALUE TAX CHRTY DON AMOUNT CURR CODE DATE UPLIFT PERCNT CURR CONVRSN |
| used by | elements    LICENCE/INTD SALES RELEASE USAGE QTY |
| source | ```
<xsd:element name="PRICE">
 <xsd:complexType>
  <xsd:sequence>
   <xsd:element ref="USAGE" minOccurs="0"/>
   <xsd:element name="PRICE_VALUE">
    <xsd:complexType>
     <xsd:simpleContent>
      <xsd:extension base="xsd:decimal">
       <xsd:attribute ref="PRICE_TYPE_CODE">
        <xsd:simpleType>
         <xsd:restriction base="xsd:string">
          <xsd:enumeration value="PUB_DEAL_PRICE"/>
          <xsd:enumeration value="CONS_RET_PRICE"/>
          <xsd:enumeration value="ROY_BSD_PRICE"/>
          <xsd:enumeration value="AVG_RET_PRICE"/>
          <xsd:enumeration value="ACT_RLISD_PRICE"/>
          <xsd:enumeration value="RET_PRICE"/>
          <xsd:enumeration value="SUGG_RET_PRICE"/>
         </xsd:restriction>
        </xsd:simpleType>
       </xsd:attribute>
       <xsd:attribute name="TAX_INCL_FLAG" type="xsd:boolean"/>
      </xsd:extension>
     </xsd:simpleContent>
    </xsd:complexType>
   </xsd:element>
   <xsd:element name="TAX" minOccurs="0">
    <xsd:complexType>
     <xsd:sequence>
      <xsd:element name="TAX_TYPE">
       <xsd:simpleType>
        <xsd:restriction base="xsd:string">
         <xsd:enumeration value="SALES_TAX"/>
         <xsd:enumeration value="VAL_ADD_TAX"/>
         <xsd:enumeration value="IMPORT_TAX"/>
         <xsd:enumeration value="WITHOLD_TAX"/>
        </xsd:restriction>
``` |

**Music Industry Integrated Identifiers Project - XML Schema for Example Messages**

```
        </xsd:simpleType>
      </xsd:element>
      <xsd:element name="TAX_AMOUNT" type="xsd:decimal"/>
    </xsd:sequence>
  </xsd:complexType>
</xsd:element>
<xsd:element name="CHRTY_DON_AMOUNT" type="xsd:decimal" minOccurs="0"/>
<xsd:element name="CURR_CODE" type="xsd:string"/>
<xsd:element name="DATE" type="xsd:date" minOccurs="0"/>
<xsd:element name="UPLIFT_PERCNT" type="xsd:decimal" minOccurs="0"/>
<xsd:element ref="CURR_CONVRSN" minOccurs="0" maxOccurs="unbounded"/>
    </xsd:sequence>
  </xsd:complexType>
</xsd:element>
```

## element **PRICE/PRICE_VALUE**

| diagram | PRICE_VALUE | | | |
|---|---|---|---|---|
| type | extension of xsd:decimal | | | |
| attributes | Name | Type | Use | Value |
| | PRICE_TYPE_CODE | xsd:string | required | |
| | TAX_INCL_FLAG | xsd:boolean | | |

## element **PRICE/TAX**

| diagram | TAX — TAX_TYPE / TAX_AMOUNT |
|---|---|
| children | TAX_TYPE TAX_AMOUNT |

## element **PRICE/TAX/TAX_TYPE**

| diagram | TAX_TYPE | |
|---|---|---|
| type | restriction of xsd:string | |
| facets | enumeration | SALES_TAX |
| | enumeration | VAL_ADD_TAX |
| | enumeration | IMPORT_TAX |
| | enumeration | WITHOLD_TAX |

**Music Industry Integrated Identifiers Project  -  XML Schema for Example Messages**

element **PTY_OWNSHP**

| | |
|---|---|
| diagram | |
| children | <u>RGTS CODE</u> <u>SHARE</u> <u>AGRMNT NBR</u> <u>OWNSHP VLD START DATE</u> <u>OWNSHP VLD END DATE</u> <u>TERR</u> |
| used by | element    <u>**ASSOC PTY GRP/ASSOC PTY**</u> |
| source | `<xsd:element name="PTY_OWNSHP">`<br>`<xsd:complexType>`<br>`<xsd:sequence>`<br>`<xsd:element ref="RGTS_CODE"/>`<br>`<xsd:element name="SHARE" type="xsd:decimal"/>`<br>`<xsd:element name="AGRMNT_NBR" type="xsd:integer" minOccurs="0"/>`<br>`<xsd:element name="OWNSHP_VLD_START_DATE" type="xsd:date" minOccurs="0"/>`<br>`<xsd:element name="OWNSHP_VLD_END_DATE" type="xsd:date" minOccurs="0"/>`<br>`<xsd:element ref="TERR" minOccurs="0" maxOccurs="unbounded"/>`<br>`</xsd:sequence>`<br>`</xsd:complexType>`<br>`</xsd:element>` |

element **RELEASE**

**Music Industry Integrated Identifiers Project  -  XML Schema for Example Messages**

| | |
|---|---|
| children | RELEASE_ID LICENCE_ID TITLE ASSOC_PTY_GRP ASSOC_ID CLAIMS_PERCENT ROY_RATE USAGE_QTY COMM_AMNT C_LINE P_LINE DUR EVENT GENRE LANG_CODE COPY_PRTCT_FLG CONTENT_CLASS AVAIL_FLG DEL_ATTRIB BIEM_OVRLIC_FLG BIEM_CMPLTN_FLG RELEASE_CLASS_CODE PRICE USAGE RELTD_ITEM PRICE_CAT_CODE CMNTS EXT_LNK MESSAGE_TRNSCTN_RSLT_GRP IP_BUNDLE |
| used by | element  **SCHEMA_COMP_LNK** |

| attributes | Name | Type | Use | Value |
|---|---|---|---|---|
| | SEQ_NBR | xsd:integer | optional | |
| | MESSAGE_TRNSCTN_ID | xsd:ID | optional | |

| | |
|---|---|
| source | ```xml
<xsd:element name="RELEASE">
<xsd:complexType>
 <xsd:sequence>
  <xsd:element name="RELEASE_ID"/>
  <xsd:element name="LICENCE_ID" type="xsd:string" minOccurs="0"/>
  <xsd:element ref="TITLE" minOccurs="0"/>
  <xsd:element ref="ASSOC_PTY_GRP" minOccurs="0"/>
  <xsd:element ref="ASSOC_ID" minOccurs="0"/>
  <xsd:element ref="CLAIMS_PERCENT" minOccurs="0" maxOccurs="unbounded"/>
  <xsd:element ref="ROY_RATE" minOccurs="0" maxOccurs="unbounded"/>
  <xsd:element ref="USAGE_QTY" minOccurs="0" maxOccurs="unbounded"/>
  <xsd:element ref="COMM_AMNT" minOccurs="0" maxOccurs="unbounded"/>
  <xsd:element name="C_LINE" type="xsd:string" minOccurs="0"/>
  <xsd:element name="P_LINE" type="xsd:string" minOccurs="0"/>
  <xsd:element ref="DUR" minOccurs="0"/>
  <xsd:element ref="EVENT" minOccurs="0" maxOccurs="unbounded"/>
  <xsd:element ref="GENRE" minOccurs="0"/>
  <xsd:element ref="LANG_CODE" minOccurs="0"/>
  <xsd:element ref="COPY_PRTCT_FLG" minOccurs="0"/>
  <xsd:element ref="CONTENT_CLASS" minOccurs="0" maxOccurs="unbounded"/>
  <xsd:element name="AVAIL_FLG" type="xsd:boolean" minOccurs="0"/>
  <xsd:element ref="DEL_ATTRIB" minOccurs="0"/>
  <xsd:element name="BIEM_OVRLIC_FLG" type="xsd:boolean" minOccurs="0"/>
  <xsd:element name="BIEM_CMPLTN_FLG" type="xsd:boolean" minOccurs="0"/>
  <xsd:element name="RELEASE_CLASS_CODE" minOccurs="0">
   <xsd:complexType>
    <xsd:simpleContent>
     <xsd:extension base="xsd:string">
      <xsd:attribute ref="MDATA_NS" use="required"/>
      <xsd:attribute ref="MDATA_NS_VER"/>
     </xsd:extension>
    </xsd:simpleContent>
   </xsd:complexType>
  </xsd:element>
  <xsd:element ref="PRICE" minOccurs="0" maxOccurs="unbounded"/>
  <xsd:element ref="USAGE" minOccurs="0" maxOccurs="unbounded"/>
  <xsd:element ref="RELTD_ITEM" minOccurs="0"/>
  <xsd:element name="PRICE_CAT_CODE" minOccurs="0">
   <xsd:simpleType>
    <xsd:restriction base="xsd:string">
     <xsd:enumeration value="FULLPRICE"/>
     <xsd:enumeration value="MIDPRICE"/>
     <xsd:enumeration value="BUDGET"/>
     <xsd:enumeration value="PX SALES"/>
     <xsd:enumeration value="DELETIONS"/>
     <xsd:enumeration value="CLUB"/>
     <xsd:enumeration value="SUBSCRIPTIONS"/>
     <xsd:enumeration value="PREMIUM"/>
     <xsd:enumeration value="TV_ADVERTISED"/>
    </xsd:restriction>
``` |

**Music Industry Integrated Identifiers Project  —  XML Schema for Example Messages**

```
                          </xsd:simpleType>
                        </xsd:element>
                        <xsd:element ref="CMNTS" minOccurs="0"/>
                        <xsd:element ref="EXT_LNK" minOccurs="0" maxOccurs="unbounded"/>
                        <xsd:element ref="MESSAGE_TRNSCTN_RSLT_GRP" minOccurs="0"/>
                        <xsd:element name="IP_BUNDLE" minOccurs="0">
                          <xsd:complexType>
                            <xsd:sequence>
                              <xsd:element name="ASSET_DESC">
                                <xsd:complexType>
                                  <xsd:sequence>
                                    <xsd:element ref="ASSET" maxOccurs="unbounded"/>
                                  </xsd:sequence>
                                  <xsd:attribute name="NBR_AUDIO_ASSETS" type="xsd:integer" use="optional"/>
                                  <xsd:attribute name="NBR_VIDEO_ASSETS" type="xsd:integer" use="optional"/>
                                  <xsd:attribute name="NBR_TEXT_ASSETS" type="xsd:integer" use="optional"/>
                                  <xsd:attribute name="NBR_IMAGE_ASSETS" type="xsd:integer" use="optional"/>
                                  <xsd:attribute name="NBR_SOFTWARE_ASSETS" type="xsd:integer" use="optional"/>
                                  <xsd:attribute name="DUR_MUS_AUD_ASSETS" type="xsd:timeDuration"/>
                                  <xsd:attribute name="DUR_NON_MUS_AUD_ASSETS" type="xsd:timeDuration"/>
                                  <xsd:attribute name="NBR_MUS_WRKS" type="xsd:integer"/>
                                  <xsd:attribute name="NBR_COP_MUS_WRKS" type="xsd:integer"/>
                                </xsd:complexType>
                              </xsd:element>
                              <xsd:element ref="NAV_VIEW" minOccurs="0"/>
                            </xsd:sequence>
                          </xsd:complexType>
                        </xsd:element>
                      </xsd:sequence>
                      <xsd:attribute name="SEQ_NBR" type="xsd:integer" use="optional"/>
                      <xsd:attribute ref="MESSAGE_TRNSCTN_ID"/>
                    </xsd:complexType>
                  </xsd:element>
```

## element RELEASE/RELEASE_CLASS_CODE

| diagram | RELEASE_CLASS_CODE | | | |
|---|---|---|---|---|
| type | extension of xsd:string | | | |
| attributes | Name | Type | Use | Value |
| | MDATA_NS | xsd:string | | |
| | MDATA_NS_VER | xsd:string | | |

## element RELEASE/PRICE_CAT_CODE

| diagram | PRICE_CAT_CODE |
|---|---|
| type | restriction of xsd:string |
| facets | enumeration FULLPRICE |
| | enumeration MIDPRICE |
| | enumeration BUDGET |
| | enumeration PX SALES |
| | enumeration DELETIONS |
| | enumeration CLUB |
| | enumeration SUBSCRIPTIONS |

|  | enumeration | SUBSCRIPTIONS |
|---|---|---|
|  | . enumeration | PREMIUM |
|  | enumeration | TV_ADVERTISED |

|  |  |
|---|---|
|  |  |

### element RELEASE/IP_BUNDLE

| diagram | |
|---|---|
| children | **ASSET_DESC NAV_VIEW** |
|  |  |

### element RELEASE/IP_BUNDLE/ASSET_DESC

| diagram | | | | |
|---|---|---|---|---|
| children | **ASSET** | | | |
| attributes | Name | Type | Use | Value |
|  | NBR_AUDIO_ASSETS | xsd:Integer | optional |  |
|  | NBR_VIDEO_ASSETS | xsd:Integer | optional |  |
|  | NBR_TEXT_ASSETS | xsd:Integer | optional |  |
|  | NBR_IMAGE_ASSETS | xsd:Integer | optional |  |
|  | NBR_SOFTWARE_ASSE TS | xsd:Integer | optional |  |
|  | DUR_MUS_AUD_ASSET S | xsd:timeDuration |  |  |
|  | DUR_NON_MUS_AUD_A SSETS | xsd:timeDuration |  |  |
|  | NBR_MUS_WRKS | xsd:Integer |  |  |
|  | NBR_COP_MUS_WRKS | xsd:Integer |  |  |

**Music Industry Integrated Identifiers Project - XML Schema for Example Messages**

element **RELTD_ITEM**

| | |
|---|---|
| diagram | |
| children | TITLE ASSOC_PTY_GRP ASSOC_ID FRMT NAV_VIEW_SEQ_NBR ASSET_SEQ_BNR ASSET_SEQ_INDEX VOL_NBR SIDE_NBR TRK_NBR SUB_TRK_NBR |
| used by | elements  ASSET NAV_VIEW RELEASE WORK |

| attributes | Name | Type | Use | Value |
|---|---|---|---|---|
| | RELNSHP_CODE | xsd:string | required | |
| | RELTD_ITEM_CODE | xsd:string | required | |
| | RELTD_ASSET_TYPE_C ODE | xsd:string | optional | |

| | |
|---|---|
| source | ```
<xsd:element name="RELTD_ITEM">
  <xsd:complexType>
    <xsd:sequence>
      <xsd:element ref="TITLE" minOccurs="0"/>
      <xsd:element ref="ASSOC_PTY_GRP" minOccurs="0"/>
      <xsd:element ref="ASSOC_ID" minOccurs="0"/>
      <xsd:element ref="FRMT" minOccurs="0"/>
      <xsd:element name="NAV_VIEW_SEQ_NBR" type="xsd:integer" minOccurs="0"/>
      <xsd:element name="ASSET_SEQ_BNR" type="xsd:integer" minOccurs="0"/>
      <xsd:element name="ASSET_SEQ_INDEX" type="xsd:integer" minOccurs="0"/>
      <xsd:element name="VOL_NBR" type="xsd:integer" minOccurs="0"/>
      <xsd:element name="SIDE_NBR" type="xsd:integer" minOccurs="0"/>
      <xsd:element name="TRK_NBR" type="xsd:integer" minOccurs="0"/>
      <xsd:element name="SUB_TRK_NBR" type="xsd:integer" minOccurs="0"/>
    </xsd:sequence>
    <xsd:attribute name="RELNSHP_CODE" use="required">
      <xsd:simpleType>
        <xsd:restriction base="xsd:string">
          <xsd:enumeration value="EQUIV_PHYSICAL_PROD"/>
          <xsd:enumeration value="EQUIV_EMD_PROD"/>
          <xsd:enumeration value="TAKEN_FROM"/>
          <xsd:enumeration value="CMPLTN_OF"/>
          <xsd:enumeration value="ORIG_VER"/>
          <xsd:enumeration value="COMPNENT_OF"/>
          <xsd:enumeration value="WHICH_CONTAINS"/>
``` |

```
          </xsd:restriction>
        </xsd:simpleType>
      </xsd:attribute>
      <xsd:attribute name="RELTD_ITEM_CODE" use="required">
        <xsd:simpleType>
          <xsd:restriction base="xsd:string">
            <xsd:enumeration value="ASSET"/>
            <xsd:enumeration value="RELEASE"/>
            <xsd:enumeration value="WORK"/>
          </xsd:restriction>
        </xsd:simpleType>
      </xsd:attribute>
      <xsd:attribute name="RELTD_ASSET_TYPE_CODE" use="optional">
        <xsd:simpleType>
          <xsd:restriction base="xsd:string">
            <xsd:enumeration value="AUDIO"/>
            <xsd:enumeration value="VIDEO"/>
            <xsd:enumeration value="IMAGE"/>
            <xsd:enumeration value="TEXT"/>
            <xsd:enumeration value="SOFTWARE"/>
          </xsd:restriction>
        </xsd:simpleType>
      </xsd:attribute>
    </xsd:complexType>
  </xsd:element>
```

## element RGTS_CODE

| diagram | RGTS_CODE | |
|---|---|---|
| type | restriction of xsd:string | |
| used by | elements | CLAIMS PERCENT COMM AMNT COP STATUS LICENCE MESSAGE TRNSCTN RSLT GRP/MESSAGE TRNSCTN RSLT PTY OWNSHP ROY AMNT ROY RATE |
| facets | enumeration | PERF_RGT |
| | enumeration | THEAT_PERF_RGT |
| | enumeration | RAD_BRDCST_RGT |
| | enumeration | TV_BRDCST_RGT |
| | enumeration | ON_DMND_TRANS_RGT |
| | enumeration | RETRANS_RGT |
| | enumeration | RETRANS_OF_PERF_RGT |
| | enumeration | PUB_PERF_RAD_BRDCST_RGT |
| | enumeration | PUB_PERF_TV_BRDCST_RGT |
| | enumeration | PUB_PER_REC_RGT |
| | enumeration | MECH_RGT |
| | enumeration | REPROD_RGT |
| | enumeration | SYNCH_RGT |
| | enumeration | DBASE_RGT |
| | enumeration | BLNK_TPE_REM_RGT |
| | enumeration | REPROG_REM_RGT |
| | enumeration | RNTL_LNDG_RGT |
| | enumeration | RESALE_RGT |
| | enumeration | PHONO_RGT |

**Music Industry Integrated Identifiers Project  -  XML Schema for Example Messages**

element **ROY_AMNT**

| | |
|---|---|
| diagram | |
| children | RGTS CODE USAGE CURR CODE GROSS ROY NET ROY LICENSOR PM DP SAI PAI SPKN WRD BUY OUT LICENSOR ADVANCE ROY ADJMNT |
| used by | elements    ASSET MESSAGE/MESSAGE SUMMARY NAV VIEW USAGE QTY WORK |
| source | <xsd:element name="ROY_AMNT"><br><xsd:complexType><br><xsd:sequence><br><xsd:element ref="RGTS_CODE" minOccurs="0"/><br><xsd:element ref="USAGE" minOccurs="0"/><br><xsd:element ref="CURR_CODE"/><br><xsd:element name="GROSS_ROY"><br><xsd:complexType><br><xsd:sequence><br><xsd:element ref="ROY_AMNT_VALUE"/><br><xsd:element ref="CURR_CONVRSN" minOccurs="0"/><br></xsd:sequence><br></xsd:complexType><br></xsd:element><br><xsd:element name="NET_ROY"><br><xsd:complexType><br><xsd:sequence><br><xsd:element ref="ROY_AMNT_VALUE"/><br><xsd:element ref="CURR_CONVRSN" minOccurs="0"/><br></xsd:sequence><br></xsd:complexType><br></xsd:element><br><xsd:element name="LICENSOR" minOccurs="0"><br><xsd:complexType><br><xsd:sequence><br><xsd:element ref="ROY_AMNT_VALUE"/><br><xsd:element ref="CURR_CONVRSN" minOccurs="0"/> |

75

```
      </xsd:sequence>
    </xsd:complexType>
  </xsd:element>
<xsd:element name="PM" minOccurs="0">
  <xsd:complexType>
    <xsd:sequence>
      <xsd:element ref="ROY_AMNT_VALUE"/>
      <xsd:element ref="CURR_CONVRSN" minOccurs="0"/>
    </xsd:sequence>
  </xsd:complexType>
</xsd:element>
<xsd:element name="DP" minOccurs="0">
  <xsd:complexType>
    <xsd:sequence>
      <xsd:element ref="ROY_AMNT_VALUE"/>
      <xsd:element ref="CURR_CONVRSN" minOccurs="0"/>
    </xsd:sequence>
  </xsd:complexType>
</xsd:element>
<xsd:element name="SAL_PAI" minOccurs="0">
  <xsd:complexType>
    <xsd:sequence>
      <xsd:element ref="ROY_AMNT_VALUE"/>
      <xsd:element ref="CURR_CONVRSN" minOccurs="0"/>
    </xsd:sequence>
  </xsd:complexType>
</xsd:element>
<xsd:element name="SPKN_WRD" minOccurs="0">
  <xsd:complexType>
    <xsd:sequence>
      <xsd:element ref="ROY_AMNT_VALUE"/>
      <xsd:element ref="CURR_CONVRSN" minOccurs="0"/>
    </xsd:sequence>
  </xsd:complexType>
</xsd:element>
<xsd:element name="BUY_OUT" minOccurs="0">
  <xsd:complexType>
    <xsd:sequence>
      <xsd:element ref="ROY_AMNT_VALUE"/>
      <xsd:element ref="CURR_CONVRSN" minOccurs="0"/>
    </xsd:sequence>
  </xsd:complexType>
</xsd:element>
<xsd:element name="LICENSOR_ADVANCE" minOccurs="0">
  <xsd:complexType>
    <xsd:sequence>
      <xsd:element ref="ROY_AMNT_VALUE"/>
      <xsd:element ref="CURR_CONVRSN" minOccurs="0"/>
    </xsd:sequence>
  </xsd:complexType>
</xsd:element>
<xsd:element name="ROY_ADJMNT" minOccurs="0">
  <xsd:complexType>
    <xsd:sequence>
      <xsd:element ref="ADJMNT_CODE"/>
      <xsd:element name="ADJMNT_PERCNT" minOccurs="0">
        <xsd:complexType>
          <xsd:simpleContent>
            <xsd:extension base="xsd:decimal">
```

```
                <xsd:attribute name="ADJMNT_PERCNT_BASIS">
                  <xsd:simpleType>
                    <xsd:restriction base="xsd:string">
                      <xsd:enumeration value="UNITS"/>
                      <xsd:enumeration value="EARNINGS"/>
                    </xsd:restriction>
                  </xsd:simpleType>
                </xsd:attribute>
              </xsd:extension>
            </xsd:simpleContent>
          </xsd:complexType>
        </xsd:element>
        <xsd:element name="ADJMNT_AMNT_VALUE" type="xsd:decimal"/>
        <xsd:element ref="CURR_CONVRSN" minOccurs="0"/>
      </xsd:sequence>
    </xsd:complexType>
  </xsd:element>
  </xsd:sequence>
  </xsd:complexType>
</xsd:element>
```

### element ROY_AMNT/GROSS_ROY

| diagram | |
| --- | --- |
| children | ROY_AMNT_VALUE CURR_CONVRSN |

### element ROY_AMNT/NET_ROY

| diagram | |
| --- | --- |
| children | ROY_AMNT_VALUE CURR_CONVRSN |

### element ROY_AMNT/LICENSOR

| diagram | |
| --- | --- |
| children | ROY_AMNT_VALUE CURR_CONVRSN |

### element ROY_AMNT/PM

| diagram | |
| --- | --- |
| children | ROY_AMNT_VALUE CURR_CONVRSN |

Music Industry Integrated Identifiers Project  -  XML Schema for Example Messages

### element ROY_AMNT/DP

| diagram | |
|---|---|
| children | ROY AMNT VALUE CURR CONVRSN |

### element ROY_AMNT/SAL_PAI

| diagram | |
|---|---|
| children | ROY AMNT VALUE CURR CONVRSN |

### element ROY_AMNT/SPKN_WRD

| diagram | |
|---|---|
| children | ROY AMNT VALUE CURR CONVRSN |

### element ROY_AMNT/BUY_OUT

| diagram | |
|---|---|
| children | ROY AMNT VALUE CURR CONVRSN |

### element ROY_AMNT/LICENSOR_ADVANCE

| diagram | |
|---|---|
| children | ROY AMNT VALUE CURR CONVRSN |

### element ROY_AMNT/ROY_ADJMNT

| diagram | |
|---|---|
| children | ADJMNT CODE ADJMNT PERCNT ADJMNT AMNT VALUE CURR CONVRSN |

### element ROY_AMNT/ROY_ADJMNT/ADJMNT_PERCNT

| diagram | |
|---|---|

78

| type | extension of xsd:decimal | | | |
|---|---|---|---|---|
| attributes | Name | Type | Use | Value |
| | ADJMNT_PERCNT_BASIS | xsd:string | | |

## element **ROY_AMNT_VALUE**

| diagram | ROY_AMNT_VALUE |
|---|---|
| type | **xsd:decimal** |
| used by | elements  ROY AMNT/BUY OUT ROY AMNT/DP ROY AMNT/GROSS ROY ROY AMNT/LICENSOR ROY AMNT/LICENSOR ADVANCE ROY AMNT/NET ROY ROY AMNT/PM ROY AMNT/SAI PAI ROY AMNT/SPKN WRD |

## element **ROY_RATE**

| diagram | |
|---|---|
| children | RGTS CODE USAGE STAT RATE CODE PRICE TYPE ROY CALC CODE ROY RATE VALUE RATE ADJMNT CURR CODE TERR |
| used by | elements   ASSET NAV VIEW RELEASE WORK |
| source | `<xsd:element name="ROY_RATE">`<br>`  <xsd:complexType>`<br>`    <xsd:sequence>`<br>`      <xsd:element ref="RGTS_CODE" maxOccurs="unbounded"/>`<br>`      <xsd:element ref="USAGE" minOccurs="0"/>`<br>`      <xsd:choice>`<br>`        <xsd:element name="STAT_RATE_CODE" minOccurs="0">`<br>`          <xsd:simpleType>`<br>`            <xsd:restriction base="xsd:string">`<br>`              <xsd:enumeration value="STAT_RATE"/>`<br>`              <xsd:enumeration value="MIN_STAT_RATE"/>`<br>`              <xsd:enumeration value="CNTRL_COMP_CLAUSE"/>`<br>`            </xsd:restriction>`<br>`          </xsd:simpleType>`<br>`        </xsd:element>`<br>`        <xsd:element name="PRICE_TYPE" minOccurs="0">`<br>`          <xsd:complexType>`<br>`            <xsd:attribute ref="PRICE_TYPE_CODE"/>` |

```
          </xsd:complexType>
        </xsd:element>
      </xsd:choice>
      <xsd:element name="ROY_CALC_CODE">
       <xsd:simpleType>
        <xsd:restriction base="xsd:string">
         <xsd:enumeration value="PERCNT_PRICE"/>
         <xsd:enumeration value="PERCNT_STAT"/>
         <xsd:enumeration value="UNIT_FEE_RATE"/>
        </xsd:restriction>
       </xsd:simpleType>
      </xsd:element>
      <xsd:element name="ROY_RATE_VALUE" type="xsd:decimal"/>
      <xsd:element name="RATE_ADJMNT" minOccurs="0">
       <xsd:complexType>
         <xsd:sequence>
          <xsd:element ref="ADJMNT_CODE"/>
          <xsd:element name="ADJMNT_VALUE" type="xsd:decimal"/>
         </xsd:sequence>
       </xsd:complexType>
      </xsd:element>
      <xsd:element name="CURR_CODE" type="xsd:string" minOccurs="0"/>
      <xsd:element ref="TERR" minOccurs="0"/>
     </xsd:sequence>
    </xsd:complexType>
  </xsd:element>
```

### element ROY_RATE/STAT_RATE_CODE

| diagram | STAT_RATE_CODE |
| --- | --- |
| type | restriction of xsd:string |
| facets | enumeration STAT_RATE |
| | enumeration MIN_STAT_RATE |
| | enumeration CNTRL_COMP_CLAUSE |

### element ROY_RATE/PRICE_TYPE

| diagram | PRICE_TYPE | | | |
| --- | --- | --- | --- | --- |
| attributes | Name | Type | Use | Value |
| | PRICE_TYPE_CODE | xsd:string | required | |

### element ROY_RATE/ROY_CALC_CODE

| diagram | ROY_CALC_CODE |
| --- | --- |
| type | restriction of xsd:string |
| facets | enumeration PERCNT_PRICE |
| | enumeration PERCNT_STAT |
| | enumeration UNIT_FEE_RATE |

**Music Industry Integrated Identifiers Project  -  XML Schema for Example Messages**

element **ROY_RATE/RATE_ADJMNT**

| diagram | |
|---|---|
| children | ADJMNT CODE ADJMNT VALUE |

element **RPT_PERIOD_DURATION**

| diagram | RPT_PERIOD_DURATION |
|---|---|
| type | xsd:timeDuration |
| used by | elements  MESSAGE USAGE QTY |

element **RPT_PERIOD_END**

| diagram | RPT_PERIOD_END |
|---|---|
| type | xsd:date |
| used by | elements  MESSAGE USAGE QTY |

element **RPT_PERIOD_START**

| diagram | RPT_PERIOD_START |
|---|---|
| type | xsd:date |
| used by | elements  MESSAGE USAGE QTY |
| source | <xsd:element name="RPT_PERIOD_START" type="xsd:date"/> |

element **SCHEMA_COMP_LNK**

| diagram | | | | |
|---|---|---|---|---|
| children | WORK RELEASE LICENCE ASSET | | | |
| used by | elements  ASSET LICENCE MESSAGE/MESSAGE CONTENT WORK | | | |
| attributes | Name | Type | Use | Value |
| | LNKD_COMPONENT | xsd:string | required | |
| | LNKD_RELATIONSHIP_CODE | xsd:string | required | |
| | LNKD_DUR | xsd:timeDuration | optional | |
| source | <xsd:element name="SCHEMA_COMP_LNK"> <xsd:complexType> | | | |

**Music Industry Integrated Identifiers Project  -  XML Schema for Example Messages**

```
<xsd:choice>
  <xsd:element ref="WORK" maxOccurs="unbounded"/>
  <xsd:element ref="RELEASE" maxOccurs="unbounded"/>
  <xsd:element ref="LICENCE" maxOccurs="unbounded"/>
  <xsd:element ref="ASSET" maxOccurs="unbounded"/>
</xsd:choice>
<xsd:attribute name="LNKD_COMPONENT" use="required">
  <xsd:simpleType>
    <xsd:restriction base="xsd:string">
      <xsd:enumeration value="WORK"/>
      <xsd:enumeration value="RELEASE"/>
      <xsd:enumeration value="ASSET"/>
      <xsd:enumeration value="LICENCE"/>
    </xsd:restriction>
  </xsd:simpleType>
</xsd:attribute>
<xsd:attribute name="LNKD_RELATIONSHIP_CODE" use="required">
  <xsd:simpleType>
    <xsd:restriction base="xsd:string">
      <xsd:enumeration value="MESSAGE_SUBJECT"/>
      <xsd:enumeration value="LICENCE_SUBJECT"/>
      <xsd:enumeration value="SAMPLED_ASSET"/>
      <xsd:enumeration value="SAMPLED_WORK"/>
      <xsd:enumeration value="MEDLEY_FRAGMENT"/>
      <xsd:enumeration value="FULL_WORK"/>
      <xsd:enumeration value="CONTAINS_ASSET"/>
    </xsd:restriction>
  </xsd:simpleType>
</xsd:attribute>
<xsd:attribute name="LNKD_DUR" type="xsd:timeDuration" use="optional"/>
</xsd:complexType>
</xsd:element>
```

## element TERR

| diagram | TERR |
|---|---|
| type | extension of xsd:string |
| used by | elements | ASSOC_PTY_GRP/ASSOC_PTY CLAIMS_PERCENT COMM_AMNT CONTENT_CLASS COP_STATUS EVENT ASSOC_PTY_GRP/ASSOC_PTY/PTY_ID PTY_OWNSHP ROY_RATE USAGE/USAGE_RSTRCT/TERR_RSTRCT USAGE_QTY |

| attributes | Name | Type | Use | Value |
|---|---|---|---|---|
| | TERR_CODE_SCHEME | xsd:string | required | |
| | TERR_CODE_VER | xsd:string | | |

| source |
|---|
| ```
<xsd:element name="TERR">
  <xsd:complexType>
    <xsd:simpleContent>
      <xsd:extension base="xsd:string">
        <xsd:attribute name="TERR_CODE_SCHEME" use="required">
          <xsd:simpleType>
            <xsd:restriction base="xsd:string">
              <xsd:enumeration value="ISO_3166"/>
              <xsd:enumeration value="CIS_TIS"/>
            </xsd:restriction>
          </xsd:simpleType>
        </xsd:attribute>
        <xsd:attribute name="TERR_CODE_VER" type="xsd:string"/>
``` |

|  | `</xsd:extension>`<br>`</xsd:simpleContent>`<br>`</xsd:complexType>`<br>`</xsd:element>` |
| --- | --- |

## element TITLE

| diagram | |
| --- | --- |
| children | ORIG_TITLE ALT_TITLE ORIG_TITLE_TRANS FORMAL_TITLE SRCH_TITLE DISP_TITLE INCORRECT_TITLE FIRST_LINE_TXT RESTRCTD_TITLE PART_TITLE UNK_TITLE_TYPE |
| used by | elements    ASSET NAV_VIEW RELEASE RELTD_ITEM WORK |
| source | `<xsd:element name="TITLE">`<br>`<xsd:complexType>`<br>`<xsd:choice maxOccurs="unbounded">`<br>`<xsd:element name="ORIG_TITLE">`<br>`<xsd:complexType>`<br>`<xsd:simpleContent>`<br>`<xsd:extension base="xsd:string">`<br>`<xsd:attribute ref="LANG_CODE"/>`<br>`</xsd:extension>`<br>`</xsd:simpleContent>`<br>`</xsd:complexType>`<br>`</xsd:element>`<br>`<xsd:element name="ALT_TITLE">`<br>`<xsd:complexType>`<br>`<xsd:simpleContent>`<br>`<xsd:extension base="xsd:string">`<br>`<xsd:attribute ref="LANG_CODE"/>`<br>`</xsd:extension>`<br>`</xsd:simpleContent>`<br>`</xsd:complexType>`<br>`</xsd:element>`<br>`<xsd:element name="ORIG_TITLE_TRANS">`<br>`<xsd:complexType>`<br>`<xsd:simpleContent>`<br>`<xsd:extension base="xsd:string">` |

```
          <xsd:attribute ref="LANG_CODE"/>
        </xsd:extension>
      </xsd:simpleContent>
    </xsd:complexType>
  </xsd:element>
  <xsd:element name="FORMAL_TITLE">
    <xsd:complexType>
      <xsd:simpleContent>
        <xsd:extension base="xsd:string">
          <xsd:attribute ref="LANG_CODE"/>
        </xsd:extension>
      </xsd:simpleContent>
    </xsd:complexType>
  </xsd:element>
  <xsd:element name="SRCH_TITLE">
    <xsd:complexType>
      <xsd:simpleContent>
        <xsd:extension base="xsd:string">
          <xsd:attribute ref="LANG_CODE"/>
        </xsd:extension>
      </xsd:simpleContent>
    </xsd:complexType>
  </xsd:element>
  <xsd:element name="DISP_TITLE">
    <xsd:complexType>
      <xsd:simpleContent>
        <xsd:extension base="xsd:string">
          <xsd:attribute ref="LANG_CODE"/>
        </xsd:extension>
      </xsd:simpleContent>
    </xsd:complexType>
  </xsd:element>
  <xsd:element name="INCORRECT_TITLE">
    <xsd:complexType>
      <xsd:simpleContent>
        <xsd:extension base="xsd:string">
          <xsd:attribute ref="LANG_CODE"/>
        </xsd:extension>
      </xsd:simpleContent>
    </xsd:complexType>
  </xsd:element>
  <xsd:element name="FIRST_LINE_TXT">
    <xsd:complexType>
      <xsd:simpleContent>
        <xsd:extension base="xsd:string">
          <xsd:attribute ref="LANG_CODE"/>
        </xsd:extension>
      </xsd:simpleContent>
    </xsd:complexType>
  </xsd:element>
  <xsd:element name="RESTRCTD_TITLE">
    <xsd:complexType>
      <xsd:simpleContent>
        <xsd:extension base="xsd:string">
          <xsd:attribute ref="LANG_CODE"/>
        </xsd:extension>
      </xsd:simpleContent>
    </xsd:complexType>
  </xsd:element>
```

**Music Industry Integrated Identifiers Project  -  XML Schema for Example Messages**

```
<xsd:element name="PART_TITLE">
 <xsd:complexType>
  <xsd:simpleContent>
   <xsd:extension base="xsd:string">
    <xsd:attribute ref="LANG_CODE"/>
   </xsd:extension>
  </xsd:simpleContent>
 </xsd:complexType>
</xsd:element>
<xsd:element name="UNK_TITLE_TYPE">
 <xsd:complexType>
  <xsd:simpleContent>
   <xsd:extension base="xsd:string">
    <xsd:attribute ref="LANG_CODE"/>
   </xsd:extension>
  </xsd:simpleContent>
 </xsd:complexType>
</xsd:element>
</xsd:choice>
</xsd:complexType>
</xsd:element>
```

## element TITLE/<all title types>

| diagram | | | | |
|---|---|---|---|---|
| type | extension of xsd:string | | | |
| attributes | Name | Type | Use | Value |
| | LANG_CODE | xsd:string | | |

## element USAGE

| | |
|---|---|
| diagram | |
| children | USAGE CODE END USER TYPE DIST CHAN CODE RTIL MDL CODE USAGE RSTRCT |
| used by | elements CLAIMS PERCENT COMM AMNT LICENCE MESSAGE TRNSCTN RSLT GRP/MESSAGE TRNSCTN RSLT PRICE RELEASE ROY AMNT ROY RATE USAGE QTY |
| source | see below |

```
<xsd:element name="USAGE">
 <xsd:complexType>
  <xsd:sequence>
   <xsd:element name="USAGE_CODE">
    <xsd:simpleType>
     <xsd:restriction base="xsd:string"> .
      <xsd:enumeration value="PHYS_PROD"/>
      <xsd:enumeration value="UPLOAD"/>
      <xsd:enumeration value="DWLND"/>
      <xsd:enumeration value="STRM"/>
      <xsd:enumeration value="BRDCST"/>
      <xsd:enumeration value="LIVE_PERF"/>
```

Music Industry Integrated Identifiers Project - XML Schema for Example Messages

```xml
        </xsd:restriction>
       </xsd:simpleType>
      </xsd:element>
      <xsd:element ref="END_USER_TYPE" minOccurs="0"/>
      <xsd:element ref="DIST_CHAN_CODE" minOccurs="0"/>
      <xsd:element name="RTIL_MDL_CODE" minOccurs="0">
       <xsd:simpleType>
        <xsd:restriction base="xsd:string">
         <xsd:enumeration value="SBSCRPT"/>
         <xsd:enumeration value="PAY_PER_REL"/>
         <xsd:enumeration value="NO_CHGE_CONS"/>
        </xsd:restriction>
       </xsd:simpleType>
      </xsd:element>
      <xsd:element name="USAGE_RSTRCT" minOccurs="0">
       <xsd:complexType>
        <xsd:sequence>
         <xsd:element name="USE_RSTRCT" minOccurs="0">
          <xsd:complexType>
           <xsd:sequence>
            <xsd:element name="RSTRCT_START_DATE" type="xsd:date" minOccurs="0"/>
            <xsd:element name="RSTRCT_END_DATE" type="xsd:date" minOccurs="0"/>
            <xsd:element name="RSTRCT_NBR_PLAYS" type="xsd:integer" minOccurs="0"/>
            <xsd:element name="RSTRCT_NBR_DAYS" type="xsd:integer" minOccurs="0"/>
            <xsd:element name="RSTRCT_NBR_COPIES" type="xsd:integer" minOccurs="0"/>
            <xsd:element name="RSTRCT_NBR_DEVICES" type="xsd:integer" minOccurs="0"/>
            <xsd:element name="RSTRCT_TETHRD_SRVC_FLG" type="xsd:boolean" minOccurs="0"/>
            <xsd:element name="RSTRCT_FRMT" type="xsd:string" minOccurs="0" maxOccurs="unbounded"/>
            <xsd:element name="RSTRCT_DRM_PROV" type="xsd:string" minOccurs="0" maxOccurs="unbounded"/>
           </xsd:sequence>
          </xsd:complexType>
         </xsd:element>
         <xsd:element name="TERR_RSTRCT" minOccurs="0">
          <xsd:complexType>
           <xsd:sequence>
            <xsd:element ref="TERR" maxOccurs="unbounded"/>
           </xsd:sequence>
           <xsd:attribute name="INCL_EXCL_IND" use="required">
            <xsd:simpleType>
             <xsd:restriction base="xsd:string">
              <xsd:enumeration value="INCLUDE"/>
              <xsd:enumeration value="EXCLUDE"/>
             </xsd:restriction>
            </xsd:simpleType>
           </xsd:attribute>
          </xsd:complexType>
         </xsd:element>
        </xsd:sequence>
       </xsd:complexType>
      </xsd:element>
```

element **USAGE/USAGE_CODE**

**Music Industry Integrated Identifiers Project  -  XML Schema for Example Messages**

| diagram | USAGE_CODE |
|---------|------------|
| type | restriction of xsd:string |
| facets | enumeration PHYS_PROD |
| | enumeration UPLOAD |
| | enumeration DWLND |
| | enumeration STRM |
| | enumeration BRDCST |
| | enumeration LIVE_PERF |

### element USAGE/RTIL_MDL_CODE

| diagram | RTIL_MDL_CODE |
|---------|---------------|
| type | restriction of xsd:string |
| facets | enumeration SBSCRPT |
| | enumeration PAY_PER_REL |
| | enumeration NO_CHGE_CONS |

### element USAGE/USAGE_RSTRCT

| diagram | |
|---------|----------------------|
| children | USE_RSTRCT TERR_RSTRCT |

### element USAGE/USAGE_RSTRCT/USE_RSTRCT

| diagram | |
|---------|----------------------|
| children | RSTRCT_START_DATE RSTRCT_END_DATE RSTRCT_NBR_PLAYS RSTRCT_NBR_DAYS RSTRCT_NBR_COPIES RSTRCT_NBR_DEVICES RSTRCT_TETHRD_SRVC_FLG RSTRCT_FRMT RSTRCT_DRM_PROV |

**Music Industry Integrated Identifiers Project — XML Schema for Example Messages**

element USAGE/USAGE_RSTRCT/TERR_RSTRCT

| diagram | |
|---|---|

| children | TERR |
|---|---|

| attributes | Name | Type | Use | Value |
|---|---|---|---|---|
| | INCL_EXCL_IND | xsd:string | required | |

element **USAGE_QTY**

| diagram | |
|---|---|

| children | RPT PERIOD DURATION RPT PERIOD START RPT PERIOD END USAGE NET USAGE UNITS GROSS USAGE UNITS ADJMNT QTY PRICE TERR ROY AMNT |
|---|---|
| used by | elements    ASSOC PTY GRP/ASSOC PTY EVENT LICENCE/INTD SALES MESSAGE/MESSAGE SUMMARY RELEASE |
| source | see below |

```
<xsd:element name="USAGE_QTY">
  <xsd:complexType>
    <xsd:sequence>
      <xsd:element ref="RPT_PERIOD_DURATION" minOccurs="0"/>
      <xsd:element ref="RPT_PERIOD_START" minOccurs="0"/>
      <xsd:element ref="RPT_PERIOD_END" minOccurs="0"/>
      <xsd:element ref="USAGE"/>
      <xsd:element name="NET_USAGE_UNITS"/>
      <xsd:element name="GROSS_USAGE_UNITS"/>
      <xsd:element name="ADJMNT_QTY" minOccurs="0">
        <xsd:complexType>
          <xsd:sequence>
            <xsd:element ref="ADJMNT_CODE"/>
            <xsd:element name="ADJMNT_VALUE" type="xsd:integer"/>
          </xsd:sequence>
        </xsd:complexType>
      </xsd:element>
      <xsd:element ref="PRICE" minOccurs="0"/>
      <xsd:element ref="TERR" minOccurs="0"/>
      <xsd:element ref="ROY_AMNT" minOccurs="0" maxOccurs="unbounded"/>
    </xsd:sequence>
```

**Music Industry Integrated Identifiers Project - XML Schema for Example Messages**

|  | ```</xsd:complexType>```<br>```</xsd:element>``` |
|---|---|

## element USAGE_QTY/ADJMNT_QTY

| diagram | |
|---|---|
| children | ADJMNT_CODE ADJMNT_VALUE |

Music Industry Integrated Identifiers Project - XML Schema for Example Messages

element WORK

| diagram | |
|---------|---|

**Music Industry Integrated Identifiers Project  -  XML Schema for Example Messages**

| children | TITLE OP_NBR NBR_IN_OP COMP_CAT_NBR NBR_IN_COMP_CAT LANG_CODE ASSOC_PTY_GRP ASSOC_ID TXT_MUS_REL_CODE CMPSIT_TYPE_CODE EXPT_TYPE_CODE VER_TYPE MUSIC_ARR_CODE LYRIC_ADAPT_CODE COP_STATUS FIRST_LIC_REFSL CMNTS CLAIMS_PERCENT ROY_RATE ROY_AMNT EVENT GENRE INSTRMNT RELTD_ITEM EXT_LNK CONTENT_CLASS MESSAGE_TRNSCTN_RSLT_GRP SCHEMA_COMP_LNK |
|---|---|
| used by | element  **SCHEMA_COMP_LNK** |

| attributes | Name | Type | Use | Value |
|---|---|---|---|---|
| | WORK_TYPE_CODE | xsd:string | required | |
| | SEQ_NBR | xsd:integer | optional | |
| | MESSAGE_TRNSCTN_ID | xsd:ID | optional | |

| source |
|---|

```
<xsd:element name="WORK">
<xsd:complexType>
 <xsd:sequence>
  <xsd:element ref="TITLE" minOccurs="0"/>
  <xsd:element name="OP_NBR" type="xsd:string" minOccurs="0"/>
  <xsd:element name="NBR_IN_OP" type="xsd:string" minOccurs="0"/>
  <xsd:element name="COMP_CAT_NBR" type="xsd:string" minOccurs="0"/>
  <xsd:element name="NBR_IN_COMP_CAT" type="xsd:string" minOccurs="0"/>
  <xsd:element ref="LANG_CODE" minOccurs="0"/>
  <xsd:element ref="ASSOC_PTY_GRP"/>
  <xsd:element ref="ASSOC_ID" minOccurs="0"/>
  <xsd:element name="TXT_MUS_REL_CODE" minOccurs="0">
   <xsd:simpleType>
    <xsd:restriction base="xsd:string">
     <xsd:enumeration value="MUS"/>
     <xsd:enumeration value="MUS_TXT"/>
     <xsd:enumeration value="TXT"/>
    </xsd:restriction>
   </xsd:simpleType>
  </xsd:element>
  <xsd:element ref="CMPSIT_TYPE_CODE" minOccurs="0"/>
  <xsd:element name="EXPT_TYPE_CODE" minOccurs="0">
   <xsd:simpleType>
    <xsd:restriction base="xsd:string">
     <xsd:enumeration value="MVMNT"/>
     <xsd:enumeration value="UNSPEC_EXPT"/>
    </xsd:restriction>
   </xsd:simpleType>
  </xsd:element>
  <xsd:element name="VER_TYPE" minOccurs="0">
   <xsd:simpleType>
    <xsd:restriction base="xsd:string">
     <xsd:enumeration value="MODIF_VER"/>
     <xsd:enumeration value="ORIG_VER"/>
    </xsd:restriction>
   </xsd:simpleType>
  </xsd:element>
  <xsd:element name="MUSIC_ARR_CODE" minOccurs="0">
   <xsd:simpleType>
    <xsd:restriction base="xsd:string">
     <xsd:enumeration value="NEW"/>
     <xsd:enumeration value="ARRGMNT"/>
     <xsd:enumeration value="ORIG"/>
     <xsd:enumeration value="ADDTN"/>
     <xsd:enumeration value="UNSPEC_ARRGMNT"/>
    </xsd:restriction>
   </xsd:simpleType>
  </xsd:element>
```

91

```
                <xsd:element name="LYRIC_ADAPT_CODE" minOccurs="0">
                  <xsd:simpleType>
                    <xsd:restriction base="xsd:string">
                      <xsd:enumeration value="NEW"/>
                      <xsd:enumeration value="MODIF"/>
                      <xsd:enumeration value="TRANS"/>
                      <xsd:enumeration value="REPLACMNT"/>
                      <xsd:enumeration value="ORIG"/>
                      <xsd:enumeration value="NONE"/>
                      <xsd:enumeration value="ADDTN"/>
                      <xsd:enumeration value="UNSPEC_ADAPT"/>
                    </xsd:restriction>
                  </xsd:simpleType>
                </xsd:element>
                <xsd:element ref="COP_STATUS" minOccurs="0"/>
                <xsd:element name="FIRST_LIC_REFSL" minOccurs="0"/>
                <xsd:element ref="CMNTS" minOccurs="0"/>
                <xsd:element ref="CLAIMS_PERCENT" minOccurs="0"/>
                <xsd:element ref="ROY_RATE" minOccurs="0"/>
                <xsd:element ref="ROY_AMNT" minOccurs="0"/>
                <xsd:element ref="EVENT" minOccurs="0" maxOccurs="unbounded"/>
                <xsd:element ref="GENRE" minOccurs="0" maxOccurs="unbounded"/>
                <xsd:element ref="INSTRMNT" minOccurs="0" maxOccurs="unbounded"/>
                <xsd:element ref="RELTD_ITEM" minOccurs="0"/>
                <xsd:element ref="EXT_LNK" minOccurs="0" maxOccurs="unbounded"/>
                <xsd:element ref="CONTENT_CLASS" minOccurs="0"/>
                <xsd:element ref="MESSAGE_TRNSCTN_RSLT_GRP" minOccurs="0"/>
                <xsd:element ref="SCHEMA_COMP_LNK" minOccurs="0"/>
              </xsd:sequence>
              <xsd:attribute ref="WORK_TYPE_CODE" use="required"/>
              <xsd:attribute name="SEQ_NBR" type="xsd:integer" use="optional"/>
              <xsd:attribute ref="MESSAGE_TRNSCTN_ID"/>
            </xsd:complexType>
          </xsd:element>
```

## element WORK/TXT_MUS_REL_CODE

| diagram | TXT_MUS_REL_CODE |
|---|---|
| type | restriction of xsd:string |
| facets | enumeration MUS |
| | enumeration MUS_TXT |
| | enumeration TXT |

## element WORK/EXPT_TYPE_CODE

| diagram | EXPT_TYPE_CODE |
|---|---|
| type | restriction of xsd:string |
| facets | enumeration MVMNT |
| | enumeration UNSPEC_EXPT |

**Music Industry Integrated Identifiers Project — XML Schema for Example Messages**

### element WORK/VER_TYPE

| diagram | VER_TYPE | |
|---|---|---|
| type | restriction of xsd:string | |
| facets | enumeration | MODIF_VER |
| | enumeration | ORIG_VER |

### element WORK/MUSIC_ARR_CODE

| diagram | MUSIC_ARR_CODE | |
|---|---|---|
| type | restriction of xsd:string | |
| facets | enumeration | NEW |
| | enumeration | ARRGMNT |
| | enumeration | ORIG |
| | enumeration | ADDTN |
| | enumeration | UNSPEC_ARRGMNT |

### element WORK/LYRIC_ADAPT_CODE

| diagram | LYRIC_ADAPT_CODE | |
|---|---|---|
| type | restriction of xsd:string | |
| facets | enumeration | NEW |
| | enumeration | MODIF |
| | enumeration | TRANS |
| | enumeration | REPLACMNT |
| | enumeration | ORIG |
| | enumeration | NONE |
| | enumeration | ADDTN |
| | enumeration | UNSPEC_ADAPT |

XML Schema documentation generated with **XML Spy** Schema Editor **www.xmlspy.com**

1. A memory storing a data structure that comprises release identifier information relating to at least one of identification, validation, authorization, and use of data comprising at least one of a data arrangement, a data collection, and a data set, and at least one intellectual property right associated with the data, the data structure being retrieved from the memory responsive to instructions being implemented by at least one of a data processor and a computer, the data structure comprising:

a first data element comprising an issuer code;
a second data element comprising an intellectual property bundle number; and
a third data element comprising a check character, wherein the first, second, and third data elements are used in the at least one of the identification, validation, authorization, and use of the data.

2. The memory of claim 1, wherein the issuer code uniquely identifies an entity responsible for issuing a release identifier.

3. The memory of claim 1, wherein the intellectual property bundle number is allocated uniquely by an entity that has been assigned the issuer code to identify a collection of intellectual property assets and accompanying metadata associated with a release.

4. The memory of claim 1, wherein the check character is used to facilitate correct entry of a release identifier into the memory.

5. The memory of claim 1, wherein the data structure further comprises a fourth data element comprising a delivery attribute extension.

6. The memory of claim 5, wherein the delivery attribute extension is allocated uniquely by an entity that has been assigned the issuer code to distinguish between different versions of a release.

7. The memory of claim 1, wherein the data structure further comprises a fifth data element comprising a release identifier scheme.

8. The memory of claim 7, wherein the release identifier scheme uniquely identifies an identification scheme for a release.

9. A memory storing a data structure that comprises license identifier information relating to at least one of identification, validation, authorization, and use of data comprising at least one of a data arrangement, a data collection, and a data set, and at least one intellectual property right associated with the data, the data structure being retrieved from the memory responsive to instructions being implemented by at least one of a data processor and a computer, the data structure comprising:

a first data element comprising an issuer code;
a second data element comprising a license reference; and
a third data element comprising a check character, wherein the first, second, and third data elements are used in the at least one of the identification, validation, authorization, and use of the data.

10. The memory of claim 9, wherein the issuer code uniquely identifies an entity responsible for issuing a license identifier.

11. The memory of claim 9, wherein the license reference is allocated uniquely by an entity that has been assigned the issuer code to identify a license and accompanying metadata associated with the license.

12. The memory of claim 9, wherein the check character is used to facilitate correct entry of a release identifier into the memory.

13. The memory of claim 9, wherein the data structure further comprises a fourth data element comprising a society auxiliary extension.

14. The memory of claim 13, wherein the society auxiliary extension is allocated uniquely by an entity that has been assigned the issuer code to distinguish between difference versions of a license.

15. The memory of claim 9, the data structure further comprising a fifth data element comprising an identifier scheme.

16. The memory of claim 15, wherein the identifier scheme uniquely identifies an identification scheme for a license.

17. A memory storing a data structure that comprises release identifier information relating to at least one of identification, validation, authorization, and use of data comprising at least one of a data arrangement, a data collection, and a data set, and at least one intellectual property right associated with the data, the data structure being retrieved from the memory responsive to instructions being implemented by at least one of a data processor and a computer, the data structure comprising:

a first data element comprising an identifier scheme, the identifier scheme comprising two valid characters;
a second data element comprising an issuer code, the issuer code comprising five valid characters, wherein the first data element precedes the second data element;

a third data element comprising an intellectual property bundle number, the intellectual property bundle comprising ten valid characters, wherein the second data element precedes the third data element, wherein a valid character is one of any upper case letter of the Roman alphabet, excluding "I" and "O", and any Arabic digit, and wherein the valid character is defined using ASCII codes; and

a fourth data element comprising a check character, the check character comprising one character comprising one of any upper case letter of the Roman alphabet and any Arabic digit, wherein the character is defined using ASCII codes, and wherein the third data element precedes the fourth data element.

18. The memory of claim 17, wherein the first, second, third, and fourth data elements are separated by a hyphen.

19. A memory storing a data structure that comprises release identifier information relating to at least one of identification, validation, authorization, and use of data comprising at least one of a data arrangement, a data collection, and a data set, and at least one intellectual property right associated with the data, the data structure being retrieved from the memory responsive to instructions being implemented by at least one of a data processor and a computer, the data structure comprising:

a first data element comprising an identifier scheme, the identifier scheme comprising two valid characters;
a second data element comprising an issuer code, the issuer code comprising five valid characters, wherein the first data element precedes the second data element;
a third data element comprising an intellectual property bundle number, the intellectual property bundle comprising seven valid characters, wherein the second data element precedes the third data element;
a fourth data element comprising a delivery attribute extension, the delivery attribute extension comprising three valid characters, wherein the third data element precedes the fourth data element, wherein a valid character is one of any upper case letter of the Roman alphabet, excluding "I" and "O", and any Arabic digit, and wherein the valid character is defined using ASCII codes; and
a fifth data element comprising a check character, the check character comprising one character comprising one of any upper case letter of the Roman alphabet and any Arabic digit, wherein the character is defined using ASCII codes, and wherein the fourth data element precedes the fifth data element.

20. The memory of claim 19, wherein the first, second, third, fourth, and fifth data elements are separated by a hyphen.

21. A memory storing a data structure that comprises license identifier information relating to at least one of identification, validation, authorization, and use of data comprising at least one of a data arrangement, a data collection, and a data set, and at least one intellectual property right associated with the data, the data structure being retrieved from the memory responsive to instructions being implemented by at least one of a data processor and a computer, the data structure comprising:

a first data element comprising an identifier scheme, the identifier scheme comprising two valid characters;
a second data element comprising an issuer code, the issuer code comprising five valid characters, wherein the first data element precedes the second data element;
a third data element comprising a license reference, the license reference comprising ten valid characters, wherein the second data element precedes the third data element, wherein the third data element precedes the fourth data element, wherein a valid character is one of any upper case letter of the Roman alphabet, excluding "I" and "O", and any Arabic digit, and wherein the valid character is defined using ASCII codes; and
a fourth data element comprising a check character, the check character comprising one character comprising one of any upper case letter of the Roman alphabet and any Arabic digit, wherein the character is defined using ASCII codes, and wherein the third data element precedes the fourth data element.

22. The memory of claim 25, wherein the first, second, third, and fourth data elements are separated by a hyphen.

23. A memory storing a data structure that comprises license identifier information relating to at least one of identification, validation, authorization, and use of data comprising at least one of a data arrangement, a data collection, and a data set, and at least one intellectual property right associated with the data, the data structure being retrieved from the memory responsive to instructions being implemented by at least one of a data processor and a computer, the data structure comprising:

a first data element comprising an identifier scheme, the identifier scheme comprising two valid characters;
a second data element comprising an issuer code, the issuer code comprising five valid characters, wherein the first data element precedes the second data element;
a third data element comprising a license reference, the license reference comprising seven valid characters, wherein the second data element precedes the third data element;
a fourth data element comprising a society auxiliary extension, the society auxiliary extension comprising three valid characters, wherein the third data element precedes the fourth data element, wherein a valid character is one of any upper case letter of the Roman alphabet, excluding "I" and "O", and any Arabic digit, and wherein the valid character is defined using ASCII codes; and
a fifth data element comprising a check character, the check character comprising one character comprising one of any upper case letter of the Roman alphabet and any Arabic digit, wherein the character is defined using ASCII codes, and wherein the fourth data element precedes the fifth data element.

24. The memory of claim 23, wherein the first, second, third, fourth, and fifth data elements are separated by a hyphen.

25. A method of managing identification and description of at least one release, comprising:

determining the contents of the at least one release;
obtaining at least one release identifier associated with a unique one of the at least one release;
obtaining musical work details associated with the contents of the at least one release; and
compiling at least one label copy, wherein the at least one label copy comprises the contents of the at least one release, the at least one release identifier, and the musical work details.

26. The method of claim 25, wherein obtaining the at least one release identifier further comprises obtaining at least one issuer code, wherein the issue code is issued by a central registration service and is assigned to a unique one of at least one issuing entity, which issues the at least one release.

27. The method of claim 25, wherein obtaining the at least one release identifier further comprises obtaining at least one intellectual property bundle number, which is allocated uniquely by an entity that has been assigned an issuer code to identify a collection of intellectual property assets and accompanying metadata associated with the at least one release.

28. The method of claim 25, wherein obtaining the at least one release identifier further comprises calculating a check character.

29. The method of claim 25, wherein obtaining the at least one release identifier further comprises obtaining a delivery attribute extension, which is allocated uniquely by an entity that has been assigned an issuer code to distinguish between different versions of the at least one release.

30. The method of claim 25, wherein obtaining the at least one release identifier further comprises obtaining a release identifier scheme, which uniquely identifies an identification scheme for the at least one release.

31. A method of managing identification and description of at least one license associated with at least one release, comprising:

notifying at least one licensing entity of the at least one release;
determining the terms of the at least one license, wherein the terms are negotiated between the at least one licensing entity and at least one issuer entity that issues the at least one release; and
generating at least one license identifier associated with a unique one of the at least one license.

32. The method of claim 31, wherein obtaining the at least one license identifier further comprises generating at least one issuer code, wherein the issuer code is issued by a central registration service and is assigned to a unique one of the at least one licensing entity, which issues the at least one license.

33. The method of claim 31, wherein obtaining the at least one license identifier further comprises obtaining at least one license reference, which is allocated uniquely by a unique one of the at least one licensing entity that has been assigned an issuer code to identify the at least one license and accompanying metadata associated with the at least one license.

34. The method of claim 31, wherein obtaining the at least one license identifier further comprises calculating a check character.

35. The method of claim 31, wherein generating the at least one license identifier further comprises obtaining a society auxiliary extension, which is allocated uniquely by one of the at least one licensing entity that has been assigned an issuer code to distinguish between different versions of the at least one license.

36. The method of claim 31, wherein obtaining the at least one license identifier further comprises obtaining a license identifier scheme, which uniquely identifies an identification scheme for the at least one license.

37. The method of claim 31, wherein there is a one-to-many relationship between the at least one license and the at least one release such that the at least one license identified by the at least one license identifier is associated with a plurality of releases.

38. The method of claim 31, wherein there is a one-to-many relationship between the at least one license and the at least one release such that the at least one release is associated with a plurality of licenses identified by the at least one license identifier.

39. A method of administering a release identifier, comprising:

    issuing at least one issuer code, wherein the at least one issuer code is issued by a central registration service and is assigned to a unique one of at least one issuing entity; and
    issuing at least one release having a release identifier comprising the at least one issuer code, wherein the at least one release is issued by the unique one of the at least one issuing entity.

40. A method of administering a license identifier, comprising:

    issuing at least one issuer code, wherein the at least one issuer code is issued by a central registration service and is assigned to a unique one of at least one licensing entity; and
    issuing at least one license having a license identifier comprising the at least one issuer code, wherein the at least one license is issued by the unique one of the at least one licensing entity.

41. A method of exchanging information regarding at least one release, comprising:

    converting, by a first entity, a release identifier and metadata associated with the at least one release from a first proprietary format associated with the first entity into a standard format, wherein the standard format comprises a standard metadata schema;
    mapping, by the first entity, the release identifier and the metadata associated with the at least one release into appropriate fields within the standard metadata schema;
    transmitting the release identifier and metadata from the first entity to a second entity; and
    converting, by the second entity, the release identifier and the metadata associated with the at least one release from the standard format into a second proprietary format associated with the second entity, wherein the release identifier and the metadata identify and describe the at least one release.

42. A method of exchanging information regarding at least one license, comprising:

    converting, by a first entity, a license identifier and metadata associated with the at least one license from a first proprietary format associated with the first entity into a standard format, wherein the standard format comprises a standard metadata schema;
    mapping, by the first entity, the license identifier and the metadata associated with the at least one license into appropriate fields within the standard metadata schema;
    transmitting the license identifier and metadata from the first entity to a second entity; and
    converting, by the second entity, the license identifier and the metadata associated with the at least one license from the standard format into a second proprietary format associated with the second entity, wherein the license identifier and the metadata identify and describe the at least one license.

43. A method of exchanging information regarding at least one release of a musical work or sound recording, comprising:

converting, by a first entity, a release identifier and data associated with the at least one release from a first format associated with the first entity into a standard format, wherein the standard format comprises a data schema;

mapping, by the first entity, the release identifier and the data associated with the at least one release into fields within the data schema;

transmitting the release identifier and the data from the first entity to a second entity; and

converting, by the second entity, the release identifier and the data associated with the at least one release from the standard format into a second format associated with the second entity, wherein the release identifier and the data identify and describe the at least one release,

44. A method of exchanging information regarding at least one license associated with at least one release of a musical work or sound recording, comprising:

converting, by a first entity, a license identifier and data associated with the at least one license from a first format associated with the first entity into a standard format, wherein the standard format comprises a data schema;

mapping, by the first entity, the license identifier and the data associated with the at least one license into fields within the data schema;

transmitting the license identifier and the data from the first entity to a second entity; and

converting, by the second entity, the license identifier and the data associated with the at least one license from the standard format into a second format associated with the second entity, wherein the license identifier and the data identify and describe the at least one license.

45. A method of exchanging information regarding at least one release of a work or sound recording, comprising:

assigning by a first entity, a release identifier and data associated with the at least one release in a substantially standard format, wherein the substantially standard format comprises a data schema;

mapping, by the first entity, the release identifier and the data associated with the at least one release into appropriate fields within the data schema;

transmitting the release identifier and the data from the first entity to a second entity; and

processing, by the second entity, the release identifier and the data associated with the at least one release using the substantially standard format using the release identifier and the data to identify and describe the at least one release for the second entity.

46. A method of exchanging information regarding at least one license associated with at least one release of a work or sound recording, comprising:

assigning, by a first entity, a license identifier and data associated with the at least one license into a substantially standard format, wherein the standard format comprises a data schema;

mapping, by the first entity, the license identifier and the data associated with the at least one license into appropriate fields within the data schema;

transmitting the license identifier and the data from the first entity to a second entity; and

processing, by the second entity, the license identifier and the data associated with the at least one license using the standard format using the license identifier and the data to identify and describe the at least one license for the second entity.

**Claims**

1. A computer network system for supporting access to release meta data and/or licence metadata comprising:

one or more repositories (700) storing release meta data in a memory, wherein release information in the repositories may be accessed using at least one release identifier (707),
a distributed network (710) for providing access to information regarding at least one musical work ,the distributed network comprising a repository for license information regarding the at least one musical work stored in a memory, wherein license information may be accessed using at least one license identifier (511, 611, 712),

wherein licensing terms under which the at least one release is made are identified using the at least one license identifier (511, 611, 712).

2. The network system of claim 1, wherein the one or more repositories (700) are nodes of the distributed network.

3. The network system of claim 1 or 2, further comprising at least one licence repository (810) comprising license meta data.

4. The network system of anyone of the preceding claims, wherein the release information stored in the one or more repositories is accessed using a batch inquiry (730) and/or an on-line enquiry (732).

5. The network system of anyone of the preceding claims, wherein the license is accessed using a batch inquiry (730) and/or an on-line enquiry (732).

6. The network system of anyone of the preceding claims, wherein the distributed network (710) is a CISnet having an open network architecture.

7. The network system of anyone of the preceding claims, further comprising linking one of the at lest one release identifier to one of the at least one license identifier to establish a relationship between the at least one musical work and a sound recording on which it appears.

8. The network system of claim 7, further comprising joining the at least one release identifier and the at least one license identifier to identify the complete relationship between a release identified by the at least one release identifier and the at least one musical work identified by the at least one license identifier.

9. A computer implemented method of managing identification and description of at least one release by a computer system having at least one memory storing instructions for controlling said computer system and said computer system executing instructions stored in said memory, comprising:

- determining, by the computer system, the contents of the at least one release meta data;
- obtaining, by the computer system, at least one release identifier associated with a unique one of the at least one release meta data,
- obtaining, by the computer system, musical work details associated with the contents of the at least one release meta data;
- compiling, by the computer system, at least one label copy, wherein the at least one label copy comprises the contents of the at least one release meta data, the at least one release identifier, and the musical work;
- storing the at least one label copy in the memory;
- identifying, by the computer system, the at least one release;
- validating, by the computer system, the at least one release; and
- distributing electronically, by the computer system, data corresponding to the at least one release.

10. The method of claim 9, wherein obtaining the at least one release identifier further comprises obtaining at least one issuer code, wherein the issue code is issued by a central registration service and is assigned to a unique one of at least one issuing entity, which issues the at least one release.

11. The method of claim 9 or 10, wherein obtaining the at least one release identifier further comprises obtaining at least one intellectual property bundle number, which is allocated uniquely by an entity that has been assigned an issuer code to identify a collection of intellectual property assets and accompanying metadata associated with the at least one release.

12. The method of anyone of claims 9 to 11, wherein obtaining the at least one release identifier further comprises calculating a check character.

13. The method of anyone of claims 9 to 12, wherein obtaining the at least one release identifier further comprises obtaining a delivery attribute extension, which is allocated uniquely by an entity that has been assigned an issuer code to distinguish between different versions of the at least one release.

14. The method of anyone of claims 9 to 13, wherein obtaining the at least one release identifier further comprises obtaining a release identifier scheme, which uniquely identifies an identification scheme for the at least one release.

15. The method of anyone of claims 9 to 14, wherein the obtaining at least one release identifier associated with a unique one of the at least one release using the computer system via a distributed computer network.

FIG. 1
PRIOR ART

| HEADER | 〜 931 |

| DOCUMENT ID | 〜 932 |

| DATA<br>CONTAINER | 〜 933 |

| SOURCE WORKS<br>EXTENSIONS | 〜 934 |

| MINIMUM<br>PERMISSIONS | 〜 935 |

| DIGITAL<br>DOCUMENT<br>SIGNATURE | 〜 936 |

〜930

# FIG. 2
PRIOR ART

FIG. 2 - PROCESS OVERVIEW
SECTIONS A, B, C, AND D

USER

USER'S DATA
AND INFORMATION

CONTENT VENDOR'S
DATA AND INFORMATION

CONTENT
VENDOR

MODULES 1,2,3,4
APPARATUS

OPTIONAL MODULE 5

DESIGN/EDITING
SYSTEM

SEC. A

CREATING ADMINISTRATIVE
CORRESPONDENCE,
DOCUMENTATION, AND
REPORTS

SEC. B

TRACKING VALUABLE
MATERIALS USING
SUBMISSION, TRANSFER,
AND RETURN RECORDS

SEC. C

DESIGNING/EDITING CONTENT,
DETERMINING ASSOCIATIONS
OF MANIPULATED CONTENT,
LICENSING TERMS, AND TECH.
REQUIREMENTS, CREATING
PRODUCTION REPORTS

SEC. D

CONFIRMING FINAL USE OF
CONTENT, COMPLYING WITH
LICENSING TERMS, ARCHIVING
RECORDS, AND REVIEWING
RECORDS

FIG. 3
PRIOR ART

EP 2 120 141 A1

940

| 2 WORDS | 24 WORDS | 24 WORDS | 24 WORDS | 24 WORDS |
|---------|----------|----------|----------|----------|
|         | 16 WORDS | 16 WORDS | 16 WORDS | 16 WORDS |

942

944     946
VOLUME #

948     950
DISK ID

952     954
SERIAL

956     958
NUMBERS

## FIG. 4
### PRIOR ART

BEGIN SELECTION AND DOWNLOAD PROCESS ~ 960

QUERY MEDIA FOR UNIQUE IDENTIFIER ~ 962

962A ~ OBTAIN VENDOR INFORMATION

SECOND EMBODIMENT

962B ~ OBTAIN USER INFORMATION

SECOND EMBODIMENT

962C ~ BUILD COMPOUND KEY

FIRST EMBODIMENT

SECOND EMBODIMENT

964 ~ TRANSMIT COMMAND PACKET WITH ACTION CODE OF ONE TO SERVER

(A) → TRANSMIT UNIQUE IDENTIFIER AND PURCHASE PRICE TO MEDIA TRACKING SERVER ~ 966

LOOK-UP UNIQUE IDENTIFIER ~ 968

970 ~ DETERMINE REMAINING BALANCE

972 ~ BALANCE GREATER THAN PURCHASE PRICE?

YES

NO

REJECTION PROCESS ~ 984

973

MEDIA TRACKING SERVER SENDS ACKNOWLEDGMENT AND DEBITS AND CREDITS APPROPRIATE ACCOUNTS

974 ~ SERVER RESPONDS WITH ACTION CODE OF ONE TO CLIENT

TRANSMIT COMMAND PACKET WITH ACTION CODE OF TWO TO SERVER

976

SERVER ENCRYPTS DATA AND TRANSMITS ENCRYPTED DATA STREAM

978

ADDITIONAL DATA

ERROR PROCESS ~ 986

ERROR

WRITE ENCRYPTED DATA STREAM TO MEDIA

980

COMPLETED

END

982

FIG. 5
PRIOR ART

105

| RELEASE IDENTIFICATION AND DESCRIPTION | REQUIREMENT FOR CREATING AN AUTHORITATIVE ASSOCIATION BETWEEN INFORMATION ENTITIES | LICENSE IDENTIFICATION AND DESCRIPTION |

RELEASE ID
TITLE, ARTISTS, ETC.

RELEASE ID
TITLE, ARTISTS, ETC.

LICENSE ID
LICENSEE, LICENSER, ETC.

LICENSE ID
LICENSEE, LICENSOR, ETC.

ISRC-1
TITLE, ARTIST, RECORD CO, ETC.

ISRC-1
TITLE, ARTIST, RECORD CO, ETC.

ISWC-1
TITLE, COMPOSER, AUTHOR, ETC.

ISWC-1
TITLE, COMPOSER, AUTHOR, ETC.

ISRC-2
TITLE, ARTIST, RECORD CO, ETC.

ISRC-2
TITLE, ARTIST, RECORD CO, ETC.

ISWC-2
TITLE, COMPOSER, AUTHOR, ETC.

ISWC-2
TITLE, COMPOSER, AUTHOR, ETC.

ISRC-3
TITLE, ARTIST, RECORD CO, ETC.

ISRC-3
TITLE, ARTIST, RECORD CO, ETC.

ISWC-3
TITLE, COMPOSER, AUTHOR, ETC.

ISWC-3
TITLE, COMPOSER, AUTHOR, ETC.

FIG. 6

EP 2 120 141 A1

FIG. 7

FIG. 8

200

202 204 206 208 210

A1 - 2425G - ABC1234 - 002 - M

212 212 212 212

| A. IDENTIFIER SCHEME | B. ISSUER CODE | C. IP BUNDLE NUMBER | D. DELIVERY ATTRIBUTE EXTENSION | E. CHECK DIGIT |

## FIG. 9A

220

222 224 226 228

A1 - 2425G - ABC1234002 - M

230 230 230

| A. IDENTIFIER SCHEME | B. ISSUER CODE | C. IP BUNDLE NUMBER | D. CHECK DIGIT |

## FIG. 9B

RELEASE IDENTIFIER: A1-2425G-ABC1234-001-L

200

220

ASSET BUNDLE

222

INCLUDES ATTRIBUTES TO DESCRIBE THE 'IP BUNDLE' AND THE DELIVERY ATTRIBUTES THAT ARE DIRECTLY RELATED TO THE 'BUNDLE'.

SOUND RECORDING ASSET 1

INCLUDES ATTRIBUTES TO DESCRIBE THE 'SOUND RECORDING' AND THE DELIVERY ATTRIBUTES THAT ARE DIRECTLY RELATED TO IT

224

SOUND RECORDING ASSET 2

INCLUDES ATTRIBUTES TO DESCRIBE THE 'SOUND RECORDING' AND THE DELIVERY ATTRIBUTES THAT ARE DIRECTLY RELATED TO IT

226

ASSET BUNDLE 2

INCLUDES ATTRIBUTES TO DESCRIBE THE 'BUNDLE' AND THE DELIVERY ATTRIBUTES THAT ARE DIRECTLY RELATED TO IT

228

SOUND RECORDING ASSET 3

230

INCLUDES ATTRIBUTES TO DESCRIBE THE 'SOUND RECORDING' AND THE DELIVERY ATTRIBUTES THAT ARE DIRECTLY RELATED TO IT

232

TEXT ASSET 1

INCLUDES ATTRIBUTES TO DESCRIBE THE TEXT-BASED ASSET AND THE DELIVERY ATTRIBUTES THAT ARE DIRECTLY RELATED TO IT

FIG. 10

250

252  254       256    258  260

Z1 P5964 ZYX9876 005 H

262      262      262      262

| A. IDENTIFIER SCHEME | B. ISSUER CODE | C. LICENCE REFERENCE | D. SOCIETY AUXILIARY EXTENSION | E. CHECK DIGIT |

**FIG. 11A**

270

272  274      276      278

Z1 P5964 ZYX9876 H

280      280      280

| A. IDENTIFIER SCHEME | B. ISSUER CODE | C. LICENCE REFERENCE | E. CHECK DIGIT |

**FIG. 11B**

SCHEME
IDENTIFIER
A1

CENTRAL
REGISTRATION
SERVICE

300

310

ALLOCATION OF COMPANY
ISSUER CODES

2425G

320

4621B

322

1658D

324

RECORD COMPANIES ALLOCATE RELEASE IDENTIFIERS WITHIN THEIR PREFIX RANGE

330     332     334                 336     338                     340

A1-2425G-ABC1234-001-L

A1-4621B-D453HGF-010-R

A1-1658D-9864345-000-B

A1-2425G-HIJ2326-025-P

A1-4621B-D454HGH-009-T

A1-1658D-9864346-000-C

FIG. 12

EP 2 120 141 A1

| FIG 13A |
|---------|
| FIG 13B |

# FIG. 13

| MESSAGE | 350 351 | THE MESSAGE ELEMENT IS THE ROOT ELEMENT OF THE MESSAGE |

| MESSAGE_ID | THE MESSAGE WILL HAVE AN ID WHICH IS UNIQUE FOR THE SENDER. THIS WILL BE NECESSARY FOR TRACING AND AUDITING MESSAGES |

| ASSOC_PTY_GRP | CONTAINS DETAILS ABOUT THE MESSAGE SENDER AND INTENDED RECIPIENT |

353 352

| EVENT | CONTAINS THE DATE THE MESSAGE WAS ISSUED |

354

| MESSAGE_DESC | IDENTIFIES THE TYPE, PURPOSE AND VERSION NUMBER OF THE MESSAGE |

| MESSAGE_METRICS | CONTAINS DETAILS OF THE DIMENSIONS OF THE MESSAGE AND POSSIBLY THE DIGITAL SIGNATURE |

355 356

| RPT_PERIOD_DURATION |
| RPT_PERIOD_START | DEFINES THE TIME PERIOD FOR WHICH THE TRANSACTIONS WITHIN THE MESSAGE APPLY |
| RPT_PERIOD_END |

357

358

| M | RELEASE | 360 | THE RELEASE HAS BEEN DEFINED AS THE TRANSACTIONAL UNIT OF THE MESSAGE AND IS ALLOCATED A TRANSACTION ID WHICH IS UNIQUE WITHIN THE MESSAGE |

M DENOTES
A MULTIPLE
OCCURRENCE 361

| RELEASE_ID | THE RELEASE ID ASSOCIATED WITH THE RELEASE |

| TITLE | THE TITLE OF THE RELEASE |

362

| ASSOC_PTY_GRP | CONTAINS THE DETAILS OF THE RELEASING RECORD COMPANY AND THE RECORD COMPANY WHICH IS THE RIGHTS OWNER FOR THE LICENSED OUT SOUND RECORDINGS |

363

| ASSOC_ID | CONTAINS THE ALTERNATIVE IDENTIFIERS FOR THE RELEASE (E.G., EAN/UPC) |

364

| ROY_RATE | CONTAINS DETAILS OF THE ROYALTY RATE ON WHICH THE ROYALTY AMOUNT WILL BE CALCULATED |

365

| USAGE_QTY | CONTAINS THE USAGE FIGURES (INCLUDING ADJUSTMENTS) FOR A PARTICULAR TYPE OF USAGE WITHIN A TERRITORY. THERE CAN BE MANY OCCURRENCES OF USAGE_QTY WITHIN THE RELEASE STATEMENT |

370

# FIG. 13A

| RPT_PERIOD_DURATION | DEFINES THE TIME PERIOD FOR WHICH THE PARTICULAR USAGE_QTY APPLIES |
| RPT_PERIOD_START | |
| RPT_PERIOD_END | |

| USAGE | DESCRIBES THE TYPE OF USAGE FOR WHICH THE USAGE QUANTITIES APPLY |

| GROSS_USAGE_UNITS | THE QUANTITY OF UNITS BEFORE AND AFTER ADJUSTMENTS |
| NET_USAGE_UNITS | |

| ADJMNT_QTY | CONTAINS DETAILS OF ANY ADJUSTMENTS TO THE USAGE QUANTITY |

| PRICE | DEFINES THE PRICE ASSOCIATED WITH THE USAGE QUANTITY |

| TERR | DEFINES THE TERRITORY ASSOCIATED WITH THE USAGE QUANTITY |

| ROY_AMOUNT | CONTAINS THE DETAILS OF THE ROYALTY AMOUNTS RESULTING FROM THE USAGE (INCLUDING ADJUSTMENTS) |

| ASSET | THE ASSETS (SOUND RECORDINGS) WHICH ARE SUBJECT TO THE TRANSACTION CAN BE DESCRIBED |

| SEQ_NBR | THE SEQ_NBR (OR TRACK NUMBER) OF THE SOUND RECORDING WITHIN THE RELEASE |

| ASSOC_ID | CONTAINS THE ISRC OF THE SOUND RECORDING |

# FIG. 13B

114

| FIG 14A |
|---------|
| FIG 14B |
| FIG 14C |

FIG. 14

| MESSAGE ~400  401 | THE MESSAGE ELEMENT IS THE ROOT ELEMENT OF THE MESSAGE |
|---|---|
| MESSAGE_ID | THE MESSAGE WILL HAVE AN ID WHICH IS UNIQUE FOR THE SENDER. THIS WILL BE NECESSARY FOR THE TRACING AND AUDITING MESSAGES |
| ASSOC_PTY_GRP  403  402 | CONTAINS DETAILS ABOUT THE MESSAGE SENDER AND INTENDED RECIPIENT |
| EVENT  404 | CONTAINS THE DATE THE MESSAGE WAS ISSUED |
| MESSAGE_DESC | IDENTIFIES THE TYPE, PURPOSE AND VERSION NUMBER OF THE MESSAGE |
| MESSAGE_METRICS  405 | CONTAINS DETAILS OF THE DIMENSIONS OF THE MESSAGE AND POSSIBLY THE DIGITAL SIGNATURE |

M ─ | RELEASE ~410 | THE RELEASE HAS BEEN DEFINED AS THE TRANSACTIONAL UNIT OF THE MESSAGE AND IS ALLOCATED A TRANSACTION ID WHICH IS UNIQUE WITHIN THE MESSAGE |

M DENOTES
A MULTIPLE
OCCURRENCE      411

| RELEASE_ID | THE RELEASE ID ASSOCIATED WITH THE RELEASE |
|---|---|
| TITLE | THE TITLE (DISPLAY AND SEARCH VERSIONS) OF THE RELEASE |
| 412  ASSOC_PTY_GRP | CONTAINS THE DETAILS OF THE MAIN ARTIST(S), NOTABLE CONTRIBUTORS, THE RELEASING RECORD COMPANY AND THE MARKETING LABEL |
| 413  ASSOC_ID | CONTAINS THE ALTERNATIVE IDENTIFIERS FOR THE RELEASE (E.G., EAN/UPC) |
| 414  C_LINE & P_LINE | THE COPYRIGHT AND PUBLICATION NOTICE FOR THE RELEASE |
| 415  M  EVENT | CONTAINS DETAILS OF EVENTS ASSOCIATED WITH THE RELEASE DATE |
| 416  M  GENRE | CONTAINS THE CLASSIFICATION DETERMINED BY THE RECORD COMPANY. THE NAMESPACE OF THE PARTICULAR GENRE CLASSIFICATION CAN BE SPECIFIED |
| 417 |  |
| 418  CONTENT CLASSIFICATION | CONTAINS ANY WARNING OR PARENTAL GUIDANCE ON THE MATERIAL FEATURING IN THE RELEASE |

FIG. 14A

| DEL_ATTRIB | CONTAINS DETAILED TECHNICAL SPECIFICATIONS AND DIMENSION RELATED TO THE RELEASE |
|---|---|
| M PRICE | DEFINES THE PRICE ASSOCIATED WITH THE RELEASE VALUES BASED ON DIFFERENT PRICE TYPES CAN BE SPECIFIED AS WELL AS PRICES FOR DIFFERENT TERRITORIES |
| M USAGE | DEFINES THE TYPE AND SCOPE OF THE USAGE PERMITTED FOR THE RELEASE |
| RELTD_ITEM | DESCRIBES DETAILS OF RELATED RELEASES, RECORDING OR ENTITIES (E.G., THE EQUIVALENT PHYSICAL PRODUCT) |
| M EXT_LNK | CONTAINS DETAILS OF EXTERNAL LINKS (SUCH AS URLS) WHICH ARE USED TO LINK TO CONTENT/ INFORMATION THAT IS RELATED TO THE RELEASE |
| M ASSET | DEFINES THE ASSET TYPES CONTAINED WITHIN THE RELEASE AND DESCRIBES EACH IN DETAIL. THE ASSET DESCRIPTIONS ARE CONTAINED WITHIN THE IP_BUNDLE ELEMENT |
| TITLE | THE TITLE (DISPLAY AND SEARCH VERSIONS) OF THE ASSET |
| ASSOC_PTY_GRP | CONTAINS THE DETAILS OF MAIN ARTIST(S) AND NOTABLE CONTRIBUTORS ASSOCIATED WITH THE ASSET |
| ASSOC_ID | CONTAINS THE ALTERNATIVE IDENTIFIERS FOR THE ASSET (E.G., ISRC) |
| C_LINE & P_LINE | THE COPYRIGHT AND PUBLICATION NOTICE FOR THE ASSET |
| DUR | THE DURATION OF THE ASSET (IF APPLICABLE) |

# FIG. 14B

ASSET (CONTD.) ~430

M— EVENT

CONTAINS DETAILS OF EVENTS ASSOCIATED WITH THE ASSET SUCH AS CREATE DATE.

M— GENRE

CONTAINS THE GENRE CLASSIFICATION THAT HAS BEEN ASSIGNED TO THE ASSET

CONTENT CLASS

CONTAINS ANY WARNING OR PARENTAL GUIDANCE ON THE THE MATERIAL CONTAINED IN THE ASSET.

438  437

M— EXT_LNK

CONTAINS DETAILS OF EXTERNAL LINKS (SUCH AS URLS) WHICH ARE USED TO LINK TO CONTENT/ INFORMATION THAT IS RELATED TO THE RELEASE

439

RELTD_ITEM

DESCRIBES DETAILS OF RELATED RELEASES, RECORDING OR OTHER ENTITIES (E.G., PRODUCT THE RECORDING ORIGINALLY FEATURED ON)

440

DEL_ATTRIB

CONTAINS DETAILED TECHNICAL SPECIFICATIONS AND DIMENSION RELATED TO THE ASSET.

441

M— WORK ~450

THE WORK ELEMENT DEFINES AND DESCRIBES THE WORK THAT IS EMBODIED IN A PARTICULAR ASSET.

ASSOC_PTY_GRP

CONTAINS THE DETAILS OF COMPOSERS, AUTHORS, ARRANGERS AND PUBLISHERS OF THE WORK

451

ASSOC_ID

CONTAINS IDENTIFIERS FOR THE WORK (E.G., AN ISWC FOR A MUSICAL WORK)

452

NAV_VIEW ~460

THE NAVIGATIONAL VIEW DESCRIBES THE ORGANIZATION AND INTER-RELATIONSHIPS OF THE ASSET CONTAINED IN THE RELEASE.

461

M— ASSET_LIST_ITEM

THIS DEFINES THE POSITION OF THE ASSET WITHIN THE RELEASE AND CAN IDENTIFY THE ASSET SEQUENCE WITHIN THE RELEASE.

DUR

THIS ENABLES DURATION OVERRIDES FOR THE ASSETS TO BE SPECIFIED WITHIN THE NAVIGATIONAL VIEW

462

ASSET_REF

THIS CONTAINS A REFERENCE POINTER TO THE DESCRIPTION OF THE ASSET AND ITS DELIVERY ATTRIBUTES WITHIN THE MESSAGE.

463

M— LINKED_ASSET

THIS ASSOCIATES THE ASSET IN QUESTION WITH OTHER ASSETS FEATURING IN THE RELEASE (E.G., AN IMAGE ASSOCIATED TO ONE PARTICULAR RECORDING)

464

ASSET_REF

THIS CONTAINS A REFERENCE POINTER TO THE DESCRIPTION OF THE LINKED ASSET AND ITS DELIVERY ATTRIBUTES WITHIN THE MESSAGE.

465

M— NAV_VIEW ~470

NAVIGATIONAL VIEWS CAN BE ORGANIZED HIERARCHICALLY TO DESCRIBE COMPLEX RELEASES WHERE THERE ARE SUB-GROUPS OF ASSETS DEFINED (AKIN TO THE BOX SET CONCEPT).

FIG. 14C

480

⊡ PMedia-  ☐

Current View Description

Title:

Level: 1 Seq. No. : 1 No. Component Views : 6

482

Available Views

| Title | Dur |
|---|---|
| I'm Real - Jennifer Lopez | |
| Family Affair - Mary J. Blige | |
| Thankyou - Dido | |

484

Selected View Description

Title: I'm Real-Jennifer Lopez (Originally : I'm Real)

Level: 2 Seq No. : 1 No. Component Views : 0

artist: Jennifer Lopez : Individ

mark_lbl: Epic Records : cmpny

rec_comp : Sony Music : cmpny

486

| Parent View | Get View |

487    488

FIG. 15

**PMedia- Thankyou - Dido**

Current View Description

Title: Thank you-Dido (Originally : Thankyou)
Level: 2 Seq. No. : 1 No. Component Views : 0
artist: Dido : individ
mark_lbl : Arista : cmpny

Available Assets

| Title | Out |
|---|---|
| Thankyou | PT3M38S |

Selected Asset Description

Asset type: AUDIO
Title: Thank you
artist: Dido : individ
comp: D. Armstrong : individ
comp: P. Herman : individ

| Parent View | Get Asset |

## FIG. 16

| | |
|---|---|
| FIG 17A | |
| FIG 17B | FIG. 17 |
| FIG 17C | |

MESSAGE ~500 501 — THE MESSAGE ELEMENT IS THE ROOT ELEMENT OF THE MESSAGE

MESSAGE_ID — THE MESSAGE WILL HAVE AN ID WHICH IS UNIQUE FOR THE SENDER. THIS WILL BE NECESSARY FOR TRACING AND AUDITING MESSAGES

ASSOC_PTY_GRP — CONTAINS DETAILS ABOUT THE MESSAGE SENDER AND INTENDED RECIPIENT

503 502

EVENT — CONTAINS THE DATE THE MESSAGE WAS ISSUED

504

MESSAGE_DESC — IDENTIFIES THE TYPE, PURPOSE AND VERSION NUMBER OF THE MESSAGE

MESSAGE_METRICS — CONTAINS DETAILS OF THE DIMENSIONS OF THE MESSAGE AND POSSIBLY THE DIGITAL SIGNATURE

505

M LICENSE ~510 — THE LICENSE IDENTIFIES THE LICENSING TERMS UNDER THE RELEASE ARE BEING MADE

M DENOTES A MULTIPLE OCCURRENCE

511

LICENSE_ID — THE LICENSE ID ASSOCIATED WITH THE LICENSE.

ASSOC_PTY_GRP — CONTAINS THE DETAILS OF LICENSEE AND LICENSOR.

512

LIC_TYPE_CODE — CONTAINS A CLASSIFICATION WHICH DEFINES THE OPERATIONAL NATURE OF THE LICENSING SCHEME ASSOCIATED WITH THE LICENSE

513

M EVENT — CONTAINS DETAILS OF EVENTS ASSOCIATED WITH THE LICENSE SUCH AS ORIGINAL LICENSE AGREEMENT DATE.

514

M RGTS_CODE — DEFINES THE RIGHTS COVERED BY THE LICENSE.

515

M USAGE — DESCRIBE THE USAGES PERMITTED UNDER THE TERMS OF THE LICENSE

516

FIG. 17A

| | | |
|---|---|---|
| M— | RELEASE ~520 521 | THE RELEASE HAS BEEN DEFINED AS THE TRANSACTIONAL UNIT OF THE MESSAGE AND IS ALLOCATED A TRANSACTION ID WHICH IS UNIQUE WITHIN THE MESSAGE |
| | RELEASE_ID | THE RELEASE ID ASSOCIATED WITH THE RELEASE |
| | TITLE | THE ORIGINAL TITLE OF THE RELEASE |
| | 523 522 ASSOC_PTY_GRP | CONTAINS THE DETAILS OF MAIN ARTIST(S), NOTABLE CONTRIBUTORS, THE RELEASING RECORD COMPANY AND THE MARKETING LABEL |
| | 524 ASSOCIATE_ID | CONTAINS THE ALTERNATIVE IDENTIFIERS FOR THE RELEASE (E.G., EAN/UPC) |
| -M | 525 EVENT | CONTAINS DETAILS OF EVENTS ASSOCIATED WITH THE RELEASE SUCH AS RELEASE DATE |
| -M | 526 GENRE | CONTAINS THE CLASSIFICATION DETERMINED BY THE RECORD COMPANY. THE NAMESPACE OF THE PARTICULAR GENRE CLASSIFICATION CAN BE SPECIFIC |
| | 527 DEL_ATTRIB | CONTAINS DETAILS ABOUT THE TECHNICAL SPECIFICATIONS AND DIMENSION RELATED TO THE RELEASE |
| -M | USAGE | DEFINES THE INTENDED USAGE PERMISSIONS FOR THE RELEASE |
| | 528 | |
| M | ASSET ~530 | DEFINES THE ASSET TYPES CONTAINED WITHIN THE RELEASE AND DESCRIBES EACH IN DETAIL. THE ASSET DESCRIPTIONS ARE CONTAINED WITHIN THE IP_BUNDLE ELEMENT |
| | 531 | |
| | TITLE | THE ORIGINAL TITLE OF THE ASSET |
| 532 | ASSOC_PTY_GRP | CONTAINS THE DETAILS OF MAIN ARTIST(S) AND NOTABLE CONTRIBUTORS ASSOCIATED WITH THE ASSET |
| 533 | ASSOC_ID | CONTAINS THE ALTERNATIVE IDENTIFIERS FOR THE ASSET (E.G., ISRC) |

# FIG. 17B

530

ASSET (contd.)    534

P_LINE | THE COPYRIGHT AND PUBLICATION NOTICE FOR THE ASSET

DUR | THE DURATION OF THE ASSET (IF APPLICABLE)

536   535

EVENT | CONTAINS DETAILS OF EVENTS ASSOCIATED WITH THE ASSET SUCH AS CREATE DATE

537

GENRE | CONTAINS THE CLASSIFICATION DETERMINED BY THE RECORD COMPANY. THE NAMESPACE OF THE PARTICULAR GENRE CLASSIFICATION CAN BE SPECIFIED

538

DEL_ATTRIB | CONTAINS DETAILS ABOUT THE TECHNICAL SPECIFICATIONS AND DIMENSION RELATED TO THE ASSET

WORK   540 | THE WORK ELEMENT DEFINES AND DESCRIBES THE WORK THAT IS EMBODIED IN A PARTICULAR ASSET

541

TITLE | CONTAINS THE ORIGINAL TITLE OF THE WORK

542

ASSOC_PTY_GRP | CONTAINS THE DETAILS OF COMPOSERS, WRITERS, ARRANGERS AND PUBLISHERS OF THE WORK

ASSOC_ID | CONTAINS IDENTIFIERS FOR THE WORK (E.G., AN ISWC FOR A MUSICAL WORK)

543

NAV_VIEW   550 | THE NAVIGATIONAL VIEW DESCRIBES THE ORGANISATION AND INTER-RELATIONSHIPS OF THE ASSET CONTAINED IN THE RELEASE

551

ASSET_LIST_ITEM | THIS DEFINES THE POSITION OF THE ASSET WITHIN THE RELEASE AND CAN IDENTIFY THE ASSETS SEQUENCE WITHIN THE RELEASE

DUR | THIS ENABLES DURATION OVERRIDES FOR THE ASSETS TO BE SPECIFIED WITHIN THE NAVIGATIONAL VIEW

552

ASSET_REF | THIS CONTAINS A REFERENCE POINTER TO THE DESCRIPTION OF THE ASSET AND ITS DELIVERY ATTRIBUTES WITHIN THE MESSAGE

553

LNKD_ASSET | THIS ASSOCIATES THE ASSET IN QUESTION WITH OTHER ASSETS FEATURING IN THE RELEASE (E.G., AN IMAGE ASSOCIATED TO ONE PARTICULAR RECORDING)

554

ASSET_REF | THIS CONTAINS A REFERENCE POINTER TO THE DESCRIPTION OF THE LINKED ASSET AND ITS DELIVERY ATTRIBUTES WITHIN THE MESSAGE

555

M

NAV_VIEW   560 | NAVIGATIONAL VIEWS CAN BE ORGANISED HIERARCHICALLY TO DESCRIBE COMPLEX RELEASES WHERE THERE ARE SUB-GROUPS OF ASSETS DEFINED (AKIN TO THE BOX SET CONCEPT)

FIG. 17C

| | FIG 18A | |
| FIG 18B | **FIG. 18** |
| | FIG 18C | |

MESSAGE — 600 601

THE MESSAGE ELEMENT IS THE ROOT ELEMENT OF THE MESSAGE

MESSAGE_ID

THE MESSAGE WILL HAVE AN ID WHICH IS UNIQUE FOR THE SENDER. THIS WILL BE NECESSARY FOR TRACING AND AUDITING MESSAGES

ASSOC_PTY_GRP

CONTAINS DETAILS ABOUT THE MESSAGE SENDER AND INTENDED RECIPIENT

603 — 602

EVENT

CONTAINS THE DATE THE MESSAGE WAS ISSUED

604

MESSAGE_DESC

IDENTIFIES THE TYPE, PURPOSE AND VERSION NUMBER OF THE MESSAGE

MESSAGE_METRICS

CONTAINS DETAILS OF THE DIMENSIONS OF THE MESSAGE AND POSSIBLY THE DIGITAL SIGNATURE

605

M— LICENSE — 610

THE LICENSE IDENTIFIES THE LICENSING TERMS UNDER THE RELEASE ARE BEING MADE

M DENOTES A MULTIPLE OCCURRENCE

611

LICENSE_ID

THE LICENSE ID ASSOCIATED WITH THE LICENSE.

ASSOC_PTY_GRP

CONTAINS THE DETAILS OF LICENSEE AND LICENSOR.

612

LIC_TYPE_CODE

CONTAINS A CLASSIFICATION WHICH DEFINES THE OPERATIONAL NATURE OF THE LICENSING SCHEME ASSOCIATED WITH THE LICENSE

613

**FIG. 18A**

RELEASE ~620 621 | THE RELEASE HAS BEEN DEFINED AS THE TRANSACTIONAL UNIT OF THE MESSAGE AND IS ALLOCATED A TRANSACTION ID WHICH IS UNIQUE WITHIN THE MESSAGE

RELEASE_ID | THE RELEASE ID ASSOCIATED WITH THE RELEASE

TITLE | THE ORIGINAL TITLE OF THE RELEASE

623 ~ 622
ASSOC_PTY_GRP | CONTAINS THE DETAILS OF MAIN ARTIST(S), NOTABLE CONTRIBUTORS, THE RELEASING RECORD COMPANY AND THE MARKETING LABEL

624 ~
ASSOCIATE_ID | CONTAINS THE ALTERNATIVE IDENTIFIERS FOR THE RELEASE (E.G., EAN/UPC)

625 ~
CLAIMS_PERCENT | CONTAINS A BREAKDOWN OF THE PERCENTAGE COPYRIGHT CLAIMS WHICH THE RELEASE IS SUBJECT TO. THERE CAN BE SEVERAL SETS OF CLAIMS COVERING DIFFERENT RIGHTS, TERRITORIES AND USAGES

626 ~
ROY_RATE | CONTAINS DETAILS OF THE ROYALTY RATE(S) WHICH THE RELEASE IS SUBJECT TO

627 ~
DEL_ATTRIB | CONTAINS DETAILS, TECHNICAL SPECIFICATIONS AND DIMENSION RELATED TO THE RELEASE

USAGE | DEFINES THE INTENDED USAGE PERMISSIONS FOR THE RELEASE

628
MESSAGE_TRNSCTN_RSLT_GRP | CONTAINS THE PROCESSING OUTCOME OF THE LICENSE NOTIFICATION TRANSACTION AT THE RELEASE LEVEL. THIS INCLUDES AN EXPLANATION OF ANY FAILURES
629

ASSET ~630 | DEFINES THE ASSET TYPES CONTAINED WITHIN THE RELEASE AND DESCRIBES EACH IN DETAIL. THE ASSET DESCRIPTIONS ARE CONTAINED WITHIN THE IP_BUNDLE ELEMENT

631
TITLE | THE ORIGINAL TITLE OF THE ASSET

ASSOC_PTY_GRP | CONTAINS THE DETAILS OF MAIN ARTIST(S) AND NOTABLE CONTRIBUTORS ASSOCIATED WITH THE ASSET
632

ASSOC_ID | CONTAINS THE ALTERNATIVE IDENTIFIERS FOR THE ASSET (E.G., ISRC)
633

CLAIMS_PERCENT | CONTAINS A BREAKDOWN OF THE PERCENTAGE COPYRIGHT CLAIMS WHICH APPLY TO THE ASSET. THERE CAN BE SEVERAL SETS OF CLAIMS COVERING DIFFERENT RIGHTS, TERRITORIES AND USAGES
634

# FIG. 18B

ASSET (CONTD.) —630                    635

DUR                          THE DURATION OF THE ASSET (IF APPLICABLE).

DEL_ATTRIB                   CONTAINS DETAILS TECHNICAL SPECIFICATIONS
                             AND DIMENSION RELATED TO THE ASSET.

MESSAGE_TRNSCTN_RSLT_GRP     CONTAINS THE PROCESSING OUTCOME OF THE
                             LICENSE NOTIFICATION TRANSACTION AT THE
                             ASSET LEVEL. THIS INCLUDES THE EXPLANATION
           637    636        OF ANY FAILURES.

M   WORK        —640         THE WORK ELEMENT DEFINES AND DESCRIBES
                             THE WORK THAT IS EMBODIED IN A PARTICULAR
                   641       ASSET.

TITLE                        CONTAINS THE ORIGINAL TITLE OF THE WORK

ASSOC_PTY_GRP                CONTAINS THE DETAILS OF COMPOSERS, WRITERS,
                             ARRANGERS AND PUBLISHERS OF THE WORK
642
ASSOC_ID                     CONTAINS IDENTIFIERS FOR THE WORK (E.G., AN
                             ISWC FOR A MUSICAL WORK)
643
COP_STATUS_CODE              INDICATES THE COPYRIGHT STATUS OF THE WORK.

M                644         THE NAVIGATIONAL VIEW DESCRIBES THE
NAV_VIEW      —650           ORGANIZATION AND INTER-RELATIONSHIPS OF
                             THE ASSET CONTAINED IN THE RELEASE.
                   651
ASSET_LIST_ITEM              THIS DEFINES THE POSITION OF THE ASSET WITHIN
                             THE RELEASE AND CAN IDENTIFY THE ASSETS
                             SEQUENCE WITHIN THE RELEASE.

DUR                          THIS ENABLES DURATION OVERRIDES FOR THE
                             ASSETS TO BE SPECIFIED WITHIN THE
652                          NAVIGATIONAL VIEW

ASSET_REF                    THIS CONTAINS A REFERENCE POINTER TO THE
                             DESCRIPTION OF THE ASSET AND ITS DELIVERY
                             ATTRIBUTES WITHIN THE MESSAGE.
           653
M NAV_VIEW    —660           NAVIGATIONAL VIEWS CAN BE ORGANIZED
                             HIERARCHICALLY TO DESCRIBE COMPLEX
                             RELEASES WHERE THERE ARE SUB-GROUPS OF
                             ASSETS DEFINED (AKIN TO THE BOX SET
                             CONCEPT).

# FIG. 18C

FIG. 19

EP 2 120 141 A1

FIG. 20

Europäisches
Patentamt

European
Patent Office

Office européen
des brevets

# EUROPEAN SEARCH REPORT

Application Number

EP 09 15 9576

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 00/42555 A1 (HARRY FOX AGENCY INC [US]) 20 July 2000 (2000-07-20) * paragraph 2nd - page 6, paragraph first * * page 22, last paragraph - page 23, last paragraph * * page 28, line 1 - page 32, line 7 * ----- | 1-15 | INV. G06F7/00 G06F1/00 |

TECHNICAL FIELDS
SEARCHED    (IPC)

G06F

The present search report has been drawn up for all claims

| Place of search | Date of completion of the search | Examiner |
|---|---|---|
| Munich | 18 September 2009 | Veillas, Erik |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

   ...............................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 09 15 9576

This annex lists the patent family members relating to the patent documents cited in the above-mentioned European search report.
The members are as contained in the European Patent Office EDP file on
The European Patent Office is in no way liable for these particulars which are merely given for the purpose of information.

18-09-2009

| Patent document cited in search report | | Publication date | Patent family member(s) | | Publication date |
|---|---|---|---|---|---|
| WO 0042555 | A1 | 20-07-2000 | AU | 2610300 A | 01-08-2000 |
| | | | CA | 2323427 A1 | 20-07-2000 |
| | | | EP | 1062605 A1 | 27-12-2000 |

EPO FORM P0459

For more details about this annex : see Official Journal of the European Patent Office, No. 12/82

## REFERENCES CITED IN THE DESCRIPTION

**Patent documents cited in the description**

- US 34941602 P
- US 6263341 B
- US 5765152 A
- US 20010044781 A
- US 6499106 B
- US 6434535 B